# EUROPEAN PATENT APPLICATION

(11) **EP 4 378 346 A1**
(43) Date of publication of application: **05.06.2024**
(21) Application number: 22882482.7
(22) Date of filing: 07.09.2022
(51) Int. Cl.: A44C 5/14, G06F 1/16, H04M 1/02

(54) **WEARABLE DEVICE AND WEARABLE SYSTEM**

(30) Priority: 22.10.2021 CN 202111236261; 17.05.2022 CN 202210536907
(71) Applicant: Huawei Technologies Co., Ltd., Shenzhen, Guangdong 518129 (CN)
(72) Inventor: GONG, Jinchao, Shenzhen, Guangdong 518129 (CN); HUANG, Weixin, Shenzhen, Guangdong 518129 (CN); REN, Yanming, Shenzhen, Guangdong 518129 (CN)
(74) Representative: Epping - Hermann - Fischer
(86) International application number: PCT/CN2022/117438
(87) International publication number: WO 2023/065867

(57) **Abstract**

Embodiments of this application provide a wearable device and a wearable system. The wearable device includes a device body, a wrist support, a rotating shaft assembly, and a locking assembly. The rotating shaft assembly includes a horizontal rotating shaft and a vertical rotating shaft. Two ends of the horizontal rotating shaft are rotatably connected to a first end of the device body, and at least one end of the vertical rotating shaft is rotatably connected to at least one of a first end of the wrist support and the horizontal rotating shaft. The device body may rotate around the horizontal rotating shaft and the vertical rotating shaft. When the locking assembly is in a locked state, the locking assembly locks the rotating shaft assembly and the device body or the wrist support, or the locking assembly locks the vertical rotating shaft and the horizontal rotating shaft, so that the first end of the device body is connected to the first end of the wrist support. When the locking assembly is in an unlocked state, the rotating shaft assembly is disassembled from the device body or the wrist support, or the horizontal rotating shaft is disassembled from the vertical rotating shaft, so that the first end of the device body is separated from the first end of the wrist support. The wearable device and the wearable system in this application are applicable to a plurality of scenarios.

## Description

This application claims priority to Chinese Patent Application No. 202111236261.X, filed with the China National Intellectual Property Administration on October 22, 2021 and entitled "WEARABLE DEVICE AND WEARABLE SYSTEM", and Chinese Patent Application No. 202210536907.4, filed with the China National Intellectual Property Administration on May 17, 2022 and entitled "WEARABLE DEVICE AND WEARABLE SYSTEM", which are incorporated herein by reference in their entireties.

### TECHNICAL FIELD

This application relates to the field of electronic device technologies, and in particular, to a wearable device and a wearable system.

### BACKGROUND

With development of science and technology, wearable devices are increasingly popular among users because of portability and intelligence of the wearable devices. In addition, users have increasing requirements for functions, appearance, experience, and the like of the wearable devices. In the conventional technology, a watch body and a watch band of the wearable device are connected through a rotating shaft, and the watch body may rotate relative to the watch band in a horizontal plane on which the watch body is located. As a result, the watch body has limited playability and scenario applicability, and still has a large limitation on scenarios such as answering a call and photographing by a watch.

### SUMMARY

Embodiments of this application provide a wearable device and a wearable system. The wearable device can implement rotation in a plurality of directions, has a good adaptability to a plurality of scenarios, and can meet a use requirement of a user for making a video call, photographing, listening to music, and the like.

One aspect of embodiments of this application provides a wearable device. The wearable device may include: a device body; a wrist support, used to bear the device body; a rotating shaft assembly, where the rotating shaft assembly includes a horizontal rotating shaft and a vertical rotating shaft, two ends of the horizontal rotating shaft are rotatably connected to a first end of the device body, so that the device body is capable of flipping around the horizontal rotating shaft, and at least one end of the vertical rotating shaft is rotatably connected to at least one of a first end of the wrist support and the horizontal rotating shaft, so that the device body is capable of rotating around the vertical rotating shaft; and a locking assembly, where when the locking assembly is in a locked state, the locking assembly locks the rotating shaft assembly and the device body or the wrist support, or the locking assembly locks the vertical rotating shaft and the horizontal rotating shaft, so that the first end of the device body is connected to the first end of the wrist support, or when the locking assembly is in an unlocked state, the rotating shaft assembly is disassembled from the device body or the wrist support, or the horizontal rotating shaft is disassembled from the vertical rotating shaft, so that the first end of the device body is separated from the first end of the wrist support.

According to the wearable device provided in embodiments of this application, the rotating shaft assembly is disposed, and the rotating shaft assembly includes the horizontal rotating shaft and the vertical rotating shaft, so that a device body is capable of rotating around both the horizontal rotating shaft and the vertical rotating shaft. This can improve playability and a mechanical sense of the wearable device. The locking assembly is disposed, so that the device body and the wrist support can be detachably connected. In this way, during use, the device body may be detached from the wrist support, so that the device body and the wrist support are completely separated. This improves adaptability to a plurality of scenarios.

In a possible implementation, the horizontal rotating shaft includes a rotating shaft support and two rotating assemblies respectively located at two ends of the rotating shaft support. A cavity structure for accommodating the rotating assembly is disposed at each of the two ends of the rotating shaft support. One end of the rotating assembly is located in the cavity structure, and the other end is connected to the device body.

According to the wearable device provided in embodiments of this application, the horizontal rotating shaft is disposed in a structure including the rotating shaft support and the rotating assembly, and the rotating assembly is invisibly disposed in the rotating shaft support, so as to protect the rotating shaft assembly. This prolongs a service life of the wearable device.

In a possible implementation, each rotating assembly includes a friction shaft and a friction plate. The friction plate is sleeved on the friction shaft and is rotatably connected to the friction shaft, and the friction plate is fastened to the rotating shaft support. A first end of the friction shaft is rotatably connected to the rotating shaft support, and a second end of the friction shaft is connected to the device body.

The rotating assembly is disposed in a structure including the friction shaft and the friction plate, so that the rotating assembly can be fastened to the rotating shaft support through the friction plate, and the rotating assembly is capable of rotating relative to the rotating shaft support through the friction shaft, so that the device body of the wearable device is capable of rotating around the horizontal rotating shaft. In addition, the friction shaft and the friction plate have simple structures. This helps reduce costs.

In a possible implementation, a rotating head is disposed at the second end of each friction shaft, one end of the rotating head is connected to the friction shaft, and the other end of the rotating head is connected to the device body.

According to the wearable device in embodiments of this application, the rotating head is disposed at the second end of the friction shaft, so that the device body and the friction shaft can be fastened through the rotating head, and when the device body is flipped over, the rotating head may drive the friction shaft to rotate together, so that the device body can be vertically flipped over relative to the wrist support. In addition, the rotating head is disposed, so that only one rotating head needs to be replaced after the rotating head is faulty, and the entire friction shaft does not need to be replaced. This reduces maintenance costs.

In a possible implementation, each rotating assembly further includes a limiting piece. The limiting piece is sleeved on the friction shaft, the limiting piece is in contact with and connected to the friction plate, the limiting piece is located on a side that is of the friction plate and that is close to the second end of the friction shaft, and the limiting piece is used to limit a rotation angle by which the friction shaft is vertically flipped over relative to the friction plate.

The limiting piece is disposed, so that the friction plate may be encapsulated in the rotating shaft support, so as to prevent loosening of the friction plate. In addition, the limiting piece may further control the rotation angle of the friction shaft, so as to prevent the device body from randomly rotating, which causes alignment during mounting to be difficult, thereby wasting mounting time. In a possible implementation, a bottom end of the vertical rotating shaft is rotatably connected to the first end of the wrist support, and a bottom end of the horizontal rotating shaft is sleeved on a top end of the vertical rotating shaft. When the locking assembly is in the locked state, the horizontal rotating shaft is locked with and connected to the top end of the vertical rotating shaft, so that the first end of the device body is connected to the first end of the wrist support; or when the locking assembly is in the unlocked state, the horizontal rotating shaft is disassembled from the vertical rotating shaft, so that the first end of the device body is separated from the first end of the wrist support.

The bottom end of the vertical rotating shaft is rotatably connected to the first end of the wrist support, and the bottom end of the horizontal rotating shaft is sleeved on the top end of the vertical rotating shaft. Because the horizontal rotating shaft is fastened to the device body, the vertical rotating shaft may rotate relative to the wrist support by rotating the device body, so that the device body may rotate around the vertical rotating shaft. The locking assembly is disposed, so that the vertical rotating shaft and the horizontal rotating shaft may be separated or connected, and therefore, the device body is separated from the wrist support or the device body is fastened to the wrist support.

In a possible implementation, the top end of the vertical rotating shaft is provided with a slide rail support, and a bottom end of the rotating shaft support of the horizontal rotating shaft is provided with an assembly cavity into which the slide rail support is capable of vertically extending upward. When the slide rail support is located in the assembly cavity, and the horizontal rotating shaft is in a first position, the locking assembly is used to lock and connect the slide rail support and an inner wall of the assembly cavity; or when the horizontal rotating shaft rotates around the vertical rotating shaft to a second position, the locking assembly is in the unlocked state, so that the horizontal rotating shaft is capable of being disassembled from the slide rail support.

The slide rail support is disposed on the vertical rotating shaft, and the assembly cavity is disposed at the bottom end of the rotating shaft support of the horizontal rotating shaft. When the slide rail support is located in the assembly cavity, the horizontal rotating shaft is fastened to the vertical rotating shaft. When the slide rail support slides out of the assembly cavity, the horizontal rotating shaft is separated from the vertical rotating shaft. Therefore, the horizontal rotating shaft and the vertical rotating shaft may be detachably connected by disposing the slide rail support and the assembly cavity, so that the device body and the wrist support are detachably connected.

In a possible implementation, a Z-axis support is disposed at the bottom end of the vertical rotating shaft, the Z-axis support is disposed at the first end of the wrist support, and the Z-axis support is rotatably connected to the vertical rotating shaft.

The Z-axis support is disposed at the first end of the wrist support, so that the vertical rotating shaft is provided with a mounting position. The Z-axis support and the vertical rotating shaft are rotatably connected, so that the device body may rotate around the vertical rotating shaft relative to the wrist support.

In a possible implementation, the locking assembly includes at least one first locking assembly, and at least a part of the first locking assembly is located in the slide rail support. In addition, when the horizontal rotating shaft is in the first position, the first locking assembly is used to lock and connect the slide rail support and the inner wall of the assembly cavity, or when the horizontal rotating shaft rotates to the second position, the first locking assembly is in the unlocked state. The first locking assembly is disposed, so that the slide rail support and the rotating shaft support are detachably connected. In addition, the first locking assembly can be in the unlocked state only when the horizontal rotating shaft rotates to the second position. In this case, the device body and the wrist support can be separated. In this way, the device body and the wrist support can be prevented from being accidentally separated at another position other than the second position, and damage caused by accidental falling off of the device body can be prevented.

In a possible implementation, each first locking assembly includes a telescopic buckle and a first internal groove that cooperates with the telescopic buckle, and the first internal groove is located on the inner wall of the assembly cavity. The telescopic buckle is telescopically connected to the slide rail support, one end of the telescopic buckle is located in the slide rail support, the other end of the telescopic buckle is provided with a buckle part, and the buckle part is capable of extending out of the slide rail support. The slide rail support is locked and the inner wall of the assembly cavity are locked and connected through clamping of the buckle part and the first internal groove. The telescopic buckle and the first internal groove are disposed, so that when the buckle part of the telescopic buckle is located in the first internal groove, the rotating shaft support and the slide rail support may be locked and connected, and the device body and the wrist support are locked and connected; or when the buckle part of the telescopic buckle is detached from the first internal groove, the rotating shaft support and the slide rail support are in the unlocked state, and the device body and the wrist support are separated. In addition, through cooperation between the buckle part and the first internal groove, when the locking assembly is in the locked state, a connection between the rotating shaft support and the slide rail support can be reinforced. In this way, the device body and the wrist support are not separated even when large external force is received. This ensures stability of a connection between the device body and the wrist support.

In a possible implementation, a first drive part is disposed at an end of the telescopic buckle, an end of the first drive part is located outside the slide rail support, and the first drive part is used to drive the telescopic buckle to move horizontally when the horizontal rotating shaft rotates toward the second position, to drive the buckle part of the telescopic buckle to be detached from the first internal groove, so that the first locking assembly is in the unlocked state.

The first drive part is disposed, so that a telescopic motion of the first drive part is converted into a telescopic motion of the telescopic buckle, and the buckle part is detached from the first internal groove. In this way, direct driving of the buckle part can be avoided, and difficulty in driving the buckle part can be reduced.

In a possible implementation, the Z-axis support is provided with a rotation hole available for the vertical rotating shaft to rotate, a sunken groove is provided on the Z-axis support in a circumferential direction of the rotation hole, the first drive part is located at the sunken groove, the sunken groove is a flat groove, and a part of a groove wall of the flat groove is used to apply force to the first drive part when the horizontal rotating shaft rotates toward the second position, so that the first drive part drives the telescopic buckle to move.

The rotation hole is disposed. This can facilitate rotation of the vertical rotating shaft. The sunken groove is provided in the circumferential direction of the rotation hole, so as to provide space for disposing the first drive part, so that the first drive part is implicitly disposed on the Z-axis support. The sunken groove is set to the flat groove, so that when the vertical rotating shaft rotates, the first drive part may shrink inward under extrusion of a part of the groove wall of the flat groove, and the buckle part of the telescopic buckle is detached from the first internal groove, so that the first locking assembly is in the unlocked state, and the device body can be separated from the wrist support. In addition, the sunken groove is set to the flat groove, so that diameters of the sunken groove at different positions are different. In this way, when the diameter is deformed, an inner wall of the flat groove may push the first drive part inward, so that the first drive part drives the telescopic buckle and the buckle part to shrink inward, and the buckle part is detached from the first internal groove.

In a possible implementation, each first locking assembly further includes a rotating shaft ejector block, one end of the rotating shaft ejector block cooperates with the telescopic buckle, the other end of the rotating shaft ejector block is provided with a second drive part, and the second drive part is used to drive the rotating shaft ejector block to move upward when the horizontal rotating shaft rotates toward the second position, to drive the telescopic buckle to move horizontally, so that the buckle part of the telescopic buckle is detached from the first internal groove.

In a possible implementation, the Z-axis support is provided with a rotation hole available for the vertical rotating shaft to rotate, a sunken groove is provided on the Z-axis support in a circumferential direction of the rotation hole, the second drive part is located at the sunken groove, and the sunken groove is a circular groove. In addition, a part of a groove bottom of the circular groove is provided with a tapered step, and the tapered step is used to drive the second drive part to move upward when the horizontal rotating shaft rotates toward the second position, so that the telescopic buckle moves horizontally.

The tapered step is disposed in the sunken groove, so that when the horizontal rotating shaft rotates toward the second position, the second drive part can move upward under an action of the tapered step, and the telescopic buckle moves horizontally.

In a possible implementation, one end of the telescopic buckle is provided with a third inclined surface, the rotating shaft ejector block is provided with a fourth inclined surface cooperating with the third inclined surface, and the fourth inclined surface is used to apply force to the third inclined surface when the rotating shaft ejector block moves upward, so that the telescopic buckle moves horizontally.

The third inclined surface cooperates with the second slope, so that movement of the rotating shaft ejector block in the vertical direction is converted into movement of the telescopic buckle in the horizontal direction, and the locking assembly is in the unlocked state. In addition, the locking assembly may have a simpler structure through slope fitting. This reduces costs.

In a possible implementation, each first locking assembly further includes a first slide rail spring, the first slide rail spring is located in the slide rail support, one end of the first slide rail spring is connected to one end of the telescopic buckle, and the other end of the first slide rail spring abuts against an inner wall of the slide rail support.

The first slide rail spring is disposed, so that the telescopic buckle can automatically rebound after being compressed, thereby facilitating repeated insertion and removal of the device body and the wrist support. This can prevent the telescopic buckle from being stuck in the slide rail support, and ensure normal use of the wearable device.

In a possible implementation, a quantity of the first locking assemblies is two, the two first locking assemblies are disposed in the slide rail support close to the vertical rotating shaft, and the two first locking assemblies are centrosymmetrically disposed relative to the vertical rotating shaft. The two first locking assemblies are disposed, so that locking force can be improved. This ensures that the device body and the wrist support can be stably connected in the locked state, and prevents accidental falling off. The two first locking assemblies are centrosymmetrically disposed relative to the vertical rotating shaft, so that it can be ensured that the locking force of the locking assembly on one side of the vertical rotating shaft is the same as that the locking force of the locking assembly on the other side of the vertical rotating shaft. Therefore, when the entire device body is inserted and removed, the device body and the vertical rotating shaft are vertically inserted and removed. This reduces abrasion to the locking assemblies, and prevents sticking during insertion and removal.

In a possible implementation, the locking assembly further includes at least one second locking assembly, and the second locking assembly is used to elastically lock the slide rail support and the assembly cavity of the horizontal rotating shaft.

The second locking assembly is disposed, so that the connection between the device body and the wrist support can be further reinforced. This can further prevent the device body from accidentally falling off from the wrist support, and improve an insertion and removal feel.

In a possible implementation, each second locking assembly includes an elastic ejector block and a second internal groove that cooperates with the elastic ejector block, the second internal groove is located on the inner wall of the assembly cavity, and at least a part of the elastic ejector block is located in the slide rail support and is close to an end part of the slide rail support. In addition, the end part of the slide rail support and the assembly cavity are elastically locked through clamping of the elastic ejector block and the second internal groove.

In a possible implementation, each second locking assembly includes a second slide rail spring, the second slide rail spring is located in the slide rail support, one end of the second slide rail spring is connected to the elastic ejector block, and the other end of the second slide rail spring abuts against the inner wall of the slide rail support.

The elastic ejector block and the second slide rail spring are disposed, so that the second locking assembly can be reused. In addition, the elastic ejector block and the second slide rail spring have simple structures. This can reduce costs of the entire wearable device.

In a possible implementation, positioning protrusions are provided on two opposite sides of the slide rail support, and positioning grooves fitting the positioning protrusions are provided on the inner wall of the assembly cavity.

The positioning protrusion is disposed, so that the rotating shaft support of the horizontal rotating shaft can slide downward only in a direction of the positioning protrusion when the device body is connected to the wrist support. This can prevent a mounting failure caused by misalignment of mounting. In addition, no sticking phenomenon occurs during insertion and removal.

In a possible implementation, a bottom end of the vertical rotating shaft is rotatably connected to the first end of the wrist support, and a bottom end of the horizontal rotating shaft is slidably connected to a top end of the vertical rotating shaft. The locking assembly is used to lock and connect the horizontal rotating shaft and the vertical rotating shaft in a horizontal direction, to prevent the horizontal rotating shaft from sliding on the vertical rotating shaft, and when the locking assembly is in the unlocked state, the horizontal rotating shaft may slide out of the vertical rotating shaft.

In a possible implementation, the top end of the vertical rotating shaft is provided with a slide rail bracket, and a bottom end of the rotating shaft support of the horizontal rotating shaft is provided with a slide rail groove into which the slide rail bracket is capable of horizontally sliding. When the slide rail bracket is located in the slide rail groove, and the device body is located in a first position, the locking assembly is used to lock and connect the slide rail bracket and the horizontal rotating shaft; or when the device body rotates around the horizontal rotating shaft to a second position, the locking assembly is in the unlocked state, so that the horizontal rotating shaft slides out of the slide rail bracket horizontally.

The locking assembly is disposed, and the slide rail bracket and the horizontal rotating shaft are locked when the device body is in the first position, or the slide rail bracket and the horizontal rotating shaft are unlocked when the device body is in the second position, so that the device body can be separated from the wrist support only when the device body rotates to a specific position. In this way, the device body and the wrist support can be prevented from being accidentally separated at another position other than the second position, and damage caused by accidental falling off of the device body can be prevented.

In a possible implementation, the locking assembly includes a locking spring block and a slot that cooperates with the locking spring block, the slot is provided on the rotating shaft support of the horizontal rotating shaft, the locking spring block is disposed on the slide rail bracket, and an end of the locking spring block is telescopically disposed on a top end face of the slide rail bracket. The horizontal rotating shaft and the slide rail bracket are locked and connected in the horizontal direction through clamping of the locking spring block and the slot, and when the locking spring block moves out of the slot, the horizontal rotating shaft and the slide rail bracket are in the unlocked state in the horizontal direction.

The locking spring block and the slot that cooperates with the locking spring block are disposed, so that when the locking spring block and the slot are clamped, the rotating shaft support can be prevented from sliding in an axial direction of the horizontal rotating shaft relative to the slide rail bracket, and the device body and the wrist support are in the locked state. When the locking spring block is detached from the slot, the rotating shaft support and the slide rail bracket are in the unlocked state. In this case, the device body can be separated from the wrist support.

In a possible implementation, the locking assembly further includes an unlocking structure, and the unlocking structure is used to drive the locking spring block to move out of the slot when the device body moves toward the second position around the horizontal rotating shaft.

The unlocking structure is disposed, and the device body rotates, so that the unlocking structure can drive the locking spring block to move out of the slot. In this way, the unlocking structure that needs to be operated manually does not need to be separately disposed. This can simplify a structure of the entire locking assembly, and further simplify a structure of the wearable device. In a possible implementation, the unlocking structure includes a rotating shaft press arm and a rotating shaft cam, two ends of the rotating shaft cam are connected to the horizontal rotating shaft, and a middle part of the rotating shaft cam is located on the rotating shaft press arm. One end of the rotating shaft press arm faces the rotating shaft cam, and the other end of the rotating shaft press arm is located in the slot. The rotating shaft press arm is used to move downward when driven by the rotating shaft cam, to drive the locking spring block to move out of the slot.

In a possible implementation, the unlocking structure further includes a rotating shaft spring, the rotating shaft spring is disposed on the rotating shaft support of the horizontal rotating shaft, and an end of the rotating shaft spring is connected to the rotating shaft press arm.

The rotating shaft spring is disposed, so that the rotating shaft press arm can automatically rebound after being compressed, and next use is not affected.

In a possible implementation, the locking assembly further includes a third slide rail spring, the third slide rail spring is located in the slide rail bracket, and an end of the third slide rail spring is connected to the locking spring block.

The third slide rail spring is disposed, so that the locking spring block can automatically rebound after being compressed, and next use is not affected.

In a possible implementation, the wearable device further includes a slide rail cover, where the slide rail cover covers the locking spring block and is connected to the slide rail bracket, and a hole of which the end of the locking spring block is capable of extending out is provided on the slide rail cover.

The slide rail cover is disposed, so that the locking spring block is limited in the slide rail bracket. This prevents the locking spring block from falling off and affecting normal use of the wearable device.

In a possible implementation, limiting protrusion parts are disposed on two sides of the slide rail bracket in a sliding direction of the slide rail bracket, limiting grooves fitting the limiting protrusion parts are disposed in the slide rail groove, and the rotating shaft support of the horizontal rotating shaft and the slide rail bracket are limited in a vertical direction through fitting of the limiting protrusion part and the limiting groove.

The limiting protrusion part and the limiting groove are disposed, so that the device body and the wrist support can be prevented from being accidentally separated in an axial direction of the vertical rotating shaft.

In a possible implementation, the rotating shaft assembly further includes a Z-axis bracket, the Z-axis bracket is disposed at the first end of the wrist support, and the Z-axis bracket is rotatably connected to the bottom end of the vertical rotating shaft.

The Z-axis bracket is disposed, so that the vertical rotating shaft can be conveniently fastened to the wrist support. The Z-axis bracket is rotatably connected to the vertical rotating shaft, so that the device body is capable of rotating around the vertical rotating shaft.

In a possible implementation, the locking assembly includes a locking sunken groove and a locking protrusion, one of the locking sunken groove and the locking protrusion is disposed on the wrist support, and the other of the locking sunken groove and the locking protrusion is disposed at a bottom end of the vertical rotating shaft. The vertical rotating shaft and the wrist support are locked and connected through fitting of the locking sunken groove and the locking protrusion. According to the wearable device provided in embodiments of this application, the locking sunken groove and the locking protrusion are disposed, so that the device body can be separated from the wrist support. During use, the device body may be pulled out from the wrist support, so that the device body is completely separated from the wrist support. In this way, adaptability to a plurality of scenarios can be improved. In addition, a detachable connection is implemented between the locking sunken groove and the locking protrusion in a push-pull manner. This is easy to operate and can reduce learning time of a user.

In a possible implementation, a first base is disposed at the bottom end of the vertical rotating shaft, and the bottom end of the vertical rotating shaft is fixedly disposed in the first base. The locking sunken groove or the locking protrusion is disposed on the first base.

According to the wearable device provided in embodiments of this application, the first base is disposed at the bottom end of the vertical rotating shaft, so that the vertical rotating shaft can be conveniently connected to the wrist support. In addition, the first base can provide space for disposing the locking protrusion or the locking sunken groove.

In a possible implementation, the locking sunken groove is located on the wrist support, and the locking protrusion is located at an end that is of the first base and that is close to the wrist support. A locking sunken groove opening available for the locking protrusion to horizontally slide into the locking sunken groove is provided on a side of the locking sunken groove.

In a possible implementation, the locking sunken groove opening faces a second end of the wrist support, so that the locking protrusion horizontally slides into the locking sunken groove in a direction extending from the second end of the wrist support to the first end.

According to the wearable device provided in embodiments of this application, the lock-locking sunken groove opening is disposed to face the second end of the wrist support, so that the device body can slide in a direction of a connection line between the first end of the wrist support and the second end.

In a possible implementation, the wrist support is provided with a third end and a fourth end that are opposite to each other, and the third end and the fourth end are located between the first end and the second end of the wrist support. The locking sunken groove opening faces the third end, so that the locking protrusion horizontally slides into the locking sunken groove in a direction extending from the third end of the wrist support to the fourth end. Alternatively, the locking sunken groove opening faces the fourth end, so that the locking protrusion horizontally slides into the locking sunken groove in a direction extending from the fourth end of the wrist support to the third end.

According to the wearable device provided in embodiments of this application, the lock-locking sunken groove opening is disposed to face the third end or the fourth end of the wrist support, so that the device body can slide in a direction of a connection line between the third end of the wrist support and the fourth end.

In a possible implementation, a top end of the locking sunken groove is provided with a barrier edge, and when the locking protrusion is located in the locking sunken groove, the barrier edge locks the locking protrusion in the locking sunken groove in an axial direction of the vertical rotating shaft, so that an end of the vertical rotating shaft is connected to the first end of the wrist support.

According to the wearable device provided in embodiments of this application, the barrier edge is disposed at the top end of the locking sunken groove, so that the locking protrusion can be limited. This ensures stability of the connection between the device body and the wrist support, and prevents the device body from accidentally falling off from the wrist support.

In a possible implementation, the first base is provided with a first hole through which the end of the vertical rotating shaft is capable of passing. The bottom end of the vertical rotating shaft is provided with a first boss, and a top inner wall of the first hole is provided with a first flange, where the first flange and the first boss block each other.

According to the wearable device provided in embodiments of this application, the first boss is provided at the bottom end of the vertical rotating shaft, and then the first flange is provided on an inner wall of the first hole, so that the vertical rotating shaft is fastened to the first base.

In a possible implementation, a first through hole that is capable of partially accommodating the vertical rotating shaft is provided in the rotating shaft support. The rotating shaft assembly further includes a first motion cam, the first motion cam is sleeved on the vertical rotating shaft and is rotatably connected to the vertical rotating shaft, and the first motion cam is located in the first through hole and is fastened to the first through hole. The first base is provided with a first extension part extending into the first through hole, the first motion cam abuts against the first extension part, the first hole extends to a top end face of the first extension part, and the first flange is located on the first extension part. A surface that is of the first motion cam and that faces the first extension part is formed into a first concave convex surface that is uneven, a surface that is of the first extension part and that faces the first motion cam is formed into a second concave convex surface that fits concave and convex parts of the first concave convex surface, and an arc-shaped transition surface is provided between the convex part and the concave part of the first concave convex surface and the second concave convex surface, so that the first motion cam is rotatably connected to the first base.

In a possible implementation, the locking assembly further includes at least one stopper assembly, the stopper assembly is telescopically disposed on the wrist support, and the at least one stopper assembly is located on at least one side of the locking sunken groove. At least one side of the wrist support is provided with a mounting groove for mounting the stopper assembly, and a second hole in communication with the locking sunken groove is provided on a side wall that is of each mounting groove and that is close to the locking sunken groove. A first end of the stopper assembly passes through the second hole and extends into the locking sunken groove, and a second end of the stopper assembly is fastened in the mounting groove.

In a possible implementation, the stopper assembly includes a top cover, a baffle plate, a first elastic piece, and a stopper. The baffle plate is fastened in the mounting groove. A first end of the stopper passes through the second hole and extends into the locking sunken groove, and a second end of the stopper is sleeved on the first elastic piece. One end of the first elastic piece is sleeved on the second end that is of the stopper and that is located in the mounting groove, and the other end of the first elastic piece abuts against the baffle plate. The top cover is located at a top end of the mounting groove, and is fastened to the wrist support.

In a possible implementation, the first end of the stopper is a hemispherical protrusion, and a clamping recess fitting the hemispherical protrusion is provided on the locking protrusion. When the hemispherical protrusion slides into the clamping recess, the locking assembly is in the locked state. When the hemispherical protrusion slides out of the clamping recess, the locking assembly is in the unlocked state.

In a possible implementation, a stop part protruding outward is disposed on the stopper, and the stop part is located in the mounting groove and abuts against the side wall of the mounting groove. In a possible implementation, the locking assembly further includes at least one pressing block button, and the pressing block button is telescopically disposed on a surface that is of the wrist support and that faces the horizontal rotating shaft. When the horizontal rotating shaft rotates until pressing against the pressing block button, the pressing block button moves downward, and a bottom end of the pressing block button presses against the stopper assembly, to prevent the stopper assembly from moving away from the locking sunken groove. When the horizontal rotating shaft rotates until moving out of the pressing block button, the pressing block button moves upward, and a top end of the pressing block button extends outward from the surface that is of the wrist support and that faces the horizontal rotating shaft.

The pressing block button is disposed, so that the device body of the wearable device can be separated from the wrist support only after the device body rotates to a specific position. This can prevent the device body and the wrist support from accidentally falling off, and improve stability of the connection between the wrist support and the device body.

In a possible implementation, a bottom end of the pressing block button is provided with a wedge-shaped surface, the stopper assembly is provided with a wedge-shaped groove into which the bottom end of the pressing block button is capable of extending, and the wedge-shaped groove is provided with an inclined surface cooperating with the wedge-shaped surface. The wedge-shaped surface is used to cooperate with the inclined surface when the pressing block button moves downward, so that the stopper assembly moves toward the locking sunken groove. The inclined surface is used to cooperate with the wedge-shaped surface when the stopper assembly moves away from the locking sunken groove, so that the pressing block button moves upward.

In a possible implementation, the top end of the pressing block button is provided with a first guide surface and a second guide surface that are inclined. The first guide surface is used to guide, when the horizontal rotating shaft rotates in a first direction, the horizontal rotating shaft to rotate to the pressing block button. The second guide surface is used to guide, when the horizontal rotating shaft rotates in a second direction, the horizontal rotating shaft to rotate to the pressing block button. One of the first direction and the second direction is a counterclockwise direction, and the other is a clockwise direction.

According to the wearable device provided in embodiments of this application, the first guide surface and the second guide surface that are inclined are disposed at the top end of the pressing block button, so that when the device body rotates, the rotating shaft support is capable of rotating to the pressing block button, and the stopper assembly locks the locking protrusion in the locking sunken groove.

In a possible implementation, there are two pressing block buttons, there are two stopper assemblies, the two stopper assemblies are respectively located on two sides of the locking sunken groove, and one stopper assembly is correspondingly disposed for each pressing block button.

The two pressing block buttons and the two stopper assemblies are disposed, so that the locking force can be strengthened. This can prolong service lives of the stopper assembly and the pressing block button.

In a possible implementation, the locking assembly further includes a toggle button, where a first end of the toggle button is located outside the first end of the wrist support, and a second end of the toggle button is located in the first end of the wrist support. A clamping rod is disposed at the second end of the toggle button, and a clamping hole is disposed on the locking protrusion. An end of the clamping rod extends into the locking sunken groove and is inserted into the clamping hole when the toggle button is toggled, to prevent the locking protrusion from moving out of the locking sunken groove, and moves out of the clamping hole when the toggle button is toggled reversely. According to the wearable device provided in embodiments of this application, the toggle button is disposed in the locking assembly, so that the locking protrusion and the locking sunken groove can be conveniently locked. The clamping hole is disposed on the locking protrusion, and the clamping rod is disposed at the second end of the locking button, so that when the clamping rod is located in the clamping hole, the locking protrusion is fastened to the locking sunken groove, so that the device body is fastened to the wrist support, and when the clamping rod is separated from the clamping hole, the locking protrusion is separated from the locking sunken groove, so that the device body is separated from the wrist support. In this manner, the locking and separation between the device body and the wrist support are controlled by disposing the toggle button. This not only facilitates separation, but also ensures firm locking.

In a possible implementation, the first end of the wrist support is provided with sliding space available for the second end of the toggle button to slide. A first magnet and a second magnet are disposed on two opposite side walls in the sliding space, and the second end of the toggle button is located between the first magnet and the second magnet. When the toggle button is toggled to the second end of the toggle button to be attracted to the first magnet, an end of the clamping rod is inserted into the clamping hole. When the toggle button is toggled to the second end of the toggle button to be attracted to the second magnet, an end of the clamping rod exits the locking sunken groove.

The first magnet and the second magnet are disposed on the two opposite side walls in the sliding space, so that toggle force can be reduced. This improves sensitivity of the toggle switch.

In a possible implementation, the locking assembly further includes a locking switch, where the locking switch is disposed on the wrist support. The locking switch is used to lock the first base in the locking sunken groove, and unlock the first base when the locking switch is pressed.

In a possible implementation, a first end of the locking switch is fastened in the wrist support, a second end of the locking switch is suspended in the locking sunken groove and is used to lock the first base in the locking sunken groove. A trigger button is disposed on the locking switch, the trigger button is located between the first end and the second end of the locking switch, and an end of the trigger button protrudes outward from the wrist support. When the trigger button is pressed, the second end of the locking switch unlocks the first base.

In a possible implementation, the trigger button is located on a surface that is of the wrist support and that faces the horizontal rotating shaft, and the trigger button is located on a side of the horizontal rotating shaft. When the device body flips around the horizontal rotating shaft until pressing the trigger button, the trigger button moves downward and drives the second end of the locking switch to be detached from the first base.

In a possible implementation, a hook groove is provided on the first base, and a hook fitting the hook groove is provided on the second end of the locking switch. The locking switch locks the first base in the locking sunken groove through fitting between the hook groove and the hook.

In a possible implementation, concession space is disposed at a position that is on the first base and that is close to the hook groove, and the concession space communicates with the hook groove. According to the wearable device provided in embodiments of this application, the locking switch is disposed, so that the device body and the wrist support can be separated only through the pressing switch. This is easy to operate. In addition, the hook groove and the hook are disposed, so that the first base and the locking switch can be connected stably. This prevents the device body from falling off from the wrist support. The concession space is disposed, so that the hook can conveniently move downward to be detached from the hook groove, and the device body is separated from the wrist support.

In a possible implementation, the locking assembly further includes at least one pressing switch, a first end of the pressing switch is located outside the wrist support, and a second end of the pressing switch is located at the locking sunken groove. The locking protrusion is telescopically disposed on the first base, a step fitting the locking protrusion is disposed in the locking sunken groove, and the first base and the locking sunken groove are locked and connected through clamping of the locking protrusion at the step. When the pressing switch is pressed, the second end of the pressing switch drives the locking protrusion to move away from the step, so that the first base and the locking sunken groove are in the unlocked state.

According to the wearable device provided in embodiments of this application, the pressing switch is disposed, so that the device body and the wrist support can be separated directly through the pressing switch, and the device body can be detached without rotating to a specific angle, which is more convenient.

In a possible implementation, a first inclined surface is provided on an end that is of the locking protrusion and that faces the pressing switch, and a second inclined surface cooperating with the first inclined surface is provided on the pressing switch.

The first inclined surface and the second inclined surface are disposed, so that when the pressing switch is pressed, the first inclined surface and the second inclined surface can move relative to each other, the pressing switch squeezes the locking protrusion inward, the locking protrusion and the locking sunken groove are in the unlocked state, and the device body is separated from the wrist support.

In a possible implementation, a first pressing spring is disposed in the first base, one end of the first pressing spring is fastened in the first base, and the other end of the first pressing spring is connected to one end of the locking protrusion.

The first pressing spring is disposed, so that the locking protrusion is telescopic relative to the first base, and the locking protrusion and the locking sunken groove may be in a locked state or in an unlocked state.

In a possible implementation, a second pressing spring is disposed in the wrist support, the second pressing spring is sleeved on the pressing switch, and the pressing switch is telescopically disposed at the first end of the wrist support through the second pressing spring.

The second press spring is disposed, so that the pressing switch is telescopic relative to the wrist support, and after the locking protrusion and the locking sunken groove are locked, the pressing switch can automatically return to the initial position.

In a possible implementation, there are two locking protrusions, the two locking protrusions are located on two sides of the first base, there are two pressing switches, the two pressing switches are respectively located on two sides of the wrist support, and each pressing switch corresponds to one locking protrusion.

Two locking protrusions and two pressing switches are disposed, so that both positions of the device body and the wrist support can be locked, thereby improving stability of the connection between the device body and the wrist support. The two pressing switches are respectively disposed on two sides of the wrist support, so that clamping force between the wrist support and the device body may be distributed on the two sides of the wrist support, so that the two sides of the wrist support are in a balanced state, so as to prevent the device body and the wrist support from being connected unstably due to falling off of one end of the device body.

In a possible implementation, the locking assembly further includes a toggle switch, where the toggle switch includes an operating end and a clamping end, the operating end is located outside the wrist support, and the clamping end is located in the locking sunken groove; the clamping end is used to lock the first base into the locking sunken groove; and the operating end is used to drive the clamping end to snap into the first base or move from the first base when being pushed. According to the wearable device provided in embodiments of this application, a toggle switch is disposed, so that the device body and the wrist support are capable of being disassembled or locked by flipping the toggle switch back and forth. The operations are convenient, the structure is simple, and the clamping connection is stable. The operation end of the toggle switch is disposed outside the wrist support, so as to facilitate operation.

In a possible implementation, the first base is provided with a female buckle, and the clamping end of the toggle switch is provided with a male buckle that cooperates with the female buckle.

The male buckle and the female buckle are disposed, so that the first base can be locked on the wrist support through fastening of the male buckle and the female buckle, and the device body is fastened to the wrist support. In addition, structures of the male buckle and the female buckle are simple. This helps simplify a structure of the toggle switch and reduce costs.

In a possible implementation, the locking sunken groove is located on the first base, the locking protrusion is located on the wrist support, and at least one side of the locking sunken groove is provided with an opening available for the locking protrusion to horizontally slide into the locking sunken groove.

In a possible implementation, one of the locking protrusion and the locking sunken groove is provided with a clamping protrusion, the other of the locking protrusion and the locking sunken groove is provided with a clamping position, and the locking protrusion and the locking sunken groove are locked and connected to the clamping position through the clamping protrusion. According to the wearable device provided in embodiments of this application, a clamping protrusion is disposed on one of the locking protrusion and the locking sunken groove, and a clamping position is disposed on the other of the locking protrusion and the locking sunken groove, so that a locking connection between the first base and the wrist support can be implemented through the clamping protrusion and the clamping position. In addition, because the clamping protrusion and the clamping position are directly disposed on the locking protrusion and the locking sunken groove, the wrist support and the first base can be locked and connected without other components, and the structure is simple and easy to assemble and disassemble.

In a possible implementation, the openings are provided on two opposite sides of the locking sunken groove.

The openings are provided on both sides, so that the device body can slide into the locking sunken groove from either side. This facilitates detachment and mounting.

In a possible implementation, a notch is disposed on one of the locking sunken groove and the locking protrusion, and a baffle block fitting the notch is disposed on the other of the locking sunken groove and the locking protrusion.

The notch and the baffle block are disposed, so that the locking protrusion can be prevented from sliding out from a side of the locking sunken groove, so as to prevent the device body from accidentally falling off.

In a possible implementation, the locking sunken groove is located on the wrist support, the locking protrusion is located on one end of the first base close to the wrist support, and an opening that allows the locking protrusion to vertically slide into the locking sunken groove is provided at the top end of the locking sunken groove.

In a possible implementation, the locking assembly further includes a locking button, where the locking button is telescopic or slidable on the wrist support. In addition, one end of the locking button is located outside the first end of the wrist support, and the other end of the locking button is located in the locking recess and is used to be clamped to the locking protrusion.

According to the wearable device provided in embodiments of this application, a locking button is disposed, so that the locking protrusion and the locking sunken groove can be unlocked by pressing the locking button, and the wrist support is separated from the device body. This is easy to operate. In a possible implementation, a first clamping hook is provided at one end of the locking button located in the locking sunken groove, and the first clamping hook is used to clamp the locking protrusion with the locking protrusion when the locking protrusion extends into the locking sunken groove, and is used to move when the locking button is pressed or slides, so that the first clamping hook is released from clamping to the locking protrusion.

The first clamping hook is disposed, so that the locking button and the locking protrusion can be clamped, and the locking protrusion is locked in the locking sunken groove, so that the device body is fastened to the wrist support. This prevents the device body from falling off from the wrist support.

In a possible implementation, a first telescopic member is disposed in the locking sunken groove, one end of the first telescopic member is connected to an inner wall of the locking sunken groove, and the other end of the first telescopic member is connected to the locking button, so that the locking button is telescopic on the wrist support.

The first telescopic member is disposed, so that the locking button is telescopic relative to the wrist support. In this way, after the wrist support and the device body are unlocked, the locking button can automatically rebound for repeated use.

In a possible implementation, at least one second telescopic member is disposed in the locking sunken groove, and a pressing member used to press against the second telescopic member is disposed on the first base; and the second telescopic member is used to be compressed by the pressing member when the locking protrusion is clamped to the first clamping hook, and drive the pressing member to move toward the opening when the locking protrusion is released from clamping.

The second telescopic piece is disposed, so that when the device body can be separated from the wrist support, and upward elastic force can be provided for the device body, so as to facilitate detachment. When the device body is connected to the wrist support, upward elastic force may also be provided for the device body, so as to improve a mounting hand feel.

In a possible implementation, one end of the locking button located in the locking sunken groove further is provided with a second clamping hook, and a clamping block cooperating with the second clamping hook is provided in the locking sunken groove.

The second clamping hook is disposed, and the clamping block is disposed in the locking sunken groove, so that the locking button is fixedly disposed on the wrist support, and one end is always located in the locking sunken groove. This can prevent the locking button from falling off from the locking sunken groove.

In a possible implementation, the locking assembly further includes a first magnetic piece and a second magnetic piece, one of the first magnetic piece and the second magnetic piece is disposed in the wrist support, and the other of the first magnetic piece and the second magnetic piece is disposed on the vertical rotating shaft or disposed in the first base that is disposed at the bottom end of the vertical rotating shaft.

According to the wearable device provided in embodiments of this application, the first magnetic piece and the second magnetic piece are disposed, so that a fixed connection between the device body and the wrist support can be implemented through attraction between the first magnetic piece and the second magnetic piece, to prevent the device body from falling off from the wrist support. In addition, structures of the first magnetic piece and the second magnetic piece are simple and easy to be disposed, so that structures of the wrist support and the device body can be simplified, thereby reducing costs.

In a possible implementation, at least one elastic arm is disposed on the first base, one end of the elastic arm is connected to the first base, the other end of the elastic arm is a free end, the locking protrusion is disposed on the free end of the elastic arm, and a recess part clamped to the locking protrusion is disposed in the locking sunken groove.

According to the wearable device provided in embodiments of this application, the elastic arm is disposed, so that locking force between the locking protrusion and the locking sunken groove can be increased, thereby preventing the device body and the wrist support from accidentally falling off, and improving a sense of hand during detachment and mounting.

In a possible implementation, the elastic arm and the first base are of an integrated structure.

In a possible implementation, at least one elastic arm is disposed in the locking sunken groove, one end of the elastic arm is connected to an inner wall of the locking sunken groove, the other end of the elastic arm is a free end, and a convex hull is disposed on the free end of the elastic arm; and a slot position for clamping the convex hull is disposed on the locking protrusion.

In a possible implementation, there are two elastic arms, and the two elastic arms are disposed opposite to each other.

The two elastic arms are disposed, so that locking force between the elastic arm and the locking protrusion can be increased, so as to improve stability of the connection between the device body and the wrist support, and prevent the device body from accidentally falling off from the wrist support.

In a possible implementation, when the elastic arm is disposed in the locking sunken groove, the two elastic arms are connected and are of an integrated structure.

In a possible implementation, the locking assembly further includes a spring plate clamping position, where a clamping end of the spring plate clamping position is located in the locking sunken groove, and a dent for clamping with the clamping end of the spring plate clamping position is disposed on the locking protrusion.

According to the wearable device provided in embodiments of this application, clamping force between the locking sunken groove and the locking protrusion may also be increased by disposing the spring plate, so as to improve stability of the connection between the device body and the wrist support, and prevent the device body from accidentally falling off from the wrist support.

In a possible implementation, the locking assembly includes a sliding groove, a sliding block, and a spring plate, the sliding block is connected to one end of a friction shaft of the rotating assembly, and the sliding groove is provided at a position corresponding to the sliding block of the device body. The spring plate is disposed on either of the sliding groove and the sliding block, and the spring plate is used to lock the sliding block in the sliding groove when the sliding block slides into the sliding groove, so that two ends of the horizontal rotating shaft are locked and connected to the first end of the device body. When the sliding block is detached from the sliding groove, the first end of the device body is detached from the two ends of the horizontal rotating shaft.

In a possible implementation, the spring plates are disposed on two sides that are of the sliding block and that face the sliding groove, and the sliding block and the friction shaft are of an integrated structure.

In a possible implementation, a first recess capable of accommodating the spring plate is disposed on the sliding block, the two first recesses are disposed opposite to each other on two sides of the sliding block, and the spring plate is disposed in the first recess. The spring plate includes a top spring plate and a bottom spring plate, the top spring plate and the bottom spring plate are oppositely disposed, and are fastened in the sliding block through a first connecting piece. An arc-shaped protrusion is disposed on both the top spring plate and the bottom spring plate, and an arc-shaped recess is set on the sliding groove. When the arc-shaped protrusion slides into the arc-shaped recess, the locking assembly is in the locked state. When the arc-shaped protrusion slides out of the arc-shaped recess, the locking assembly is in the unlocked state.

In a possible implementation, the rotating shaft assembly further includes a second base, where the second base is fixedly disposed on the first end of the wrist support, and the second base is provided with a third hole that can be penetrated by one end of the vertical rotating shaft. In addition, a second boss is disposed at a bottom end of the vertical rotating shaft, a second boss that blocks the second boss is disposed on a top inner wall of the third hole, and the second boss is in contact with and connected to the second boss, so that the bottom end of the vertical rotating shaft is fastened in the second base.

In a possible implementation, a second through hole that is capable of partially accommodating the vertical rotating shaft is provided in the rotating shaft support. The rotating shaft assembly further includes a second motion cam, the second motion cam is sleeved on the vertical rotating shaft and is located in the second through hole, and the second motion cam is rotatably connected to the vertical rotating shaft and fastened to the second through hole. The second base is provided with a second extension part extending into the second through hole, the second motion cam abuts against the second extension part, the third hole extends to a top end face of the second extension part, and the second flange is located on the second extension part. A surface that is of the second motion cam and that faces the second extension part is formed into a third concave convex surface that is uneven, a surface that is of the second extension part and that faces the second motion cam is formed into a fourth concave convex surface that fits concave and convex parts of the third concave convex surface, and an arc-shaped transition surface is provided between the convex part and the concave part of the third concave convex surface and the fourth concave surface, so that the second motion cam is rotatably connected to the second base.

In a possible implementation, a wear-resistant part is disposed on an inner wall of the sliding groove, and a recess that can accommodate the sliding block is provided on the wear-resistant part. In a possible implementation, the locking assembly includes a locking buckle groove and a clamping part, where the locking buckle groove is located on the wrist support, the clamping part is located at the bottom of the vertical rotating shaft, and the top end of the locking buckle groove is provided with a locking buckle groove opening for the clamping part to slide vertically. Stopping blocks are disposed on two sides of the locking buckle groove, and the two stopping blocks are disposed opposite to each other and are slidingly connected to the wrist support, so that a size of the locking buckle groove opening is adjustable. When the vertical rotating shaft rotates in the first direction, the clamping part is clamped in the locking buckle groove, and the locking assembly is in the locked state. When the vertical rotating shaft rotates in the second direction opposite to the first direction, the clamping part squeezes the stopping block and enlarges the locking buckle groove opening, so that the locking assembly is in then unlocked state.

In a possible implementation, a clamping groove is provided on at least one of the clamping part and the stopping block, and a clamping protrusion is disposed on the other one of the clamping groove and the stopping block; the clamping protrusion is fit and connected to the clamping groove, and when the vertical rotating shaft rotates in the first direction, the clamping protrusion is clamped in the clamping groove, so that the vertical rotating shaft is fastened to the first end of the wrist support, and when the vertical rotating shaft rotates in the second direction, the clamping protrusion slides out of the clamping groove; and, so that the vertical rotating shaft is separated from the first end of the wrist support.

In a possible implementation, a cross section of the clamping part is an elliptical shape, and the clamping protrusion or the clamping groove is provided on an outer side wall of the clamping part and is located at any position outside a major axis of the clamping.

In a possible implementation, the clamping groove is provided on the stopping block, and the clamping protrusion is disposed on the clamping part.

In a possible implementation, a slope is disposed at the top end of the locking buckle groove opening, and a diameter of the slope close to an end of the device body is greater than a diameter of the slope close to an end of the wrist support, so that the vertical rotating shaft can slide into the locking buckle groove along the slope.

In a possible implementation, the locking assembly further includes a base baffle plate and a second elastic piece; a receptacle for mounting the stopping block and the second elastic piece is disposed on the wrist support, and the stopping block is disposed in the receptacle.

The second elastic piece is disposed between the stopping block and the side wall of the receptacle, and the stopping block squeezes the second elastic piece to enlarge the locking buckle groove opening.

The base baffle plate covers a top end of the receptacle, an assembly hole is provided on the base baffle plate, the top end of the stopping block is located in the assembly hole, a gap is provided between a side wall of the assembly hole and the stopping block, and the gap is used to provide space for sliding of the stopping block.

In a possible implementation, a third through hole that can be accommodated by the vertical rotating shaft is disposed in the rotating shaft support. The rotating shaft assembly further includes a third motion cam, the third motion cam is sleeved on the vertical rotating shaft and is rotatably connected to the vertical rotating shaft, and the third motion cam is located in the third through hole and is fastened to the third through hole. The vertical rotating shaft is provided with a first fixed cam extending into the third through hole, the first fixed cam extends outward around the vertical rotating shaft, and the third motion cam abuts against the first fixed cam. A surface that is of the third motion cam and that faces the first fixed cam is formed into a fifth concave convex surface that is uneven, and a surface that is of the first fixed cam and that faces the third motion cam is formed into a sixth concave convex surface that fits concave and convex parts of the fifth concave convex surface.

In a possible implementation, an arc-shaped transition surface and a right-angle transition surface are disposed at intervals between the convex part and the concave part of the fifth concave surface, and an arc-shaped transition surface and a right-angle transition surface are disposed at intervals between the convex part and the concave part of the sixth concave convex surface. The arc-shaped transition surface of the fifth concave surface is cooperatively connected to the arc-shaped transition surface of the sixth concave convex surface, and the right-angle transition surface of the fifth concave surface is cooperatively connected to the right-angle transition surface of the sixth concave convex surface, so that when the device body rotates around the vertical rotating shaft in the first direction, the third motion cam is capable of rotating around the vertical rotating shaft. When the device body rotates around the vertical rotating shaft in the second direction, the third motion cam is clamped to the first fixed cam and drives the vertical rotating shaft of the first fixed cam to rotate in the second direction, so that the clamping protrusion slides out of the clamping groove, and the vertical rotating shaft is separated from the first end of the wrist support.

In a possible implementation, the rotating shaft assembly further includes a third elastic piece, a top gasket, and a bottom gasket, where the bottom gasket is sleeved on the vertical rotating shaft, the top gasket is sleeved on the top end of the vertical rotating shaft and is rotatably connected to the horizontal rotating shaft, the third elastic piece is sleeved on the vertical rotating shaft, and two ends of the third elastic piece are respectively connected to the top gasket and the bottom gasket. In a possible implementation, the third elastic piece is a spring.

In a possible implementation, a bottom end of the vertical rotating shaft is fastened to the wrist support, and one end of a friction shaft of each rotating assembly is fastened to the device body. When the locking assembly is in the locked state, the top end of the vertical rotating shaft is located in the rotating shaft support, and the locking assembly locks and connects the rotating shaft support and the vertical rotating shaft, so that the first end of the device body is connected to the first end of the wrist support. When the locking assembly is in the unlocked state, the rotating shaft support is disassembled from the vertical rotating shaft, so that the first end of the device body is separated from the first end of the wrist support.

In a possible implementation, a limiting sleeve is sleeved on the vertical rotating shaft, and the limiting sleeve is rotatably connected to the vertical rotating shaft. The locking assembly is used to lock and connect the rotating shaft support and the limiting sleeve or unlock and fit the rotating shaft support to the limiting sleeve.

In a possible implementation, the locking assembly includes a buckle groove, a locking button, and a locking piece. The locking piece is telescopically disposed in the rotating shaft support in an axial direction of the rotating shaft support, and the buckle groove is provided on the limiting sleeve. An end of the locking piece is provided with a locking end clamped to the buckle groove, and when the locking end of the locking piece is clamped to the buckle groove, the limiting sleeve is locked and connected to the rotating shaft support. The locking key is used to drive the locking piece to move away from the buckle groove, so that a locking end of the locking piece is detached from the buckle groove.

In a possible implementation, the locking key is telescopically disposed on the rotating shaft support, and when the locking key is pressed, one end of the locking key shrinks toward the rotating shaft support and drives the locking piece to move away from the buckle groove, and when the locking end of the locking piece is detached from the buckle groove, the limiting sleeve is detached from the rotating shaft support.

In a possible implementation, when the locking key is slid on the rotating shaft support, and the locking key is slid, one end of the locking key moves in an axial direction of the horizontal rotating shaft and drives the locking piece to move away from the buckle groove.

In a possible implementation, a protrusion is disposed on a side that is of the limiting sleeve and that faces the locking button, the buckle grooves are disposed on two sides of the protrusion, and one locking piece is correspondingly disposed in each buckle groove. In addition, an orthographic projection of the protrusion toward the limiting cylinder body is of an arrow structure, and an arrow in the arrow structure points to the top end of the vertical rotating shaft.

In a possible implementation, the locking assembly further includes a button cover and a fourth elastic piece, the button cover is fastened to an outer surface of the rotating shaft support, and an opening that can expose a pressing surface of the locking key is provided on the button cover. One end of the fourth elastic piece is connected to the rotating shaft support, the other end of the fourth elastic piece is connected to the locking assembly, and the locking assembly is telescopically disposed through the fourth elastic piece.

In a possible implementation, at least one end of the locking key is provided with a drive part, and the drive part is used to cooperate with the locking piece.

In a possible implementation, two ends of the locking key are respectively provided with drive parts, each of the drive parts is provided with a first slope, and each of the locking pieces is provided with a second slope that fits the first slope. The first slope is used to drive the second slope to move when the locking key is pressed, so that the locking piece moves in a direction away from the buckle groove. The second slope is used to drive the first slope to move under elastic force of the fourth elastic piece after the external force on the locking key is removed, so that the locking piece is reset.

In a possible implementation, the locking assembly includes a concession recess and a locking boss, where one of the concession recess and the locking boss is disposed on the rotating shaft support, and the other of the concession recess and the locking boss is disposed on the vertical rotating shaft. In addition, when the locking boss and the concession recess overlap upward on the axis of the vertical rotating shaft, the rotating shaft support and the vertical rotating shaft are in the unlocked state. When the locking boss and the concession recess are staggered upward on the axis of the vertical rotating shaft, the rotating shaft support and the vertical rotating shaft are in the locked state.

According to the wearable device provided in embodiments of this application, a locking boss is disposed, so that when the locking boss is staggered with the lifting boss, the rotating shaft support and the vertical rotating shaft may be in a locked state, so as to prevent the device body from being separated from the wrist support, thereby improving stability of the connection between the device body and the wrist support.

In a possible implementation, a top end of the rotating shaft support is provided with an avoidance opening that can be passed through by the top end of the vertical rotating shaft. An inner wall of the avoidance opening is provided with the relief groove. The locking boss is provided at the top end of the vertical rotating shaft.

In a possible implementation, an annular track disposed around the avoidance opening is disposed at the top end of the rotating shaft support, and the concession recess is located on the annular track and communicates with the avoidance opening. In addition, when the locking boss and the concession recess are staggered upward on an axis of the vertical rotating shaft, the locking boss is located on the annular track, so that the vertical rotating shaft is locked and connected to the rotating shaft support.

In a possible implementation, a lock ring is sleeved on the top end of the vertical rotating shaft, the lock ring, and an outer edge of the lock ring protrudes outward to form the locking boss.

The lock ring is disposed, so that a mounting position can be provided for the lock boss, thereby simplifying the structure of the locking assembly and reducing costs.

In a possible implementation, the vertical rotating shaft is sleeved with a pressure ring, and the pressure ring is located between the top end of the limiting sleeve and the lock ring on the vertical rotating shaft.

In a possible implementation, a limiting block is disposed on an outer side wall of the limiting sleeve, and a limiting cavity that cooperates with the limiting block is disposed on the rotating shaft support.

The limiting block and the limiting cavity are disposed, so that when the device body is connected to the wrist support, relative rotation between the rotating shaft support and the limiting sleeve can be prevented.

In a possible implementation, the rotating shaft assembly further includes two abutting assemblies that are disposed in the rotating shaft support and that are symmetrical to the vertical rotating shaft, one end of each abutting assembly is connected to one end of the friction shaft, and the other end of each abutting assembly is telescopically abutted against the outer wall of the limiting sleeve. The abutting assembly is disposed, so that the rotating shaft support can be prevented from rotating relative to the vertical rotating shaft.

In a possible implementation, each abutting assembly includes an abutting block and a fifth elastic piece, one end of the fifth elastic piece is connected to the inside of one end of the friction shaft, the other end of the fifth elastic piece is connected to the abutting block, one end of the abutting block is covered outside the one end of the friction shaft, and the other end of the abutting block is provided with an abutting connector. A second recess clamped to the abutting connector is disposed on an outer wall of the limiting sleeve.

In a possible implementation, the wearable device further includes a third base, where the third base is disposed at a bottom end of the vertical rotating shaft, and a third extension part extending toward a top end of the vertical rotating shaft is disposed on the third base. A bottom end of the limiting sleeve abuts against the third extension part, a seventh concave convex surface that is uneven is disposed at the bottom end of the limiting sleeve, and an eighth concave convex surface that fits the seventh concave convex surface is disposed on a surface that is of the third extension part and that faces the limiting sleeve.

In a possible implementation, the wearable device further includes a sixth elastic piece, where the sixth elastic piece is sleeved on the vertical rotating shaft, an end of the sixth elastic piece abuts against the inner bottom surface of the limiting sleeve, and the end of the sixth elastic piece is connected to the top end of the vertical rotating shaft through a clamping spring.

In a possible implementation, a rotating shaft gasket is disposed between the top end of the limiting sleeve and the clamping spring.

In a possible implementation, a connection part is further disposed on the friction shaft of the rotating assembly, and the connection part is fastened to the device body through a fastener.

In a possible implementation, the wearable device further includes a clamping assembly, where the clamping assembly is fixedly disposed at a second end of the device body, and the second end of the device body is detachably connected to the second end of the wrist support through the clamping assembly.

In an embodiment of this application, a clamping assembly is disposed, and when the device body is worn, the second end of the device body is clamped and connected to the second end of the wrist support through the clamping assembly, so that the device body can be easily worn. When being opened, pressing the clamping assembly may lift the device body, so that the second end of the device body is separated from the second end of the wrist support. Under the action of the rotating shaft assembly, the device body may rotate around the horizontal rotating shaft, or may rotate around the vertical rotating shaft, thereby improving playability and mechanical sense of the wearable device.

In a possible implementation, the clamping assembly includes a key, where a bottom end of the key is provided with a first clamping part, and a first buckling position clamped to the first clamping part is disposed on the wrist support. The key is telescopically disposed on a side surface of a second end of the device body, and the device body and the wrist support are detachably connected through the first clamping part and the first buckling position. In addition, when the key is pressed, the first clamping part is released from clamping to the first buckling position, so that the second end of the device body is detached from the second end of the wrist support.

In a possible implementation, the key includes a key cap, a key shelf, and a seventh elastic piece, the key is disposed on a second end of the device body, and two ends of the key shelf are fastened to the second end of the device body.

One end of the seventh elastic piece is connected to a surface that is of the key cap and that faces the device body, and the other end of the seventh elastic piece is connected to the button holder. The bottom end of the key cap is provided with the first clamping part.

In a possible implementation, a guide protrusion is disposed on a side that is of the button and that faces the device body, and the guide protrusion is provided with a through hole through which one end of the seventh elastic piece is capable of extending. The button holder is provided with a guide groove through which the guide protrusion can move. One end of the seventh elastic piece is connected to a groove bottom of the guide groove, and the other end of the seventh elastic piece extends into the through hole through which the guide protrusion is connected to the key cap.

In a possible implementation, a plurality of protrusions and recesses disposed at intervals are disposed on a side that is of the key cap and that is opposite to the device body. One of the protrusions at a bottom end of the key cap forms the first clamping part, the first clamping part is provided with a first guiding slope, and the wrist support is provided with a second guiding slope that matches the first guiding slope.

In a possible implementation, the clamping assembly includes a cover and a keypad board, where a side of the keypad board facing the device body is provided with a pressing part protruding outward. The cover is provided with an opening for the pressing part to pass through, and the cover is connected to the device body. The keypad board is telescopically disposed on a side surface of a second end of the device body. In addition, a second clamping part is disposed at the bottom ends of the two ends of the keypad board respectively, and a second buckling position clamped to the second clamping part is disposed on the wrist support. The device body and the wrist support are detachably connected through the second clamping part and the second buckling position.

In a possible implementation, the clamping assembly further includes an eighth elastic piece, where one end of the eighth elastic piece is connected to the device body, the other end of the eighth elastic piece is connected to the keypad board, and the keypad board is telescopically disposed on the device body through the eighth elastic piece.

In a possible implementation, the wearable device further includes a watch band, where the watch band is rotatably connected to the wrist support.

Another aspect of embodiments of this application provides a wearable system, including a terminal device and the wearable device in the first aspect, where the terminal device is communicatively connected to the wearable device.

According to the wearable device and the wearable system provided in this application, a rotating shaft assembly is disposed, so that a device body of the wearable device is capable of rotating around a horizontal rotating shaft and a vertical rotating shaft, and a locking assembly is disposed, so that the device body can be separated from a wrist support. When the device body is worn, the second end of the device body is clamped and connected to the second end of the wrist support through the clamping assembly, so that the device body can be easily worn. When the device body is opened, the device body can be lifted by pressing the clamping assembly, so that the second end of the device body is separated from the second end of the wrist support. Under the action of the rotating shaft assembly, the device body may rotate around the horizontal rotating shaft, or may rotate around the vertical rotating shaft, thereby improving playability and mechanical sense of the wearable device. In addition, when the clamping assembly is opened, the device body can be further removed from the wrist support, so that the device body is completely separated from the wrist support. In this way, adaptability to a plurality of scenarios can be improved.

### BRIEF DESCRIPTION OF DRAWINGS

FIG. 1 is a schematic diagram of a structure of a wearable device according to an embodiment of this application;
FIG. 2 is a schematic diagram of a structure of a device body and a wrist support of a wearable device according to an embodiment of this application;
FIG. 3 is a schematic diagram of a structure of a device body and a wrist support of a wearable device from another angle according to an embodiment of this application;
FIG. 4 is a schematic diagram of a cross-sectional structure of a device body and a wrist support according to an embodiment of this application;
FIG. 5 is a schematic diagram of a structure of a rotating assembly of a wearable device according to an embodiment of this application;
FIG. 6 is a schematic diagram of a structure of a limiting piece of a wearable device according to an embodiment of this application;
FIG. 7A is a schematic diagram of a structure of a friction shaft of a wearable device according to an embodiment of this application;

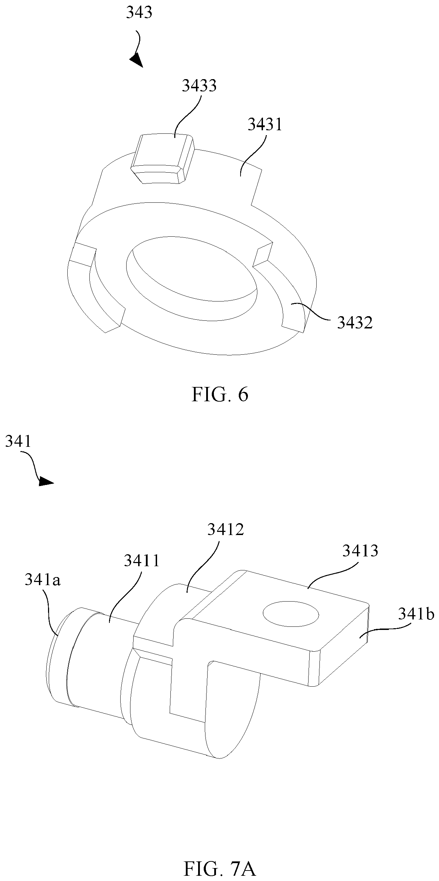

FIG. 7A is a schematic diagram of a structure of a friction plate of a wearable device according to an embodiment of this application;

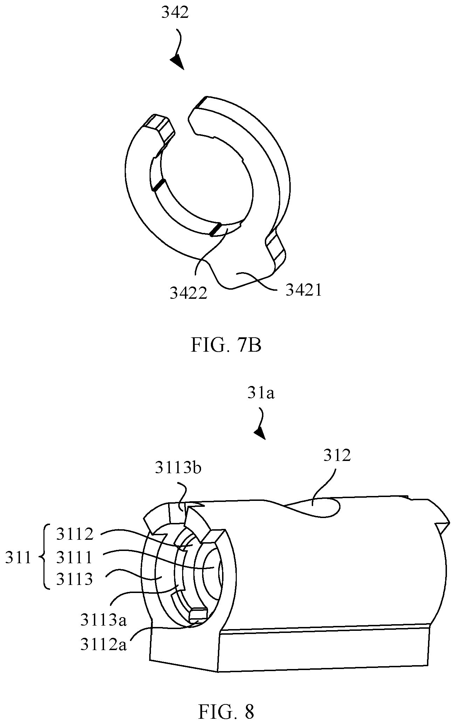

FIG. 8 is a schematic diagram of a structure of a rotating shaft support of a wearable device according to an embodiment of this application;

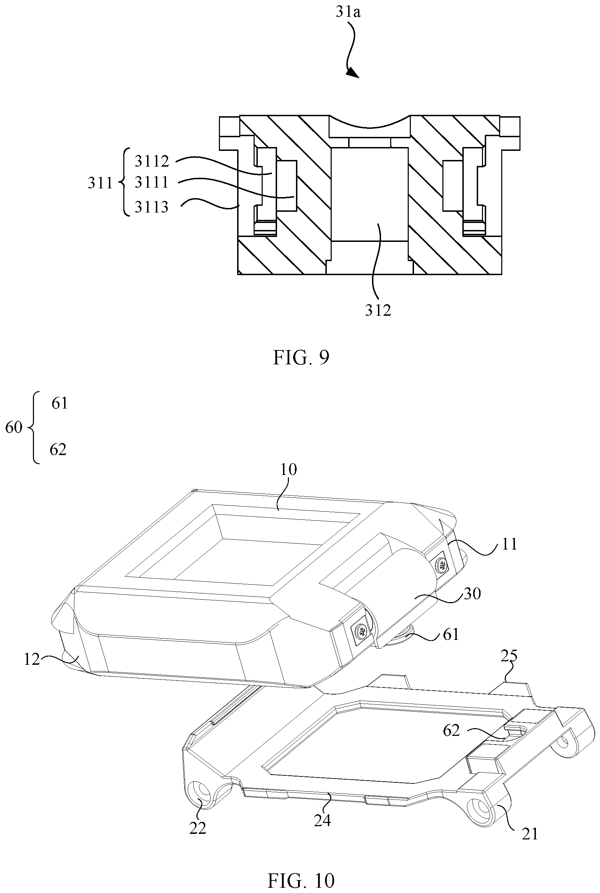

FIG. 9 is a schematic diagram of a cross-sectional structure of a rotating shaft support of a wearable device according to an embodiment of this application;
FIG. 10 is an exploded view of a device body and a wrist support of a wearable device according to an embodiment of this application;

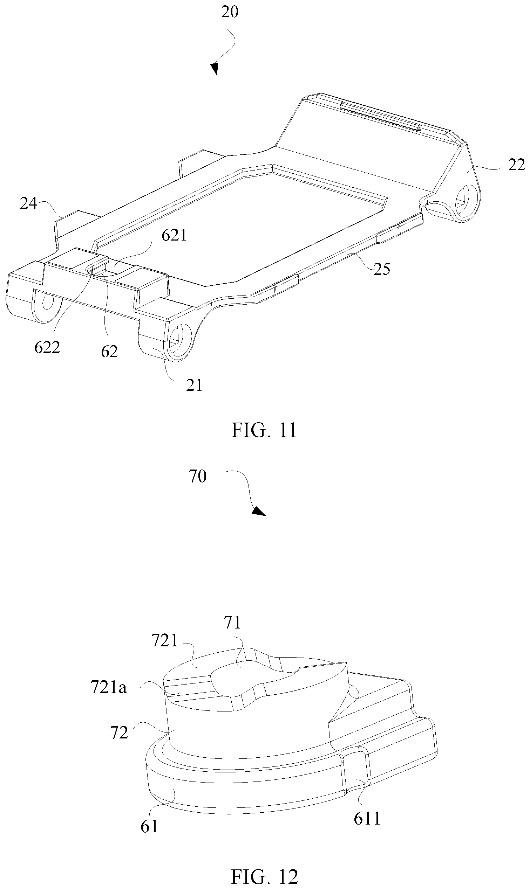

FIG. 11 is a schematic diagram of a structure of a wrist support of a wearable device according to an embodiment of this application;
FIG. 12 is a schematic diagram of a structure of a first base of a wearable device according to an embodiment of this application;

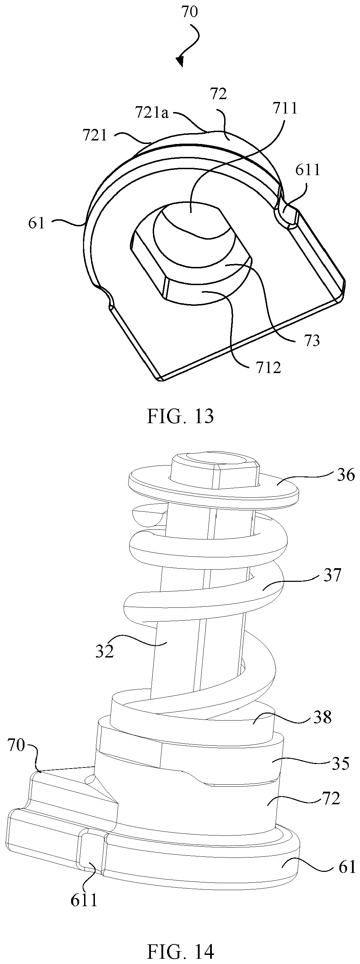

FIG. 13 is a schematic diagram of a structure of a first base of a wearable device from another angle according to an embodiment of this application;
FIG. 14 is a schematic diagram of a partial structure of a rotating shaft assembly of a wearable device according to an embodiment of this application;

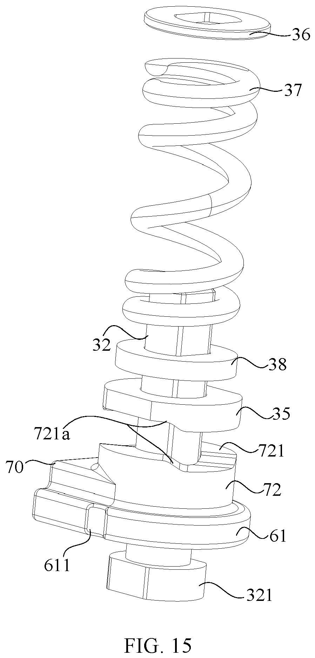

FIG. 15 is an exploded view of FIG. 14;

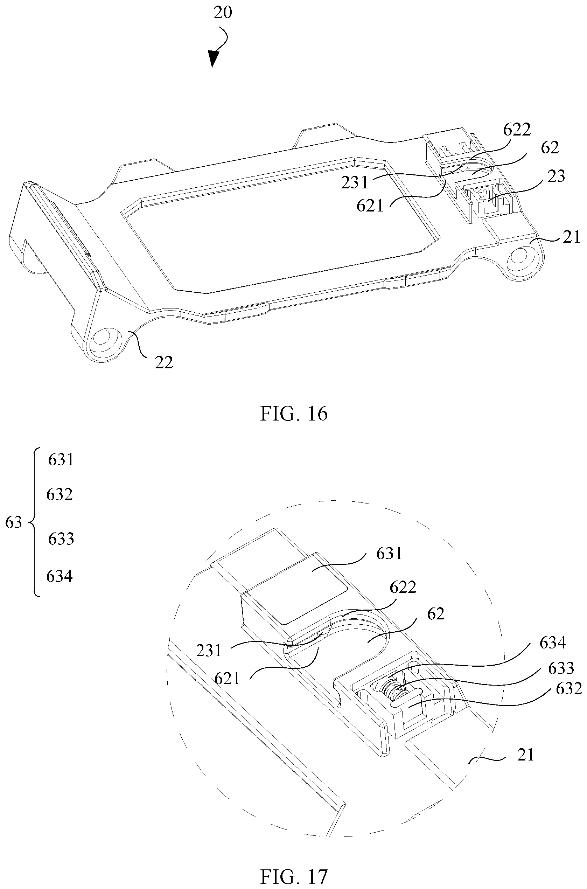

FIG. 16 is a schematic diagram of a structure of a wrist support of a wearable device from another angle according to an embodiment of this application;
FIG. 17 is a locally enlarged schematic diagram of a position at which a stopper assembly is disposed on a wrist support of a wearable device according to an embodiment of this application;

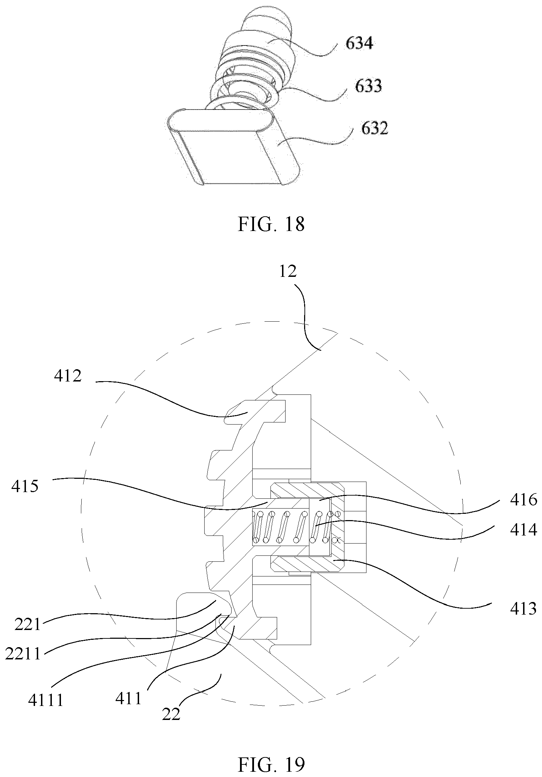

FIG. 18 is a schematic diagram of a structure of a baffle plate, a first elastic piece, and a stopper of a stopper assembly of a wearable device according to an embodiment of this application;
FIG. 19 is a locally enlarged view of a sectional view of a device body and a wrist support of a wearable device according to an embodiment of this application;

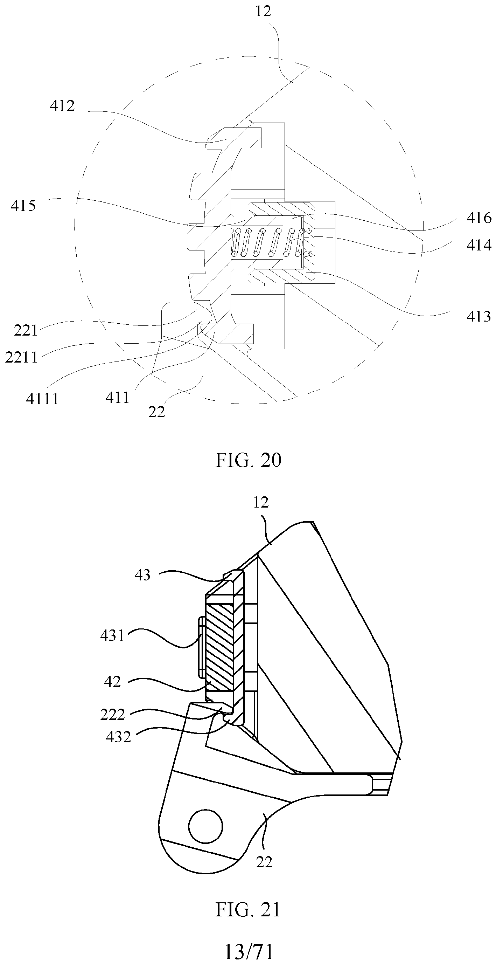

FIG. 20 is a schematic diagram of another structure of a device body and a wrist support of a wearable device according to an embodiment of this application;
FIG. 21 is a schematic diagram of a local section of a clamping assembly of a wearable device according to an embodiment of this application;

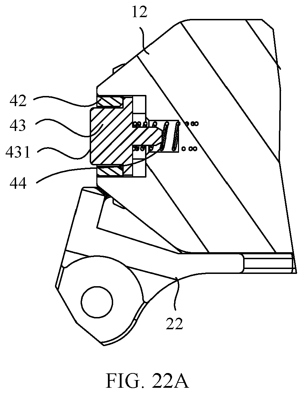

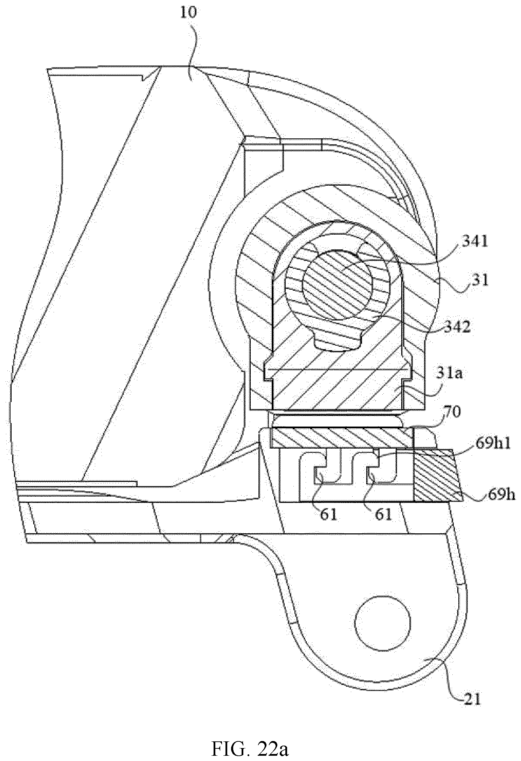

FIG. 22A is a schematic diagram of another local section of a clamping assembly of a wearable device according to an embodiment of this application;

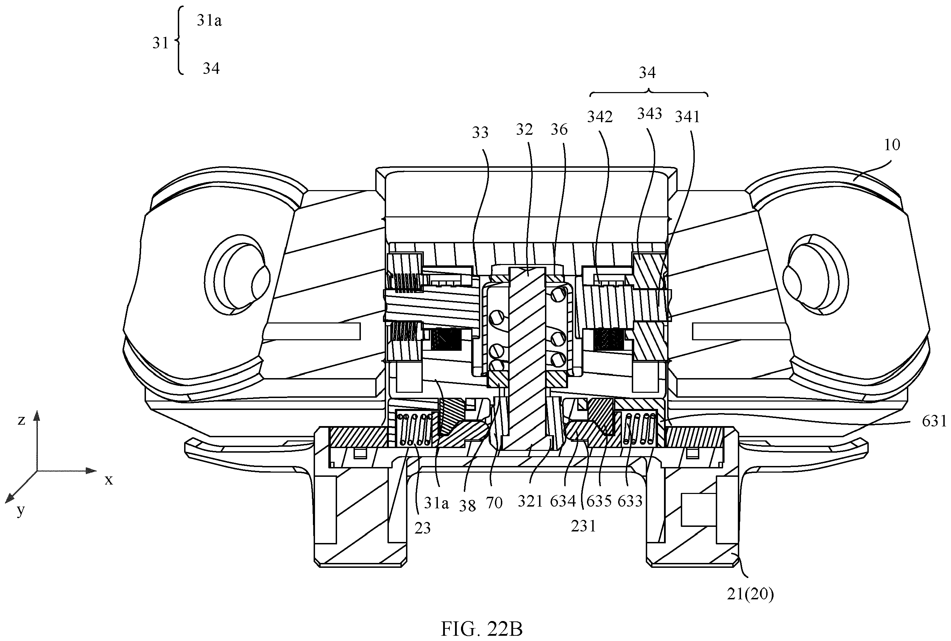

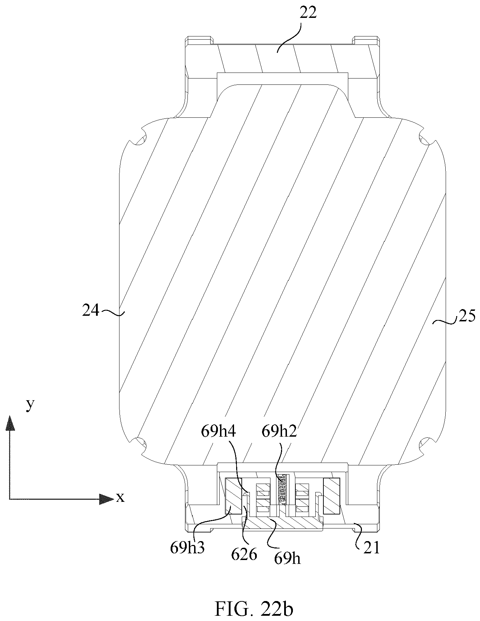

FIG. 22B is a schematic diagram of a cross-sectional structure of a device body and a wrist support of a wearable device according to an embodiment of this application;

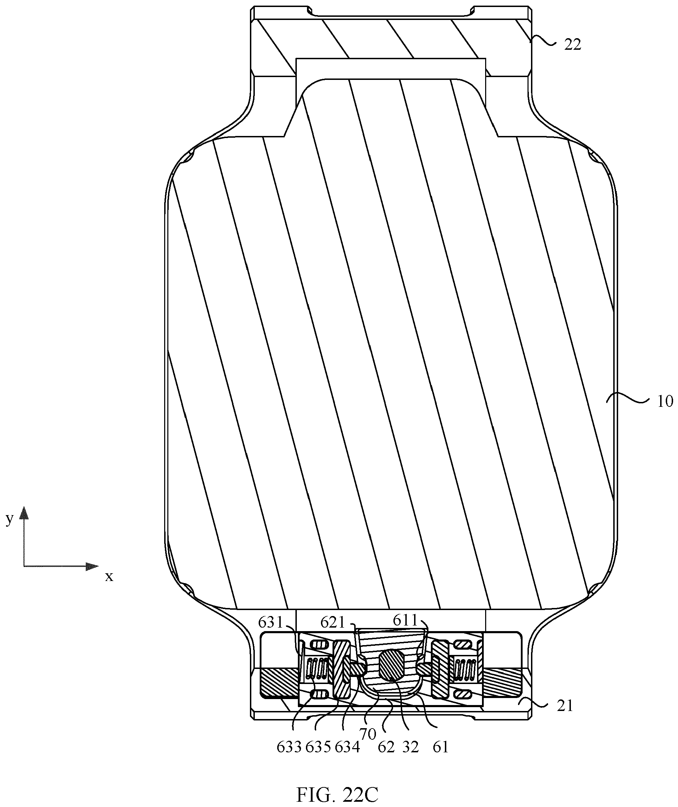

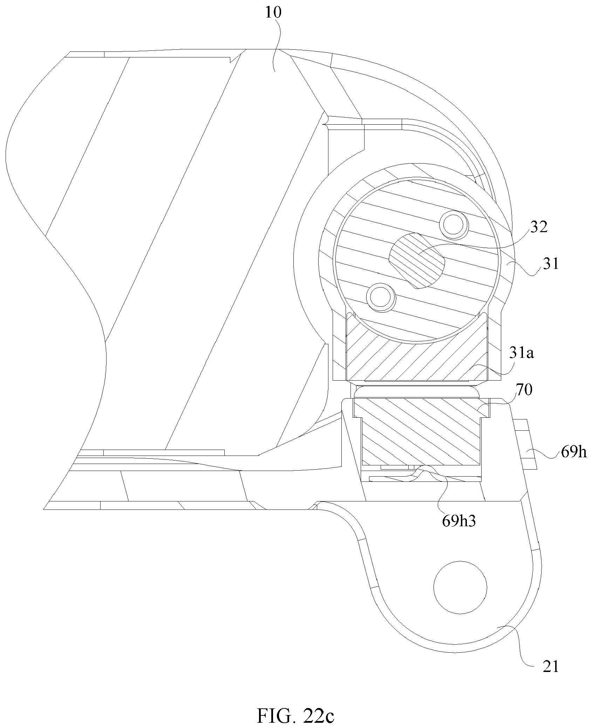

FIG. 22C is a schematic diagram of another cross-sectional structure of a device body and a wrist support of a wearable device according to an embodiment of this application;

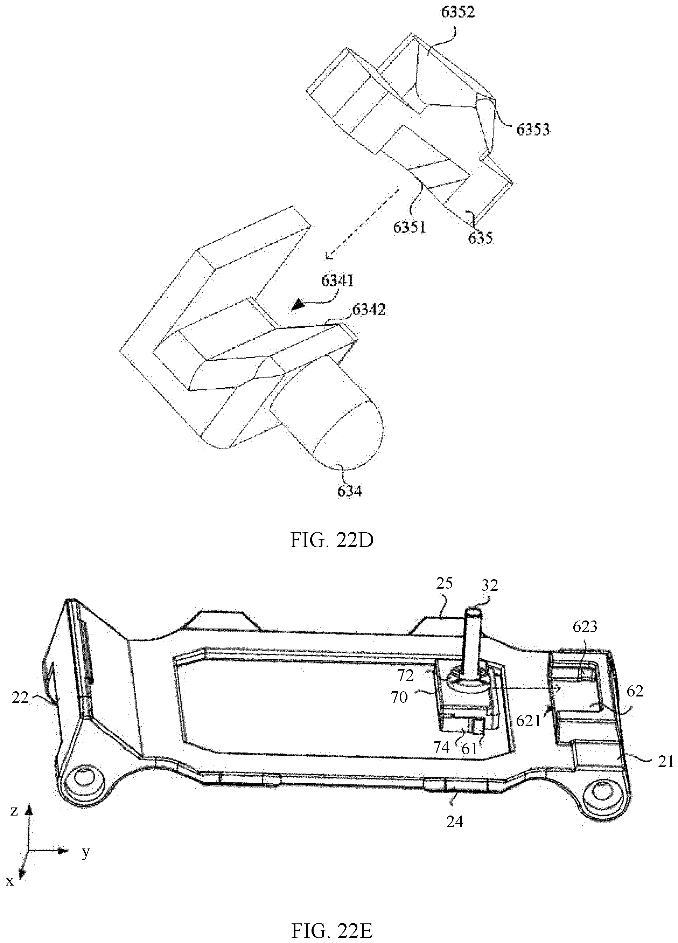

FIG. 22D is a schematic diagram of a structure of a pressing block button of a wearable device according to an embodiment of this application;
FIG. 22E is a schematic diagram of an exploded structure of a partial structure of a wrist support and a rotating shaft assembly of a wearable device according to an embodiment of this application;

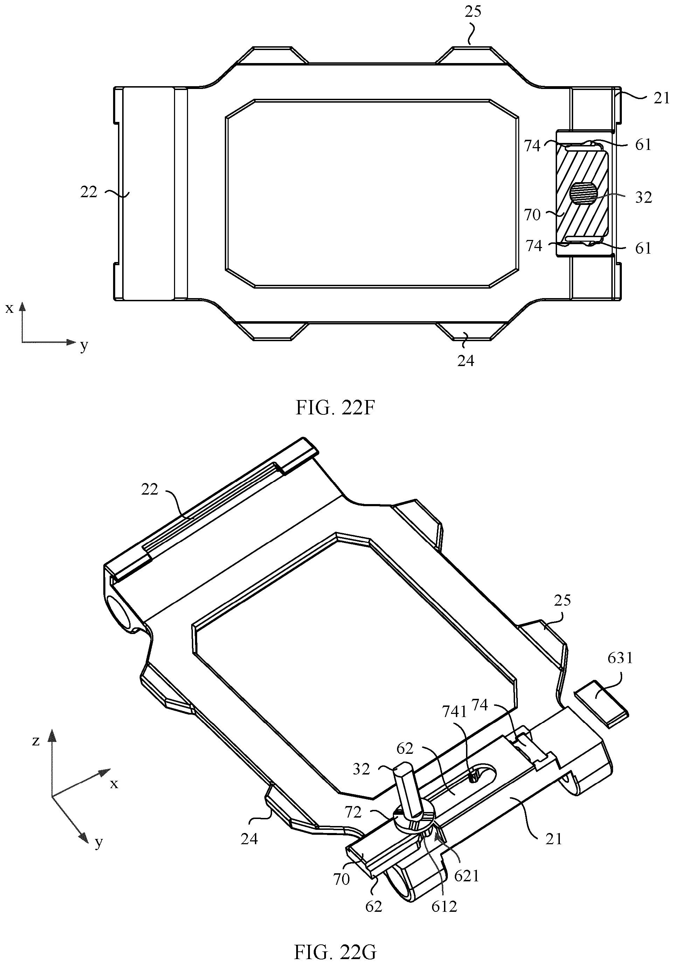

FIG. 22F is a schematic diagram of a cross-sectional structure of a partial structure of a wrist support and a rotating shaft assembly of a wearable device according to an embodiment of this application;
FIG. 22G is a schematic diagram of an exploded structure of a partial structure of a wrist support and a rotating shaft assembly of a wearable device according to an embodiment of this application;

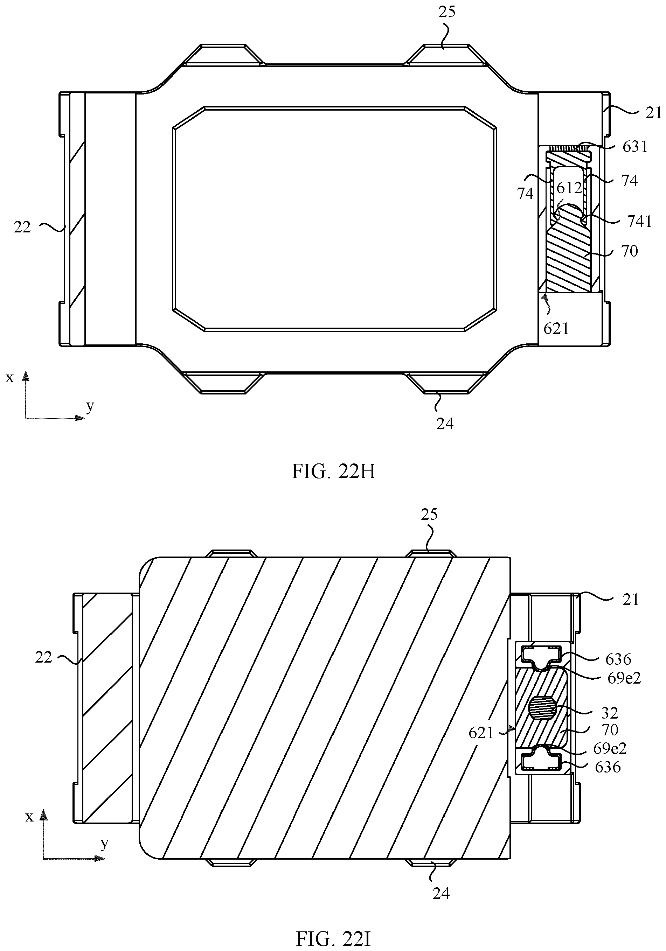

FIG. 22H is a schematic diagram of a cross-sectional structure of a partial structure of a wrist support and a rotating shaft assembly of a wearable device according to an embodiment of this application;
FIG. 22I is a schematic diagram of a cross-sectional structure of a wrist support and a device body of a wearable device according to an embodiment of this application;

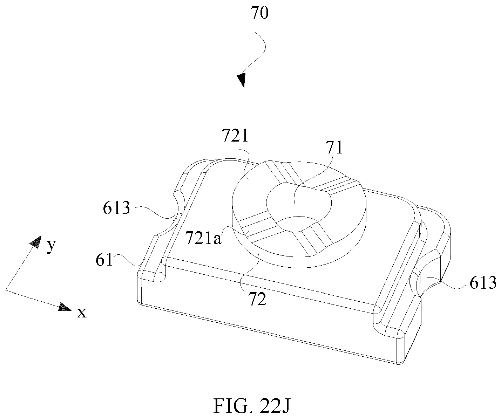

FIG. 22J is a schematic diagram of a structure of a first base of a wearable device according to an embodiment of this application;

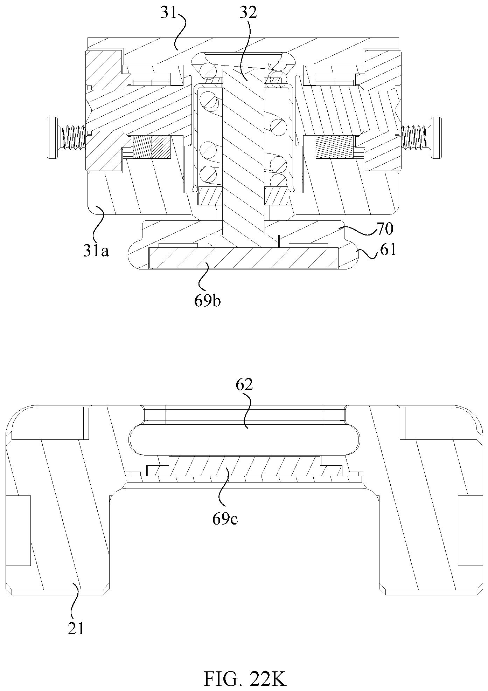

FIG. 22K is a schematic diagram of a cross-sectional structure of a structure of a wrist support and a rotating shaft assembly of a wearable device according to an embodiment of this application;

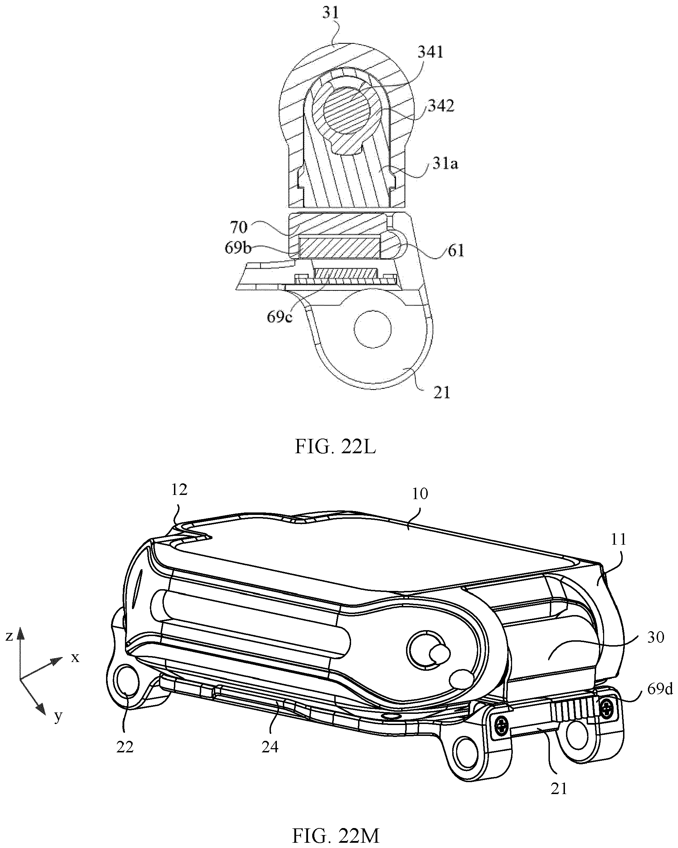

FIG. 22L is a schematic diagram of a cross-sectional structure of a partial structure of a wrist support and a rotating shaft assembly of a wearable device from another angle according to an embodiment of this application;
FIG. 22M is a schematic diagram of a structure of a device body and a wrist support of a wearable device according to an embodiment of this application;

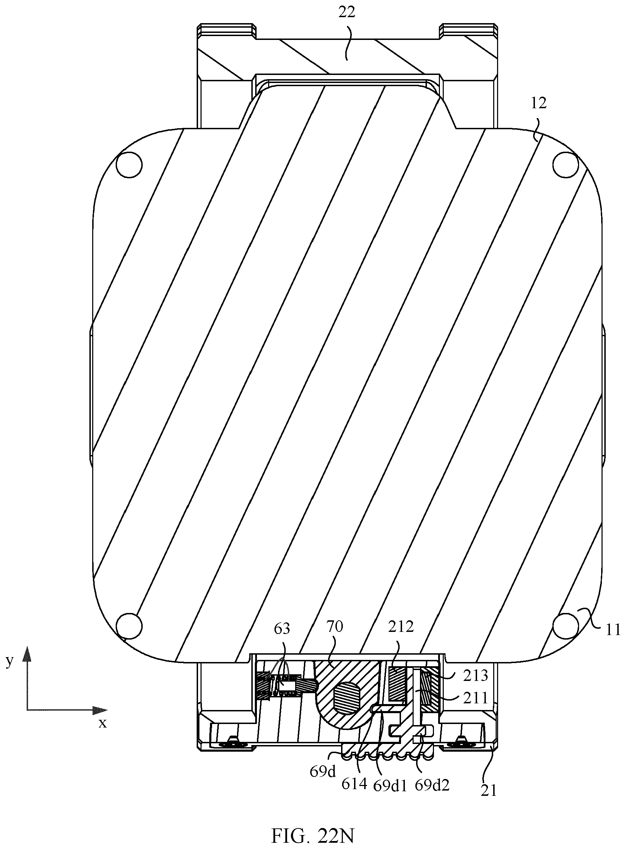

FIG. 22N is a schematic diagram of a cross-sectional structure of a device body and a wrist support of a wearable device according to an embodiment of this application;
FIG. 220 is a schematic diagram of a cross-sectional structure of a device body and a wrist support of a wearable device according to an embodiment of this application;

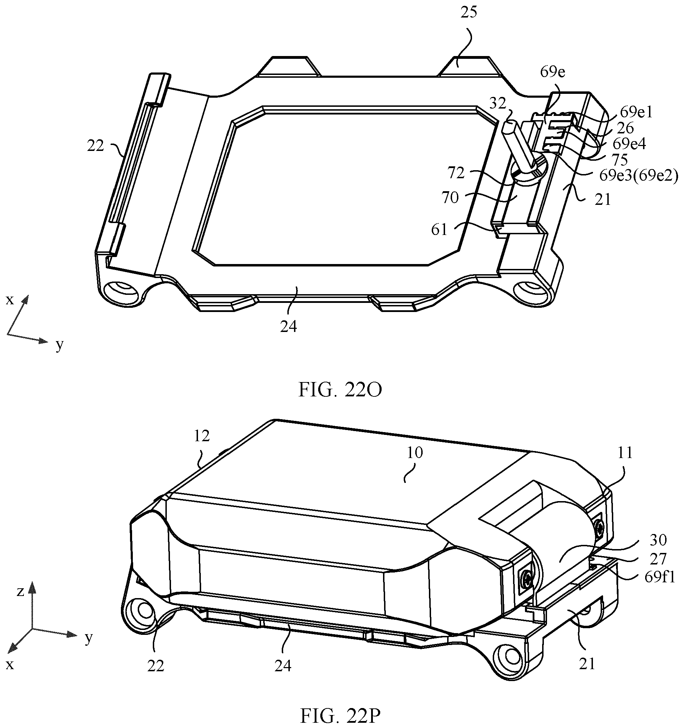

FIG. 22P is a schematic diagram of a structure of a device body and a wrist support of a wearable device according to an embodiment of this application;

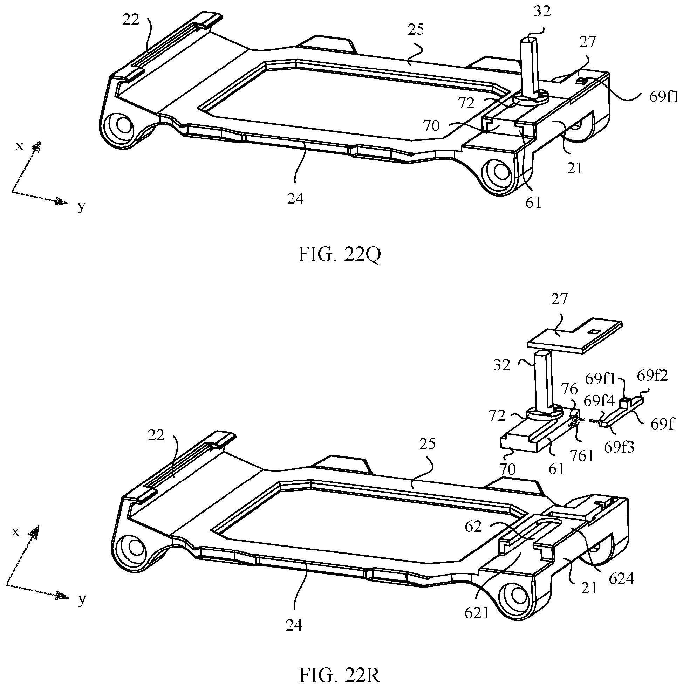

FIG. 22Q is a schematic diagram of a structure of a partial structure of a wrist support and a rotating shaft assembly of a wearable device according to an embodiment of this application;
FIG. 22R is a schematic diagram of an exploded structure of FIG. 22Q;

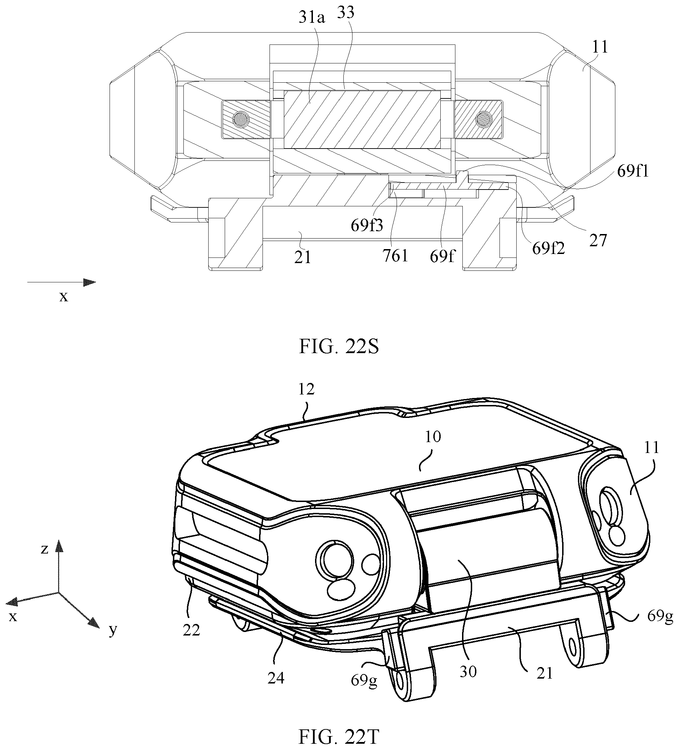

FIG. 22S is a schematic diagram of a structure of a device body and a wrist support of a wearable device according to an embodiment of this application;
FIG. 22T is a schematic diagram of a structure of a device body and a wrist support of a wearable device according to an embodiment of this application;

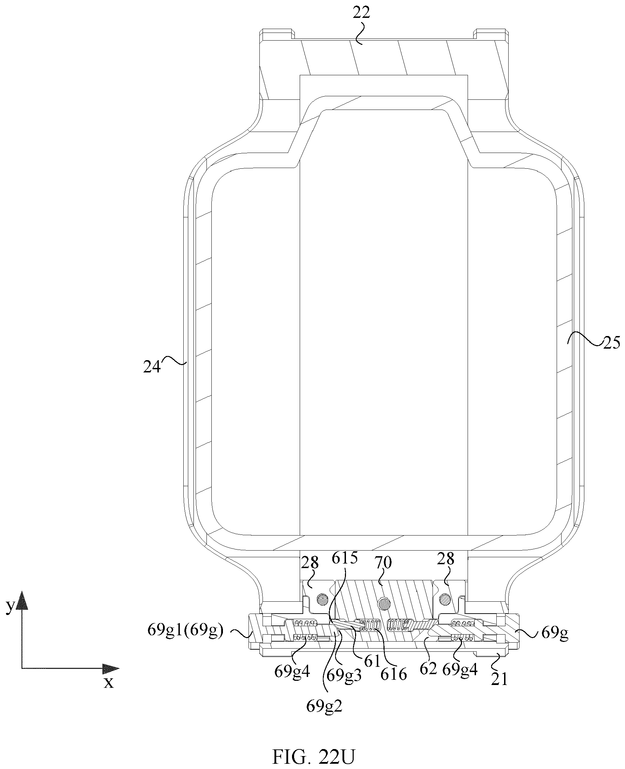

FIG. 22U is a schematic diagram of a cross-sectional structure of a device body and a wrist support of a wearable device according to an embodiment of this application;

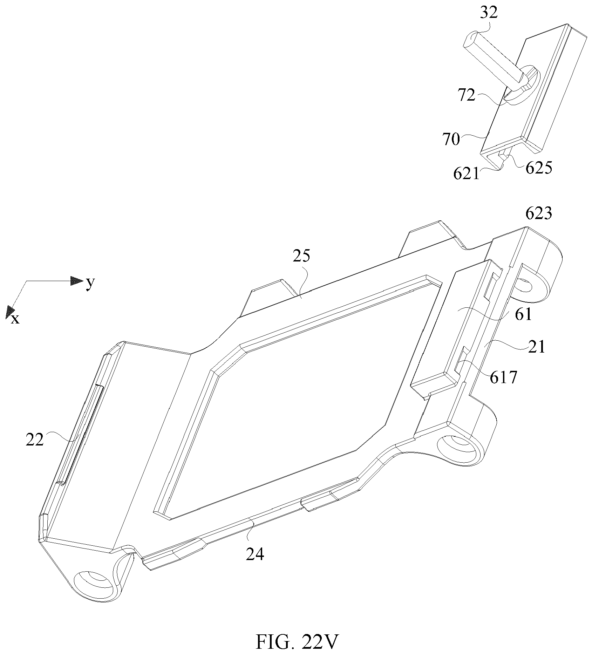

FIG. 22V is a schematic diagram of an exploded structure of a partial structure of a wrist support and a rotating shaft assembly of a wearable device according to an embodiment of this application;

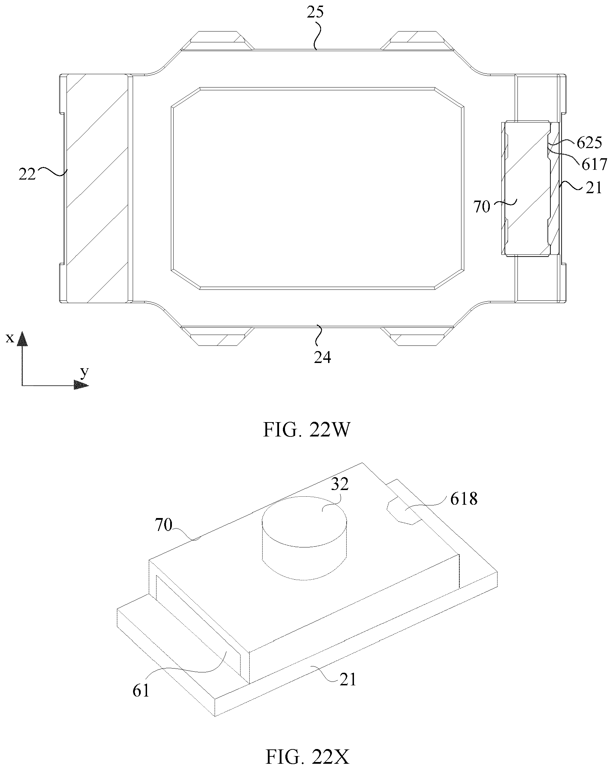

FIG. 22W is a schematic diagram of a cross-sectional structure of a device body and a wrist support of a wearable device according to an embodiment of this application;
FIG. 22X is a schematic diagram of a structure of a partial structure of a wrist support and a rotating shaft assembly of a wearable device according to an embodiment of this application;

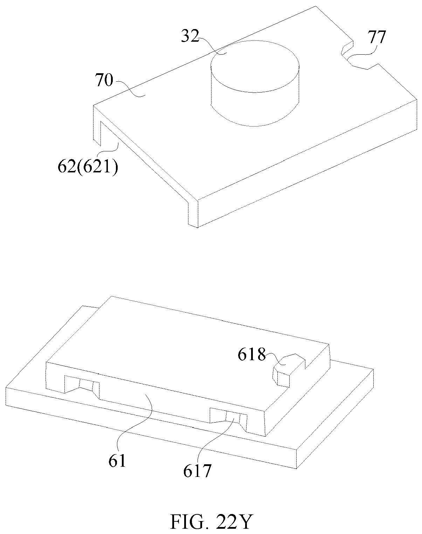

FIG. 22Y is a schematic diagram of an exploded structure of FIG. 22X;

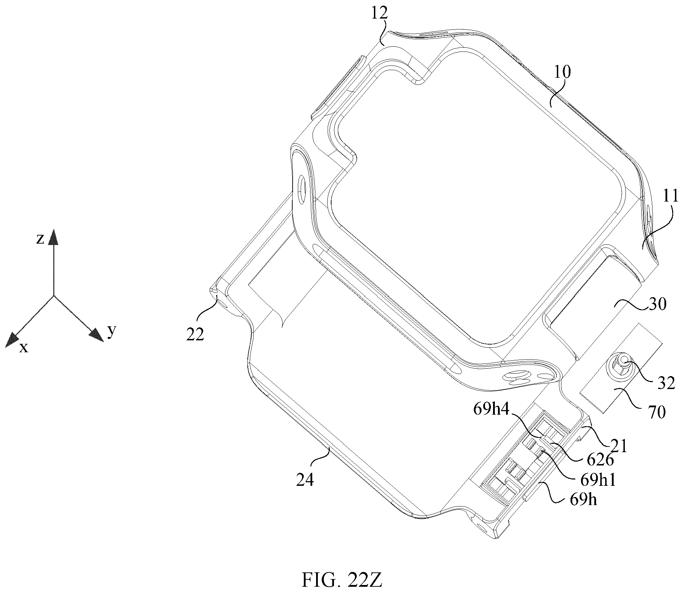

FIG. 22Z is a schematic diagram of an exploded structure of a device body and a wrist support of a wearable device according to an embodiment of this application;
FIG. 22a is a schematic diagram of a cross-sectional structure of a device body and a wrist support of a wearable device according to an embodiment of this application;
FIG. 22b is a schematic diagram of a partial structure of a sectional view of a device body and a wrist support of a wearable device from another angle according to an embodiment of this application;
FIG. 22c is a schematic diagram of a partial structure of a sectional view of a device body and a wrist support of a wearable device from another angle according to an embodiment of this application;

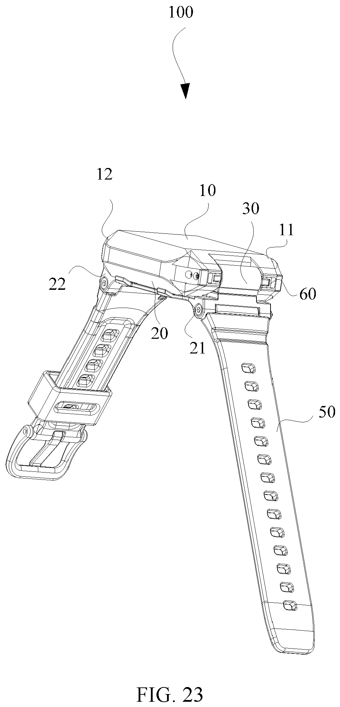

FIG. 23 is a schematic diagram of a structure of a wearable device according to an embodiment of this application;

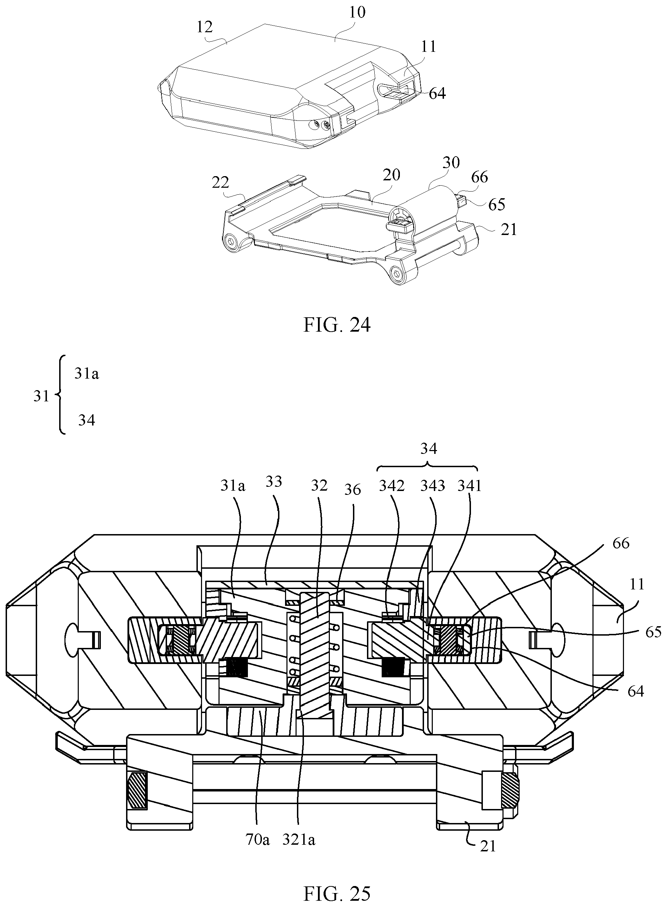

FIG. 24 is an exploded view of a device body and a wrist support of a wearable device according to an embodiment of this application;
FIG. 25 is a schematic diagram of a cross-sectional structure of a device body and a wrist support of a friction shaft of a wearable device according to an embodiment of this application;

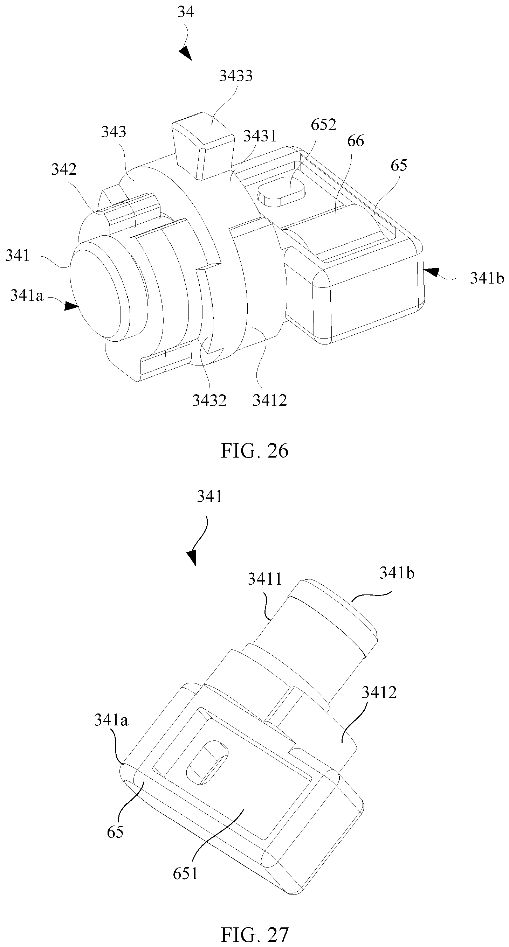

FIG. 26 is a schematic diagram of a structure of a rotating assembly of a wearable device according to an embodiment of this application;
FIG. 27 is a schematic diagram of a structure of a friction shaft of a wearable device according to an embodiment of this application;

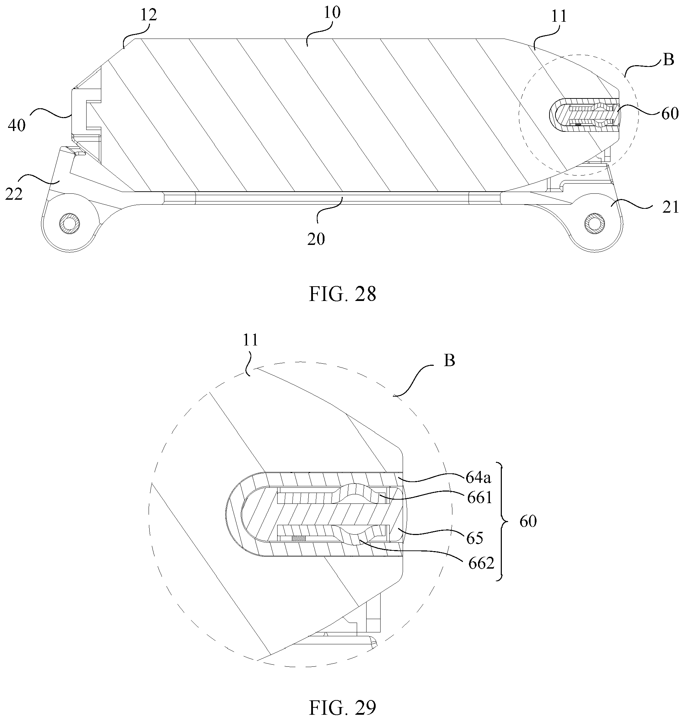

FIG. 28 is a schematic diagram of a cross-sectional structure of a device body and a wrist support of a wearable device according to an embodiment of this application;
FIG. 29 is an enlarged view of a part B in FIG. 28;

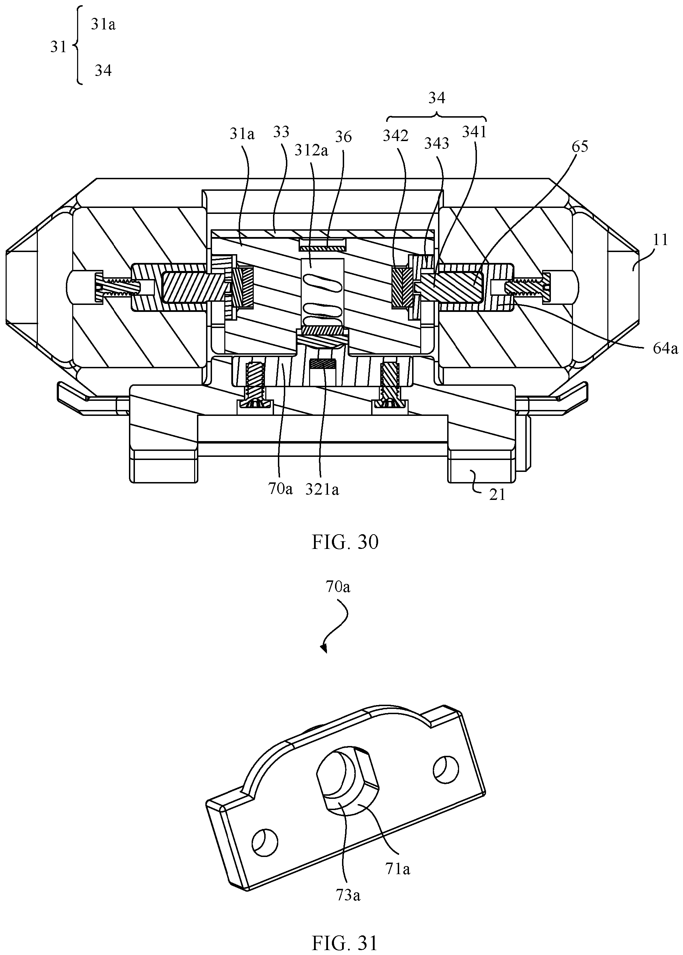

FIG. 30 is another schematic cross-sectional view of a device body and a wrist support of a wearable device according to an embodiment of this application;
FIG. 31 is a schematic diagram of a structure of a second base of a wearable device according to an embodiment of this application;

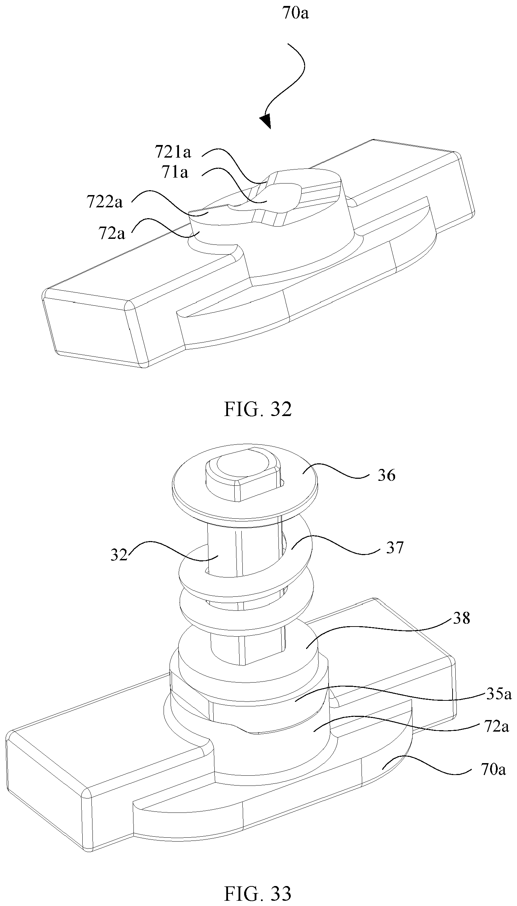

FIG. 32 is a schematic diagram of a structure of a second base of a wearable device from another angle according to an embodiment of this application;
FIG. 33 is a schematic diagram of a partial structure of a rotating shaft assembly of a wearable device according to an embodiment of this application;

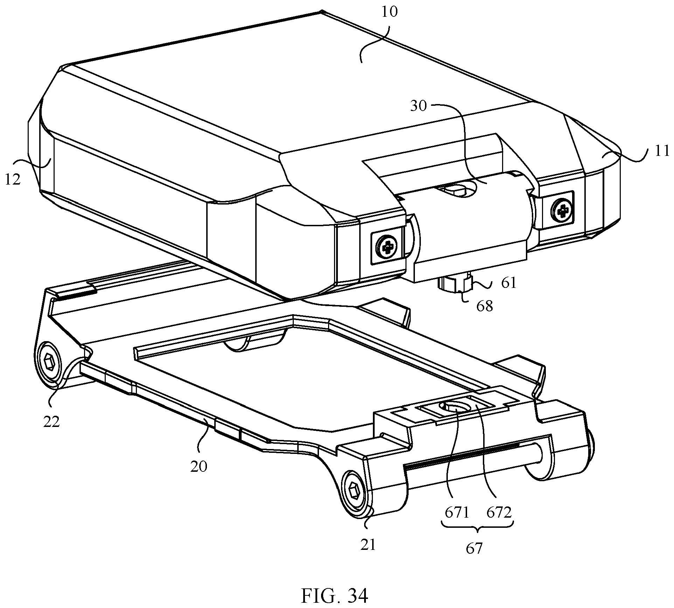

FIG. 34 is an exploded view of a device body and a wrist support of a wearable device according to an embodiment of this application;

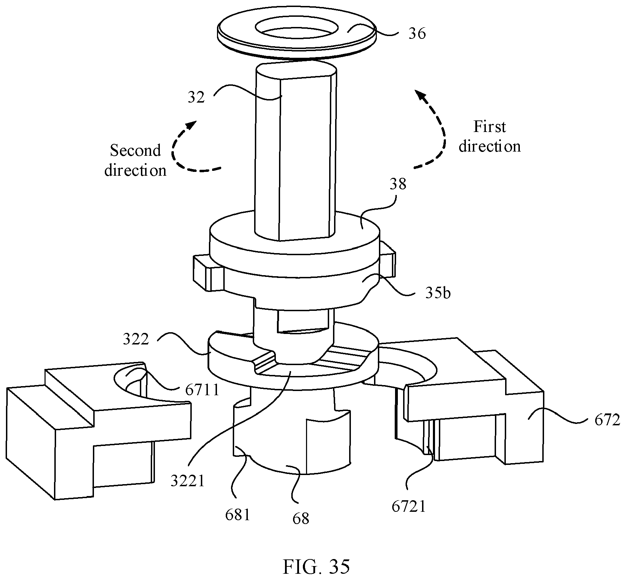

FIG. 35 is an exploded view of a vertical rotating shaft and a stopping block of a wearable device according to an embodiment of this application;

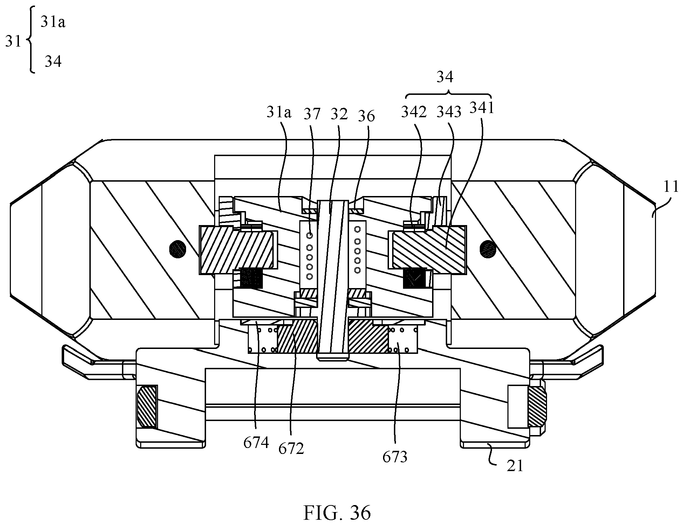

FIG. 36 is a sectional view of a device body and a wrist support of a wearable device according to an embodiment of this application;

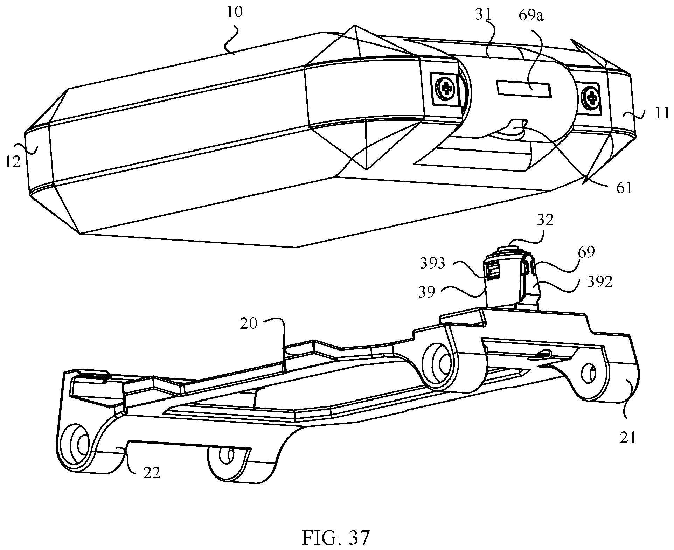

FIG. 37 is an exploded view of a device body and a wrist support of a wearable device according to an embodiment of this application;

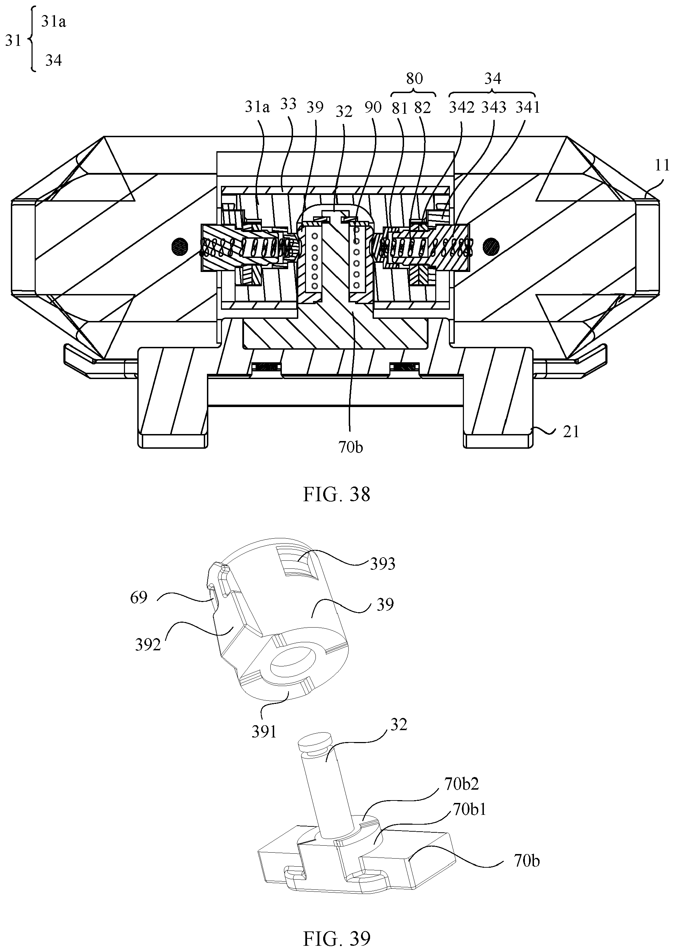

FIG. 38 is a sectional view of a device body and a wrist support of a wearable device according to an embodiment of this application;
FIG. 39 is a schematic diagram of structures of a limiting sleeve and a vertical rotating shaft of a wearable device according to an embodiment of this application;

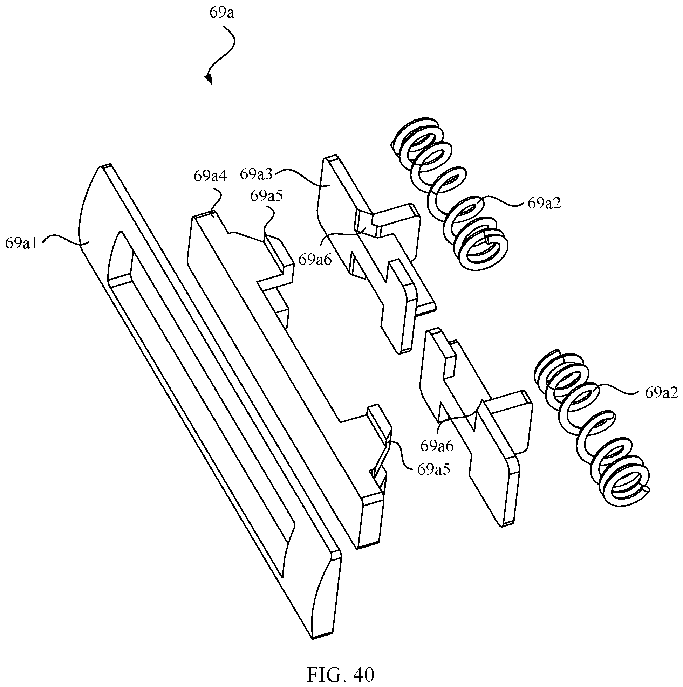

FIG. 40 is an exploded view of a lock button disposed in a wearable device according to an embodiment of this application;

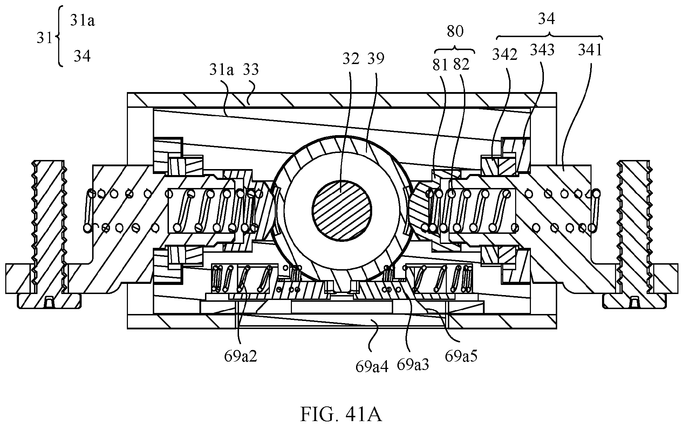

FIG. 41A is a sectional view of a rotating shaft assembly of a wearable device according to an embodiment of this application;

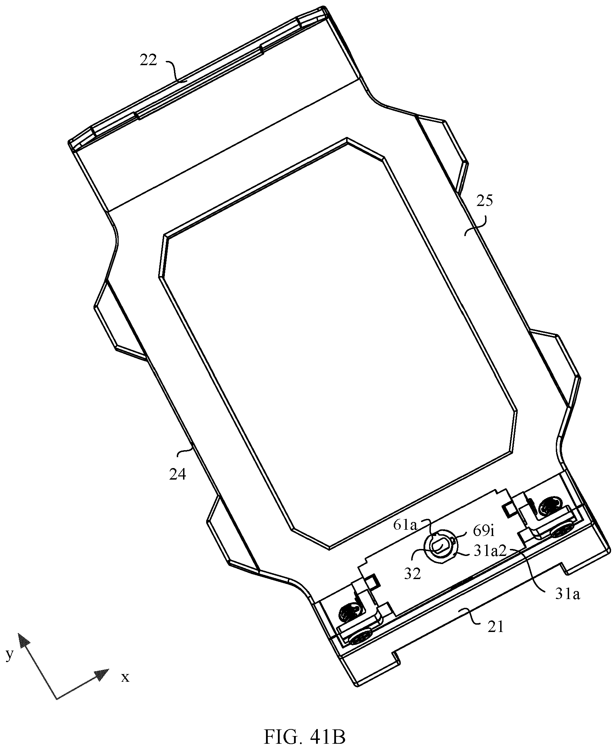

FIG. 41B is a schematic diagram of a partial structure of a wrist support and a rotating shaft assembly of a wearable device according to an embodiment of this application;

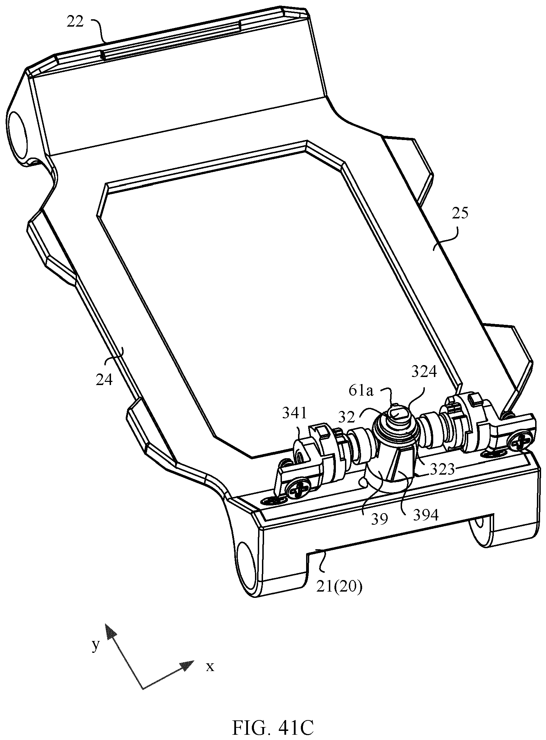

FIG. 41C is a schematic diagram of a partial structure of a wrist support and a rotating shaft assembly of a wearable device according to an embodiment of this application;

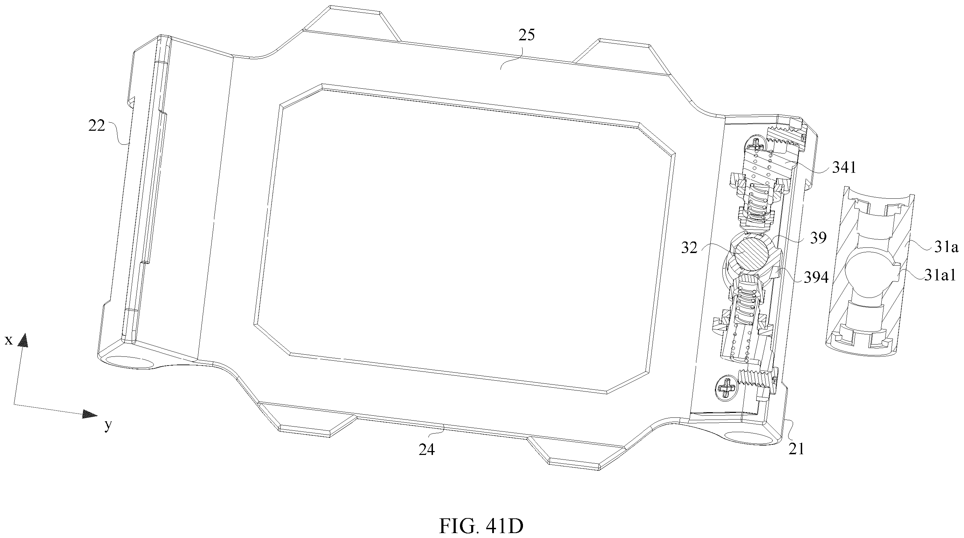

FIG. 41D is a schematic diagram of a cross-sectional structure of a partial structure of a wrist support and a rotating shaft assembly of a wearable device according to an embodiment of this application;

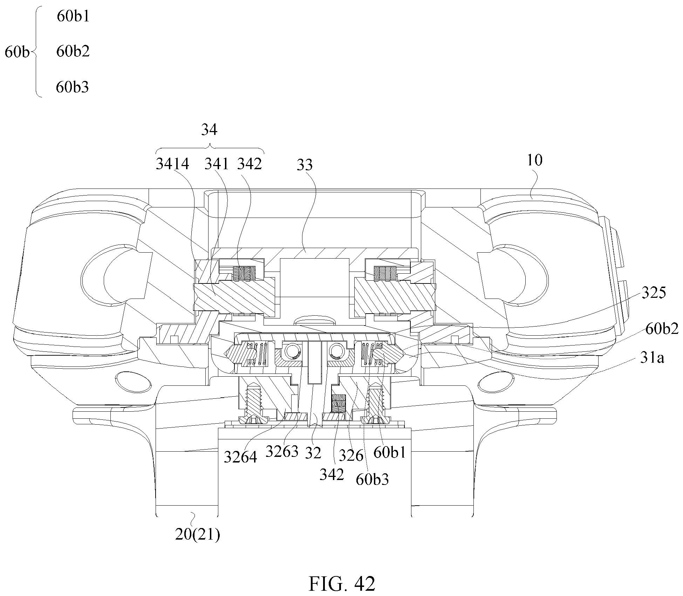

FIG. 42 is a schematic diagram of a cross-sectional structure of a device body and a wrist support of a wearable device according to an embodiment of this application;

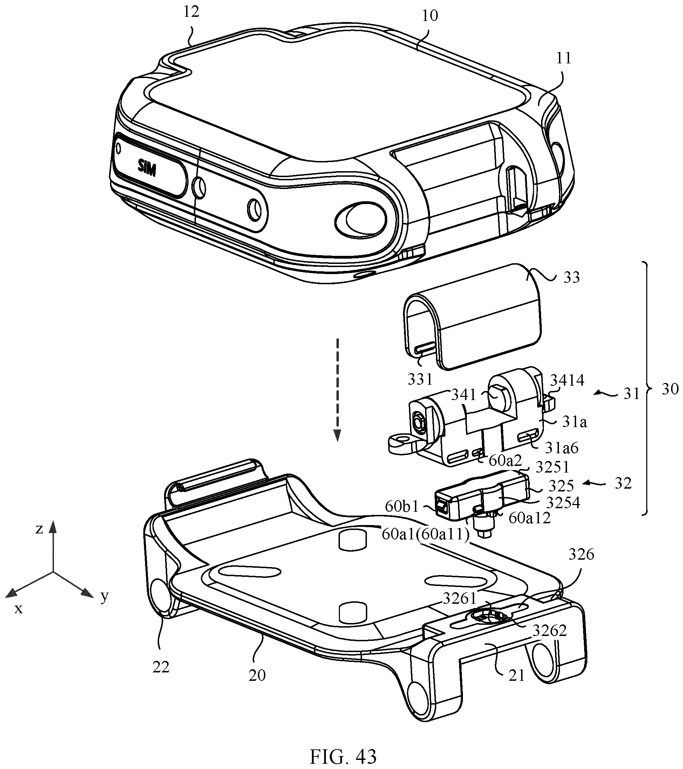

FIG. 43 is an exploded view of a device body, a wrist support, and a rotating shaft assembly of a wearable device according to an embodiment of this application;

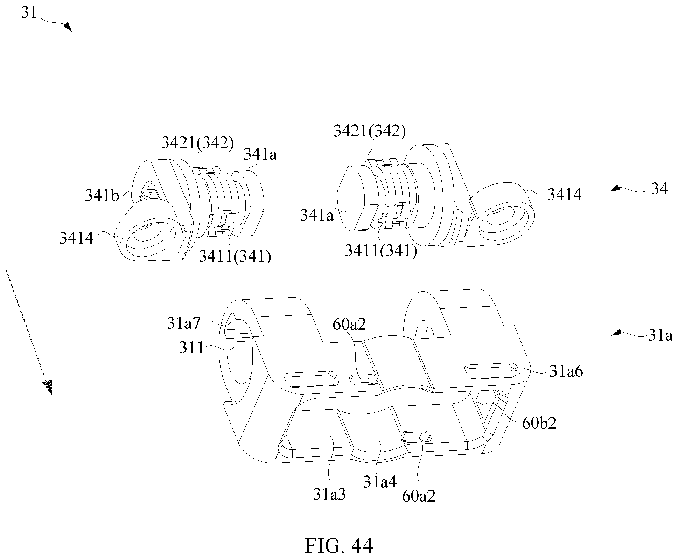

FIG. 44 is a schematic diagram of an exploded structure of a horizontal rotating shaft of a wearable device according to an embodiment of this application;

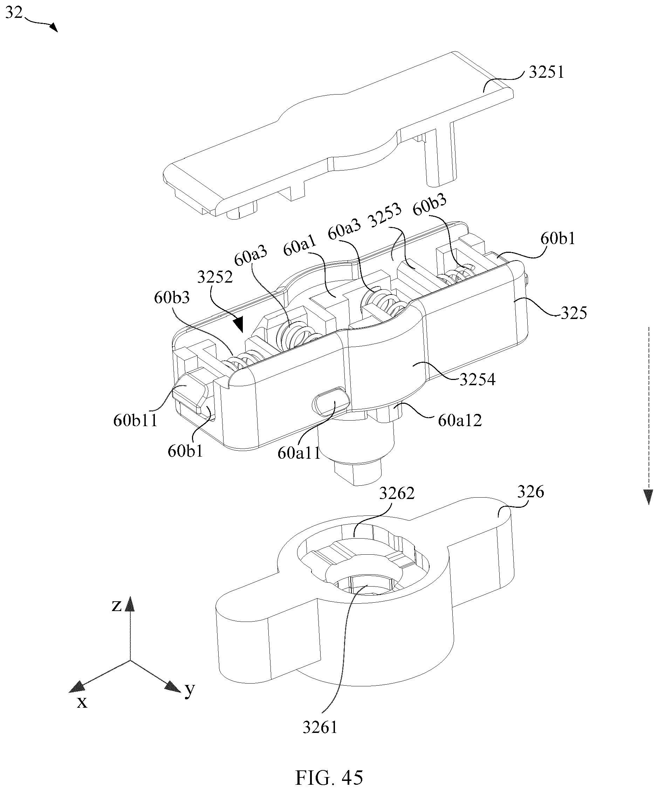

FIG. 45 is a schematic diagram of an exploded structure of a vertical rotating shaft of a wearable device according to an embodiment of this application;

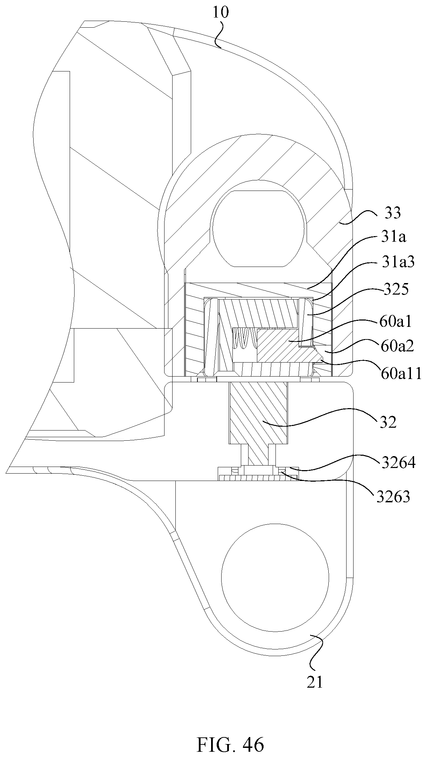

FIG. 46 is a schematic diagram of a cross-sectional structure of a partial structure, of a device body and a wrist support, in which the device body of a wearable device is located in a first position according to an embodiment of this application;

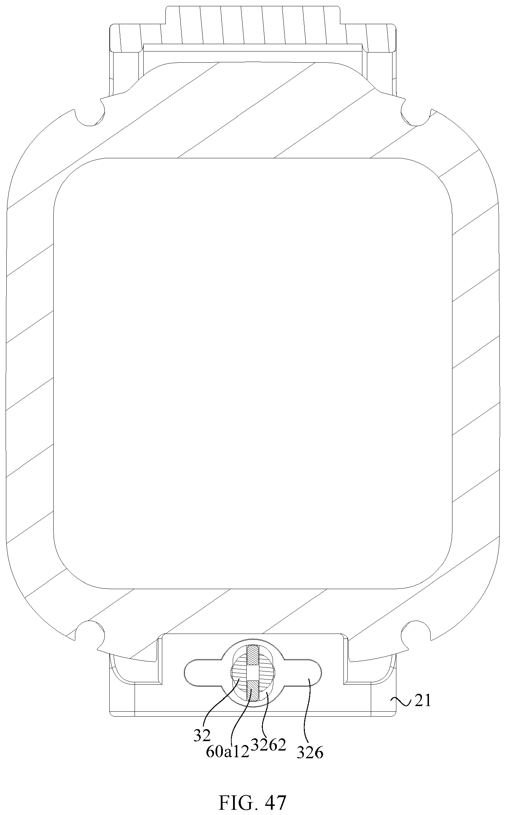

FIG. 47 is a schematic diagram of a cross-sectional structure, of a wrist support, in which a device body of a wearable device is located in a first position according to an embodiment of this application;

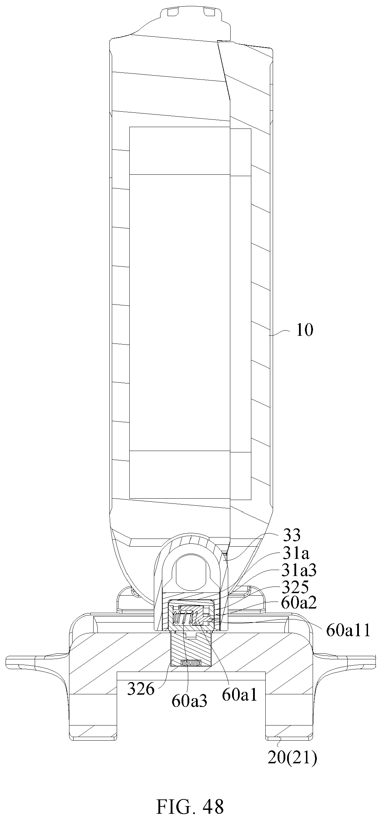

FIG. 48 is a schematic diagram of a cross-sectional structure, of a device body and a wrist support, in which the device body of a wearable device is located in a second position according to an embodiment of this application;

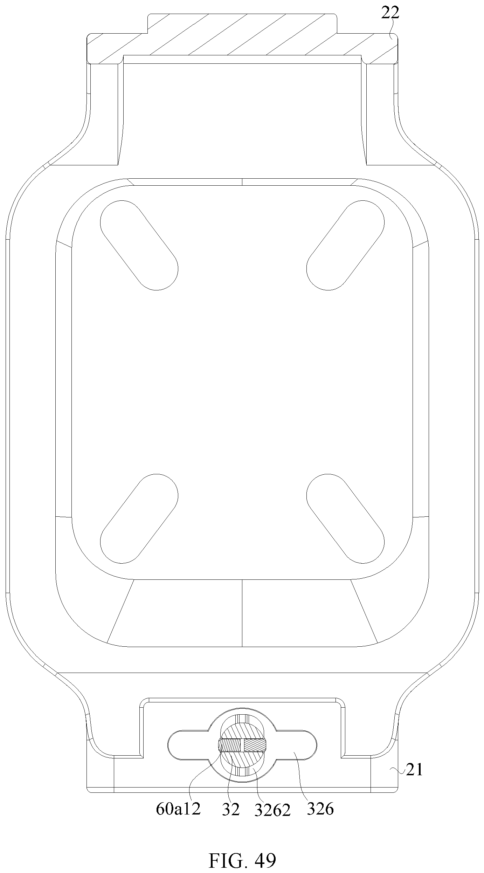

FIG. 49 is a schematic diagram of a cross-sectional structure, of a wrist support, in which a device body of a wearable device is located in a second position according to an embodiment of this application;

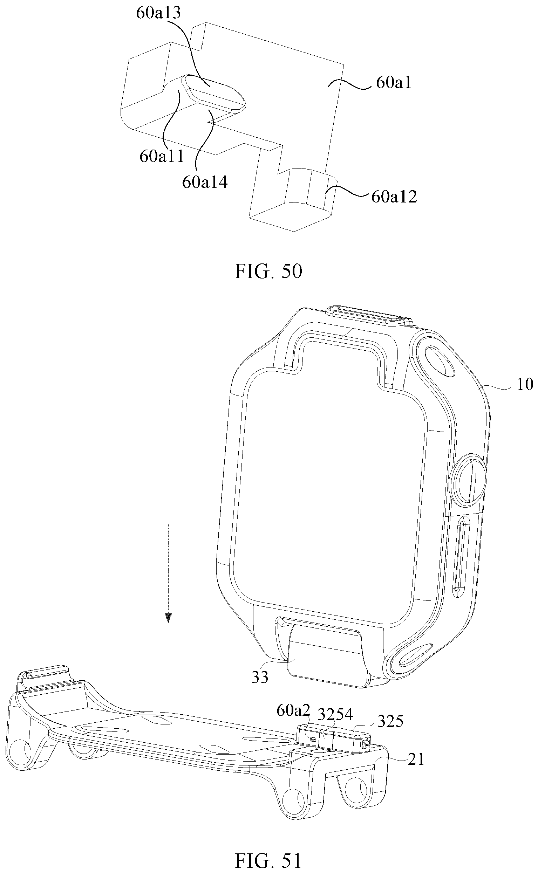

FIG. 50 is a schematic diagram of a structure of a telescopic buckle of a wearable device according to an embodiment of this application;
FIG. 51 is a schematic diagram of a structure in which a device body and a wrist support of a wearable device are in a separated state according to an embodiment of this application;

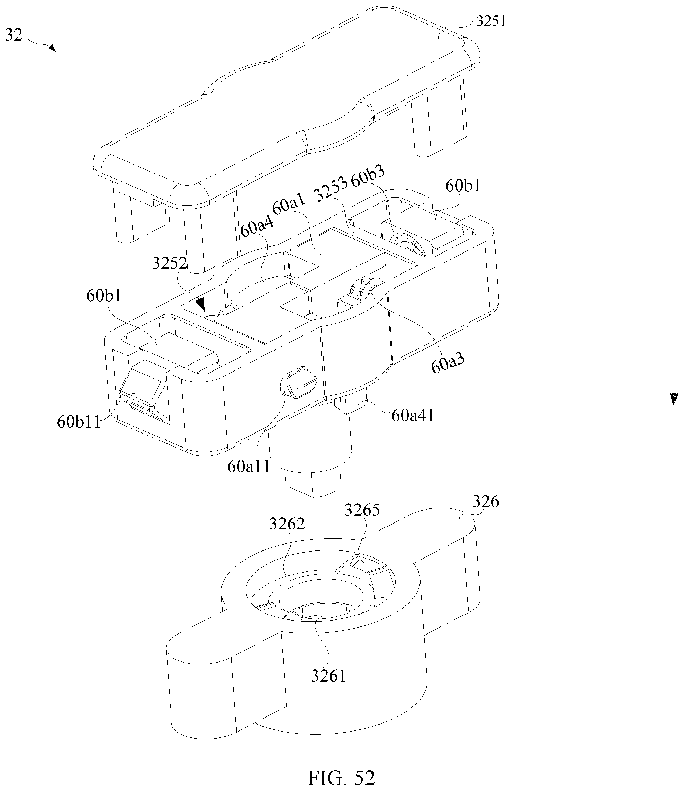

FIG. 52 is a schematic diagram of an exploded structure of a slide rail support and a Z-axis support of a wearable device according to an embodiment of this application;

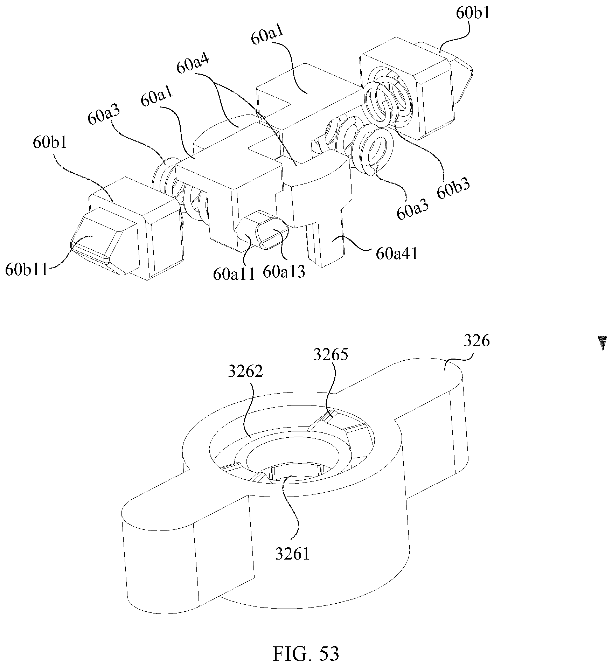

FIG. 53 is a schematic diagram of an exploded structure of a first locking assembly, a second locking assembly, and a Z-axis support of a wearable device in a first position according to an embodiment of this application;

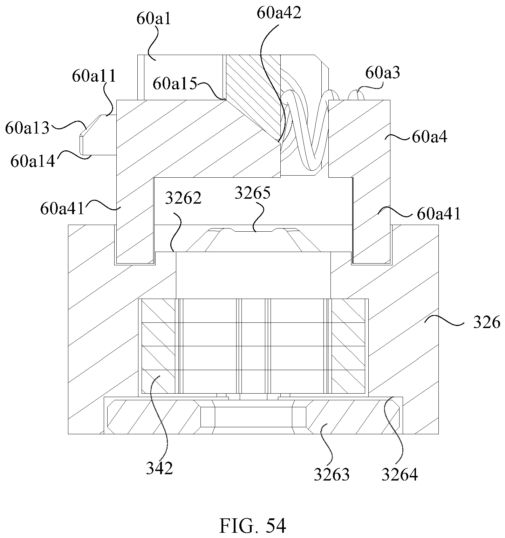

FIG. 54 is a schematic diagram of a cross-sectional structure of a slide rail support and a Z-axis support of a wearable device in a first position according to an embodiment of this application;

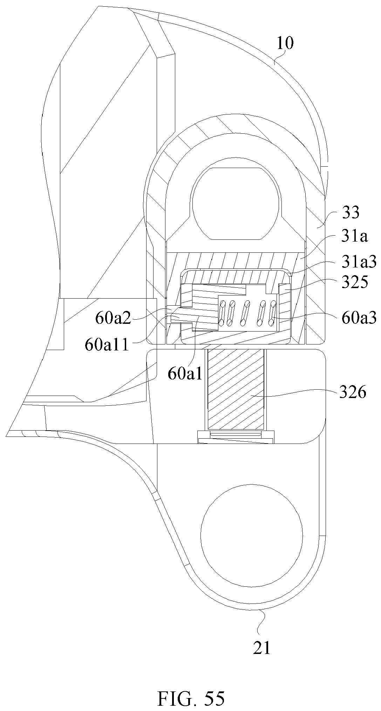

FIG. 55 is a schematic diagram of a cross-sectional structure of a partial structure of a device body and a wrist support of a wearable device in a first position according to an embodiment of this application;

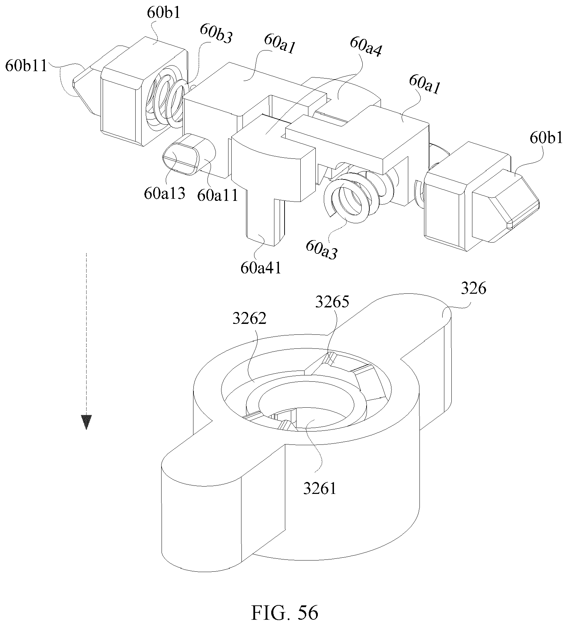

FIG. 56 is a schematic diagram of an exploded structure of a first locking assembly, a second locking assembly, and a Z-axis support of a wearable device in a second position according to an embodiment of this application;

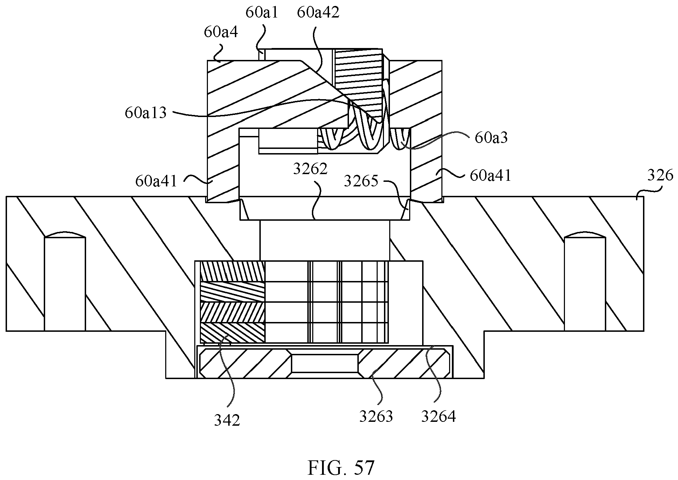

FIG. 57 is a schematic diagram of a cross-sectional structure of a slide rail support and a Z-axis support of a wearable device in a second position according to an embodiment of this application;

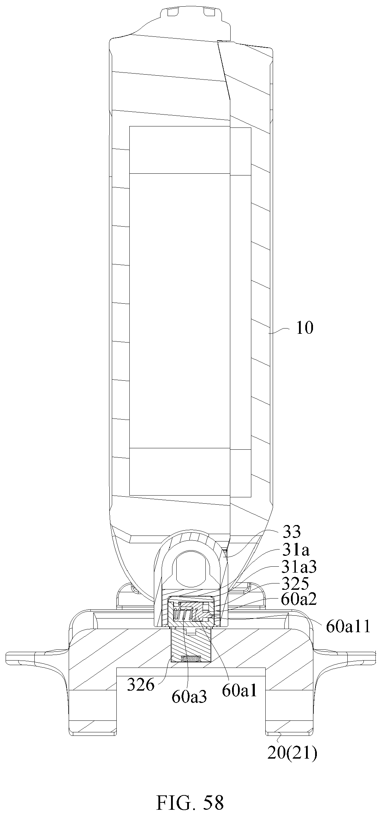

FIG. 58 is a schematic diagram of a cross-sectional structure of a device body and a wrist support of a wearable device in a second position according to an embodiment of this application;

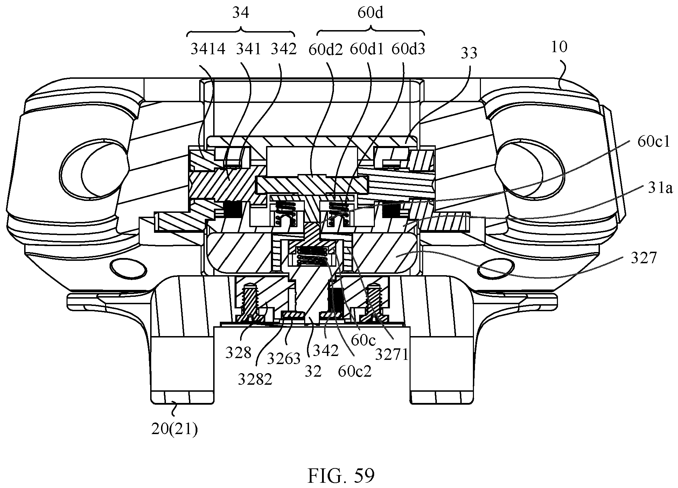

FIG. 59 is a schematic diagram of a cross-sectional structure of a device body and a wrist support of a wearable device according to an embodiment of this application;

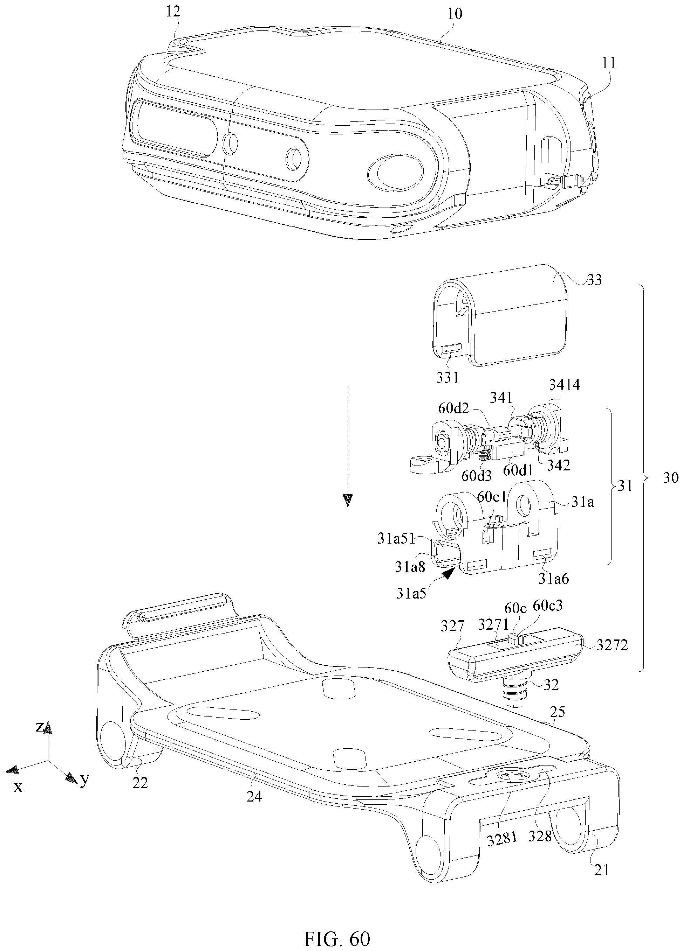

FIG. 60 is a schematic diagram of an exploded structure of a device body and a wrist support of a wearable device according to an embodiment of this application;

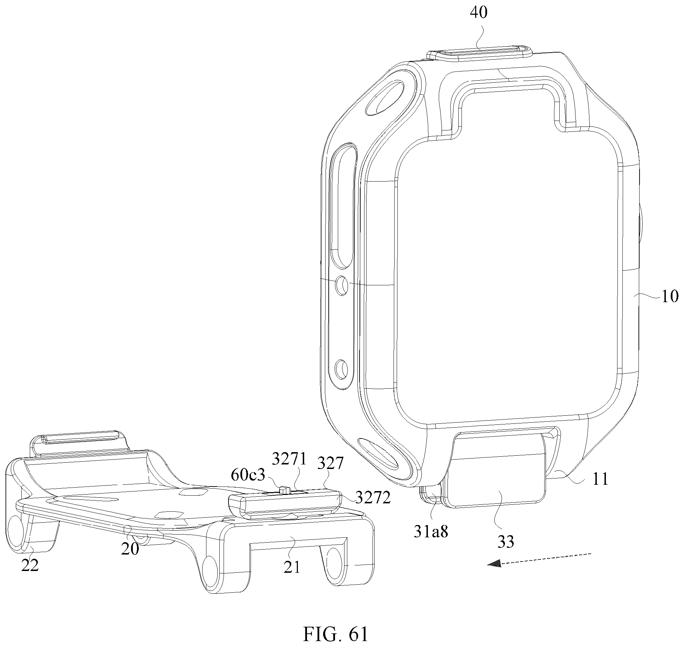

FIG. 61 is a schematic diagram of a structure in which a device body and a wrist support of a wearable device are separated according to an embodiment of this application;

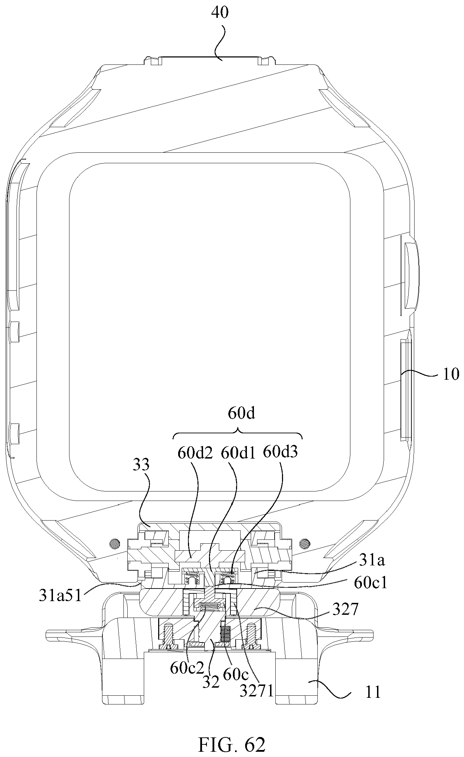

FIG. 62 is a schematic diagram of a cross-sectional structure in which a locking assembly of a wearable device is in an unlocked state according to an embodiment of this application;

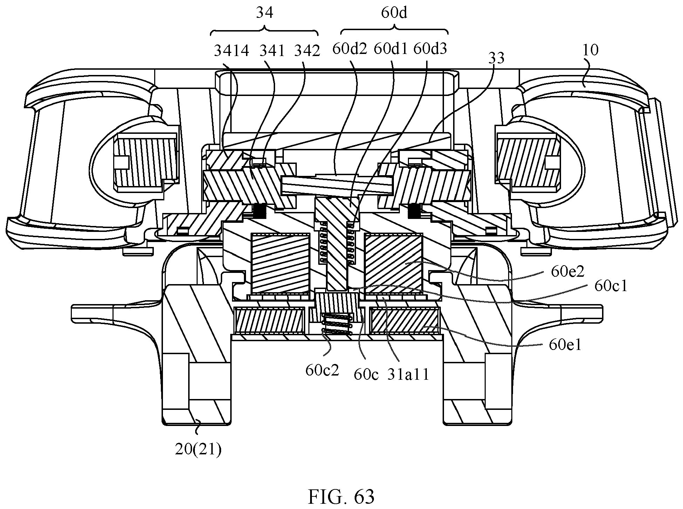

FIG. 63 is a schematic diagram of a cross-sectional structure of a device body and a wrist support of a wearable device according to an embodiment of this application; and

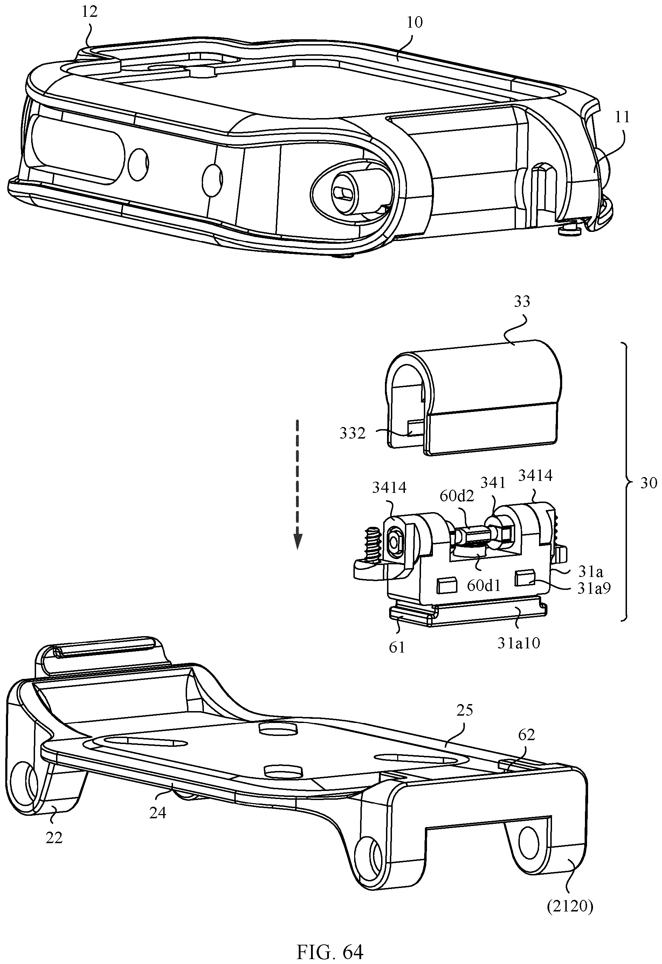

FIG. 64 is a schematic diagram of an exploded structure of a device body and a wrist support of a wearable device according to an embodiment of this application.

### Descriptions of reference numerals:

100-wearable device; 10-device body; 11-first end of the device body; 12-second end of the device body;
20-wrist support; 21-first end of the wrist support; 211-sliding space; 212-first magnet; 213-second magnet;
22-second end of the wrist support; 221-first buckling position; 222-second buckling position;
2211-second guiding slope; 23-mounting groove; 231-second hole; 24-third end of the wrist support; 25-fourth end of the wrist support;
26-barrier groove; 27-top plate; 28-step;
30-rotating shaft assembly; 31-horizontal rotating shaft; 31a-rotating shaft support; 31a1-limiting cavity; 31a2-annular track;
31a3-assembly cavity; 31a4-positioning groove; 31a5-slide rail groove; 31a51-sloping baffle; 31a6-third internal groove;
31a7-fourth internal groove; 31a8-limiting groove; 31a9-fastening protrusion; 31a10-support base;
311-cavity structure; 3111-first stepped hole;
3112-second stepped hole; 3112a-first limiting recess; 3113-third stepped hole; 3113a-second limiting recess;
3113b-third limiting recess; 312-first through hole; 312a-second through hole;
32-vertical rotating shaft; 321-first boss; 321a-second boss; 322-first fixed cam; 3221-sixth concave convex surface;
323-pressure ring; 324-lock ring;
325-slide rail support; 3251-slide rail cover; 3252-slide rail cavity; 3253-slide rail wall; 3254-positioning protrusion;
326-Z-axis support; 3261-rotation hole; 3262-sunken groove; 3263-fastening plate; 3264-blocking edge; 3265-tapered step;
327-slide rail bracket; 3271-slide rail cover; 3272-limiting protrusion part;
328-Z-axis bracket; 3281-rotating hole; 3282-blocking stage;
33-shaft housing; 331-fastening block; 332-recess;
34-rotating assembly; 341-friction shaft; 341a-first end of the friction shaft; 341b-second end of the friction shaft; 3411-shaft;
3412-fourth limiting protrusion; 3413-connection part; 3414-rotating head; 342-friction plate; 3421-fifth limiting protrusion;
3422-oil storage groove;
343-limiting piece; 3431-first limiting protrusion; 3432-second limiting protrusion; 3433-third limiting protrusion;
35-first motion cam; 35a-second motion cam; 35b-third motion cam; 36-top gasket; 37-third elastic piece;
38-bottom gasket; 39-limiting sleeve; 391-seventh concave convex surface; 392-protrusion; 393-second recess; 394-limiting block;
40-clamping assembly; 41-key; 411 -first clamping part; 4111-first guiding slope; 412-key cap;
413-key shelf; 414-seventh elastic piece; 415-guide protrusion; 416-guide groove;
42-cover; 43-keypad board; 431-pressing part; 432-second clamping part; 44-eighth elastic piece;
50-watch band; 60-locking assembly; 60a1-telescopic buckle; 60a11- buckle part;
60a12-first drive part; 60a15-third inclined surface; 60a2-first internal groove; 60a3-first slide rail spring;
60a4-rotating shaft ejector block; 60a41-second drive part; 60a42-fourth inclined surface;
60b-second locking assembly; 60b1-elastic ejector block; 60b 11-first inclined guiding surface; 60b2-second internal groove;
60b3-second slide rail spring;
60c-locking spring block; 60c1-slot; 60c2-third slide rail spring; 60c3-inclined sliding surface;
60d-unlocking structure; 60d1-rotating shaft press arm; 60d2-rotating shaft cam; 60d3-rotating shaft spring;
60e1-third magnetic piece; 60e2-fourth magnetic piece;
61-locking protrusion; 611-clamping recess; 612-slot position; 613-dent; 614-clamping hole; 615-first inclined surface;
616-first pressing spring; 617-clamping position; 618-baffle block;
61a-locking boss;
62-locking sunken groove;
621-locking sunken groove opening; 622-barrier edge; 623-recess part; 624-barrier casing; 625-clamping protrusion; 626-clamping block;
63-stopper assembly; 631-top cover; 632 and 31a11-baffle plate;
633-first elastic piece; 634-stopper; 6341-wedge-shaped groove; 6342-inclined surface; 635-pressing block button;
6351-wedge-shaped surface; 6352-first guide surface; 6353-second guide surface; 636-spring plate clamping position; 64-sliding groove;
64a-wear-resistant part; 65-sliding block; 651-first recess;
652-first connecting piece; 66-spring plate; 661-top spring plate; 662-bottom spring plate;
67-locking buckle groove; 671-locking buckle groove opening; 6711-slope; 672-stopping block; 6721-clamping groove; 68-clamping part;
681-clamping protrusion; 673-second elastic piece; 674-base baffle plate;
69-buckle groove; 69a-locking button; 69a1-button cover; 69a2-fourth elastic piece; 69a3-locking piece;
69a6-second slope; 69a4-drive part; 69a5-first slope;
69b-first magnetic piece; 69c-second magnetic piece;
69d-toggle button; 69d1-clamping rod; 69d2-lock pin;
69e-toggle switch; 69e1-operation end; 69e2-clamping end; 69e3-male buckle; 69e4-barrier sheet;
69f-locking switch; 69f1-trigger button; 69f2-first end of the locking switch; 69f3-second end of the locking switch;
69f4-hook;
69g-pressing switch; 69g 1-first end of the pressing switch; 69g2-the second end of the pressing switch; 69g3-second inclined surface;
69g4-second pressing spring;
69h-locking button; 69h1-first clamping hook; 69h2-first telescopic piece; 69h3-second telescopic piece; 69h4-second clamping hook;
69i-concession recess;
70-first base; 71-first hole; 711-upper hole; 712-lower hole; 72-first extension part;
721-second concave convex surface; 721a-arc-shaped transition surface; 73-first flange; 70a-second base; 71a-third hole;
72a-second extension part; 73a-second flange; 722a-fourth concave convex surface;
70b-third base; 70b1-third extension part; 70b2-eighth concave surface;
74-elastic arm; 741-convex hull;
75-female buckle;
76-hook groove; 761-concession space;
77-notch;
80-abutting assembly; 81-abutting block; 82-fifth elastic piece; 90-sixth elastic piece.

### DESCRIPTION OF EMBODIMENTS

A wearable device has a plurality of functions such as a video call, photographing, and music listening. In addition, the wearable device may obtain physical sign data of a wearer through an integrated sensor, to record and monitor health of a user.

In a conventional technology, a watch body of a smart watch and a band body of a smart band are fastened to a watch band, and then the smart watch and the smart band are worn on a user through the watch band. However, the watch body and the band body are fastened to the watch band. Therefore, it is difficult to adapt to functions such as a video call and photographing.

In another conventional technology, a rotating shaft is disposed between a watch body of a smart watch and a watch band and between a band body of a smart band and the watch band. The watch body and the band body may rotate relative to the watch band in a plane in which the watch body and the band body are located. However, functions such as a video call and photographing that need to adjust a plurality of angles are still greatly limited.

It can be learned from the foregoing conventional technologies that, the wearable device in the conventional technology has limited playability and scenario applicability, and still has a large limitation on scenarios such as answering a call and photographing by a watch.

Based on the foregoing problem, embodiments of this application provide a wearable device. A rotating shaft assembly is disposed between a device body and a wrist support of the wearable device. The rotating shaft assembly includes a horizontal rotating shaft and a vertical rotating shaft. The device body may rotate around the horizontal rotating shaft, or may rotate around the vertical rotating shaft. In addition, the locking assembly is disposed between the device body and the wrist support, so that the device body can be detached from the wrist support, so as to adapt to application scenarios that require multi-angle adjustment, such as a video call and photographing. The following describes a main structure of the wearable device provided in embodiments of this application with reference to the accompanying drawings and specific embodiments. In this embodiment, the wearable device is a smart watch.

### Embodiment 1

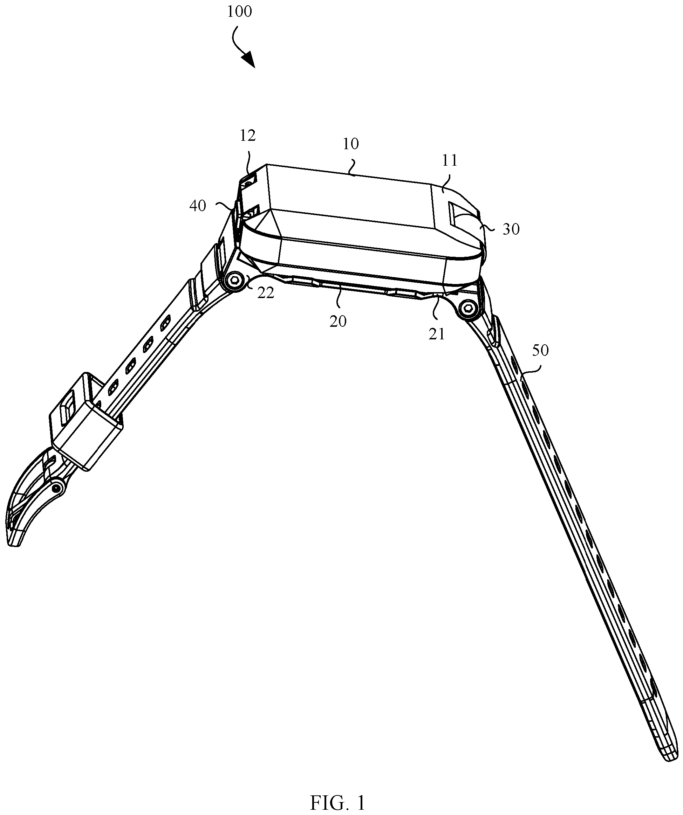

FIG. 1 is a schematic diagram of a structure of a wearable device according to an embodiment of this application. Refer to FIG. 1. An embodiment of this application provides a wearable device 100. The wearable device 100 may include a device body 10, a wrist support 20, a rotating shaft assembly 30, a clamping assembly 40, a locking assembly 60, and a watch band 50. The rotating shaft assembly 30 is disposed at a first end 11 of the device body, the clamping assembly 40 is disposed at a second end 12 of the device body, the device body 10 is fastened to the wrist support 20 through the rotating shaft assembly 30, the clamping assembly 40, and the locking assembly 60, the wrist support 20 is used to bear the device body 10, and the watch band 50 is rotatably connected to two ends of the wrist support 20, to facilitate wearing.

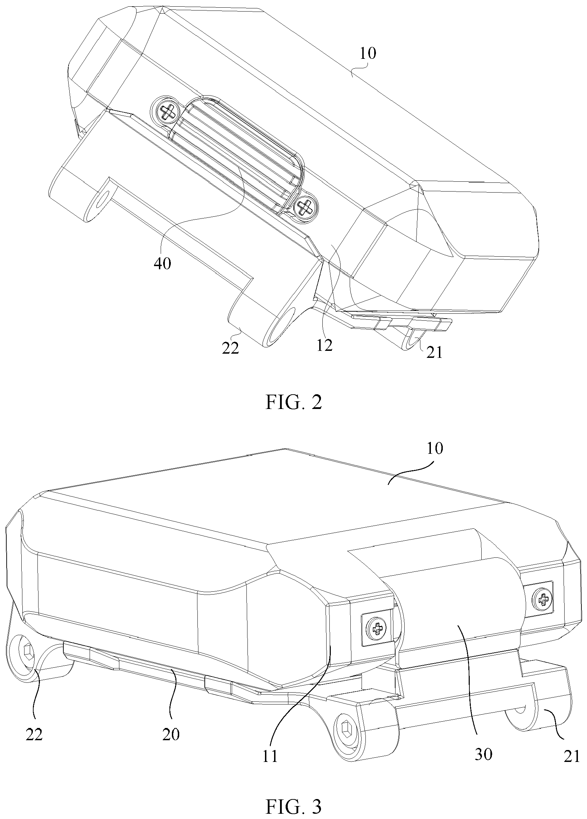

FIG. 2 is a schematic diagram of a structure of a device body and a wrist support of a wearable device according to an embodiment of this application. FIG. 3 is a schematic diagram of a structure of a device body and a wrist support of a wearable device from another angle according to an embodiment of this application. Refer to FIG. 2 and FIG. 3. Specifically, the first end 11 of the device body is fastened to the rotating shaft assembly 30 through a fastener, the rotating shaft assembly 30 is connected to a first end 21 of the wrist support, the clamping assembly 40 is fastened to the second end 12 of the device body through a fastener, and the second end 12 of the device body is clamped and connected to a second end 22 of the wrist support through the clamping assembly 40.

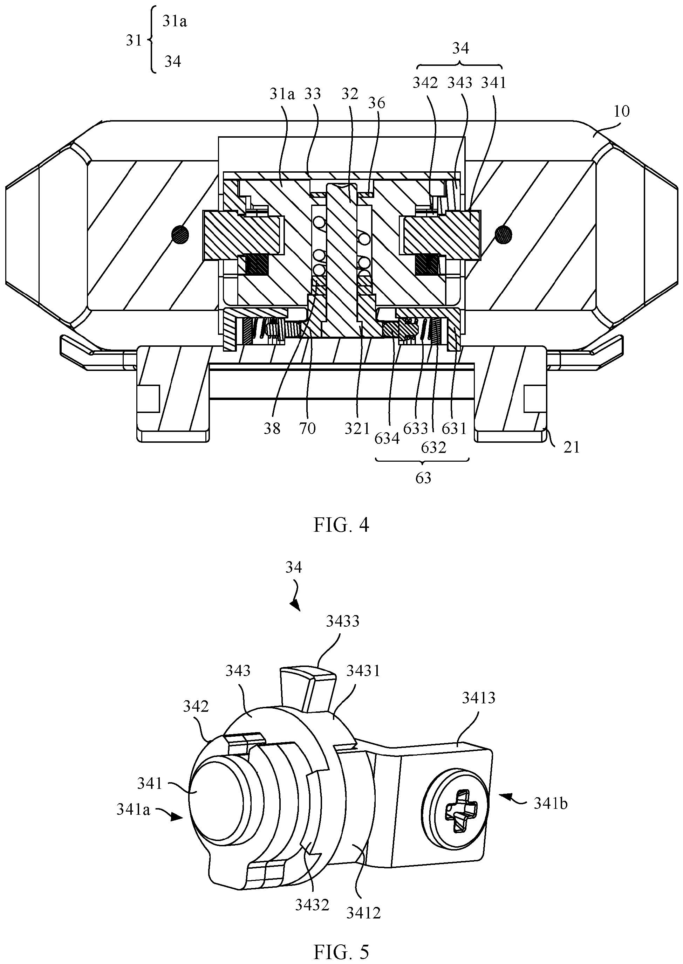

FIG. 4 is a schematic diagram of a cross-sectional structure of a device body and a wrist support of a wearable device according to an embodiment of this application. As shown in FIG. 4, the rotating shaft assembly 30 may include a horizontal rotating shaft 31 and a vertical rotating shaft 32. Two ends of the horizontal rotating shaft 31 are rotatably connected to the first end 11 of the device body, so that the device body 10 can be rotated around the horizontal rotating shaft 31. One end of the vertical rotating shaft 32 is fastened to the wrist support 20, and the vertical rotating shaft 32 is rotatably connected to the horizontal rotating shaft 31, so that the device body 10 is capable of rotating around the vertical rotating shaft 32. The rotating shaft assembly 30 further includes a rotating shaft housing 33, where the rotating shaft housing 33 is disposed around an outer side of the horizontal rotating shaft 31, an opening is disposed at one end of the surface of the rotating shaft housing 33 that is opposite to the wrist support 20, so that the vertical rotating shaft 32 can be fastened to the first end 21 of the wrist support, and the rotating shaft housing 33 is capable of protecting the horizontal rotating shaft 31. The horizontal rotating shaft 31 includes a rotating shaft support 31a and two rotating assemblies 34 disposed at two ends of the rotating shaft support 31a. An axial direction of the rotating shaft support 31a is perpendicular to an axial direction of the vertical rotating shaft 32. A cavity structure for accommodating the rotating assemblies 34 is disposed at both ends of the rotating shaft support 31a. One end of the rotating assemblies 34 is located in the cavity structure, and the other end is connected to the device body 10.

In this embodiment of this application, the horizontal rotating shaft and the vertical rotating shaft are disposed, so that the device body can not only rotate around the horizontal rotating shaft, but also rotate around the vertical rotating shaft. In this way, a multi-scenario adaptability of the wearable device can be improved.

FIG. 5 is a schematic diagram of a structure of a rotating assembly of a wearable device according to an embodiment of this application. Refer to FIG. 4 and FIG. 5. Each rotating assembly 34 may include a friction shaft 341, a friction plate 342, and a limiting piece 343. The limiting piece 343 and the two friction plates 342 are all sleeved on the friction shaft 341, the limiting piece 343 and the two friction plates 342 are all rotatably connected to the friction shaft 341, and the limiting piece 343 and the two friction plates 342 are all fastened to the rotating shaft support 31a, so that the friction shaft is capable of rotating relative to the rotating shaft support 31a. The limiting piece 343 is in contact with the friction plate 342, the limiting piece 343 is located on a side that is of the friction plate 342 and that is close to the second end 341b of the friction shaft, and the second end 341b of the friction shaft is fastened to the device body 10.

It should be noted that two ends of the horizontal rotating shaft 31 are the second ends 341b of the two friction shafts. FIG. 6 is a schematic diagram of a structure of a limiting piece of a wearable device according to an embodiment of this application. Refer to FIG. 5 and FIG. 6. A first limiting protrusion 3431 is disposed on a surface that is of the limiting piece 343 and that is close to a connection part 3413 of the friction shaft 341, a second limiting protrusion 3432 is disposed on a surface that is of the limiting piece 343 and that is close to the friction plate 342, two second limiting protrusions 3432 are disposed opposite to each other on two sides of the limiting piece 343, and a third limiting protrusion 3433 extending outward is disposed on an outer wall of the limiting piece 343. Both the second limiting protrusion 3432 and the third limiting protrusion 3433 are clamped and connected to the rotating shaft support 31a (referring to FIG. 4 and FIG. 8), so that the limiting piece 343 is fastened to the rotating shaft support 31a. The first limiting protrusion 3431 is clamped and connected to the friction shaft 341, so that the friction shaft 341 rotates to a position in contact with the first limiting protrusion 3431, and may be clamped to the first limiting protrusion 3431 to stop rotation.

FIG. 7A is a schematic diagram of a structure of a friction shaft of a wearable device according to an embodiment of this application. As shown in FIG. 7A, the friction shaft 341 includes a shaft 3411, a fourth limiting protrusion 3412, and the connection part 3413. The shaft 3411 is located at a first end 341a of the friction shaft, the connection part 3413 is located at a second end 341b of the friction shaft, and the fourth limiting protrusion 3412 extends from the connection part 3413 toward an end face of the first end of the friction shaft 341 in a direction close to the first end 341a of the friction shaft. The connection part 3413 of the friction shaft 341 is a plate structure, and the connection part 3413 is disposed on an outer edge of the shaft 3411. A mounting hole that is fastened to the device body 10 is disposed on the plate structure, and a fastener may pass through the mounting hole, so that the friction shaft 341 is fastened to the device body 10. A first end of the fourth limiting protrusion 3412 is in contact with and connected to a first end of the first limiting protrusion 3431 of the limiting piece 343, a second end of the fourth limiting protrusion 3412 extends around the shaft 3411 in a direction close to the second end of the first limiting protrusion 3431, and a gap exists between the second end of the fourth limiting protrusion 3412 and the second end of the first limiting protrusion 3431, so that the friction shaft 341 may rotate relative to the limiting piece 343 in a direction close to the second end of the first limiting protrusion 3431, until the second end of the fourth limiting protrusion 3412 is in contact with and connected to the second end of the first limiting protrusion 3431.

FIG. 7B is a schematic diagram of a structure of a friction plate of a wearable device according to an embodiment of this application. As shown in FIG. 7B, the fifth limiting protrusion 3421 is disposed on an outer edge of the friction plate 342. During assembly, the fifth limiting protrusion 3421 is clamped in the rotating shaft support 31a, so that the friction plate 342 is fastened to the rotating shaft support 31a. An oil storage groove 3422 is disposed on an inner surface of the friction plate 342. During assembly, the inner surface of the friction plate 342 is in contact with the friction shaft 341, and the friction plate 342 and the friction shaft 341 may rotate relative to each other. The oil storage groove 3422 is disposed on the inner surface of the friction plate 342, and lubricating oil may be disposed in the oil storage groove 3422. In this way, friction force between the friction shaft 342 and the friction plate 342 can be reduced, so that abrasion between the friction shaft 342 and the friction plate 342 can be reduced, thereby prolonging service lives of the friction shaft 342 and the friction plate 342.

It should be noted that, because the friction shaft 341 is fastened to the device body 10, and the friction shaft 341 is rotatably connected to the limiting piece 343 and the friction plate 342, that is, the device body 10 is rotatably connected to the limiting piece 343 and the friction plate 342, and the friction plate 342 and the limiting piece 343 are fastened to the rotating shaft support 31a, the device body 10 is rotatably connected to the rotating shaft support 31a. Therefore, the device body 10 may rotate around the rotating shaft support 31a. The horizontal rotating shaft 31 includes the rotating shaft support 31a and the rotating assembly 34. Therefore, the device body 10 flips around the rotating shaft support 31a, which is equivalent to a case in which the device body 10 flips around the rotating shaft support 31a. In addition, an angle by which the friction shaft 341 rotates relative to the limiting piece 343 may be determined based on sizes of the first limiting protrusion 3431 and the fourth limiting protrusion 3412. A range of a rotation angle between the device body 10 and the rotating shaft support 31a may be adjusted by adjusting the sizes of the first limiting protrusion 3431 and the fourth limiting protrusion 3412.

It should be noted that, the friction shaft 341 may be fastened to the device body 10 through a fastener, or may be connected to the device body 10 through clamping, riveting, or the like. A specific connection manner does not constitute a limitation on the protection scope of the technical solutions of this application, provided that the friction shaft 341 and the device body 10 can be fastened, which falls within the protection scope of the technical solutions of this application. FIG. 8 is a schematic diagram of a structure of a rotating shaft support of a wearable device according to an embodiment of this application. FIG. 9 is a schematic diagram of a cross-sectional structure of a rotating shaft support of a wearable device according to an embodiment of this application. Refer to FIG. 8 and FIG. 9. A cavity structure 311 for accommodating the rotating assembly 34 is disposed on the rotating shaft support 31a, where the first end 341a of the friction shaft is located in the cavity structure 311 of the rotating shaft support 31a, the friction plate 342 and the limiting piece 343 are both located in the cavity structure 311, the friction plate 342 is clamped and fastened in the rotating shaft support 31a, and the limiting piece 343 is also clamped and fastened in the rotating shaft support 31a. A first through hole 312 is disposed in the rotating shaft support 31a, where an axis of the first through hole 312 is perpendicular to an axis of the rotating shaft support 31a, and the first through hole 312 may be used to accommodate a part of the vertical rotating shaft 32.

In this embodiment, the cavity structure 311 of the rotating shaft support 31a that accommodates the rotating assembly 34 includes three stepped holes, where a first stepped hole 3111 is located on the inner side, a second stepped hole 3112 is located in the middle, and a third stepped hole 3113 is located on the outer side. In this embodiment, an inner diameter of the first stepped hole 3111 is greater than that of the second stepped hole 3112, and an inner diameter of the second stepped hole 3112 is greater than that of the third stepped hole 3113. In addition, a first limiting recess 3112a that fits the fifth limiting protrusion 3421 of the friction shaft 341 is disposed on an inner wall of the second stepped hole 3112, a second limiting recess 3113a that fits the second limiting protrusion 3432 of the limiting piece 343 is disposed on an inner wall of the third stepped hole 3113, and a third limiting recess 3113b that fits the third limiting protrusion 3433 of the limiting piece 343 is further disposed on a side wall of the third stepped hole 3113.

During assembly (referring to FIG. 4), the first end 341a of the friction shaft is located in the first stepped hole 3111 and is rotatably connected to the first stepped hole 3111. The two friction plates 342 are located in the second stepped hole 3112, and the fifth limiting protrusion 3421 of the friction plates 342 is clamped into the first limiting recess 3112a. The limiting piece 343 is located in the third stepped hole 3113, the second limiting protrusion 3432 of the limiting piece 343 is clamped into the second limiting recess 3113a, and the third limiting protrusion 3433 is clamped into the third limiting groove.

FIG. 10 is an exploded view of a device body and a wrist support of a wearable device according to an embodiment of this application. As shown in FIG. 10, in this embodiment of this application, the wearable device 100 may further include a locking assembly 60. When the locking assembly 60 is in a locked state, the locking assembly 60 locks the rotating shaft assembly 30 and the wrist support 20 (as shown in FIG. 3), so that the first end 11 of the device body is connected to the first end 21 of the wrist support. When the locking assembly 60 is in an unlocked state, the rotating shaft assembly 30 is disassembled from the wrist support 20 (as shown in FIG. 10 and FIG. 34 below), so that the first end 11 of the device body is separated from the first end 21 of the wrist support.

As an explanation, the locked state is a state in which the device body 10 is fastened to the wrist support 20, and the unlocked state is a state in which the device body 10 is separated from the wrist support 20.

In some embodiments, when the locking assembly 60 is in the locked state, the locking assembly 60 may lock the rotating shaft assembly 30 and the device body 10 (as shown in FIG. 23 below), so that the first end 11 of the device body is connected to the first end 21 of the wrist support. When the locking assembly 60 is in the unlocked state, the rotating shaft assembly 30 is disassembled from the device body 10 (as shown in FIG. 24 below), so that the first end 11 of the device body is separated from the first end 21 of the wrist support.

In some other embodiments, when the locking assembly 60 is in the locked state, the locking assembly 60 locks and connects the vertical rotating shaft 32 and the horizontal rotating shaft 31 so that the first end 11 of the device body is connected to the first end 21 of the wrist support, and when the locking assembly 60 is in the unlocked state, the horizontal rotating shaft 31 and the vertical rotating shaft 32 (as shown in FIG. 37 below) are disassembled, so that the first end 11 of the device body is separated from the first end 21 of the wrist support.

FIG. 11 is a schematic diagram of a structure of a wrist support of a wearable device according to an embodiment of this application. Refer to FIG. 10 and FIG. 11. The locking assembly 60 includes a locking sunken groove 62 and a locking protrusion 61. Both the locking sunken groove 62 and the locking protrusion 61 are of a U-shaped structure. The locking sunken groove 62 is located on the wrist support 20, the locking protrusion 61 is located at the bottom end of the vertical rotating shaft 32, and one side of the locking sunken groove 62 is provided with an opening 621 for the locking protrusion 61 to slide into the locking sunken groove horizontally. The top end of the locking sunken groove 62 is provided with a barrier edge 622. When the locking protrusion 61 is located in the locking sunken groove 62, the barrier edge 622 locks the locking protrusion 61 in the locking sunken groove 62 in the axial direction of the vertical rotating shaft 32, so that one end of the vertical rotating shaft 32 is connected to the first end 21 of the wrist support.

It should be noted that a direction of the locking sunken groove opening 621 does not constitute a limitation on the protection scope of the technical solution of this application. The locking sunken groove opening 621 may face the first end 21 of the wrist support, the second end 22 of the wrist support, the third end 24 of the wrist support, or the fourth end 25 of the wrist support. Certainly, in some embodiments, the locking sunken groove opening 621 may further face the top end of the wrist support 20, or the like. This is not specifically limited in embodiments of this application. In this embodiment, the locking sunken groove 62 is set on the wrist support 20, and the locking protrusion 61 is set on the bottom end of the vertical rotating shaft 32. Certainly, in other embodiments, the locking sunken groove 62 may also be set on the bottom end of the vertical rotating shaft 32, and then the locking protrusion 61 is set on the wrist support 20, that is, provided that one of the locking sunken groove 62 and the locking protrusion 61 is disposed at the bottom end of the vertical rotating shaft 32, and the other one is disposed on the wrist support 20.

In this embodiment of this application, by disposing the locking sunken groove 62 and the locking protrusion 61, the device body 10 and the wrist support 20 may be detachably connected. In this way, in some scenarios, the device body 10 may be detached from the wrist support 20 for separate use. When the detached device body 10 performs a video call and photographing, an angle may be adjusted randomly based on a requirement, thereby greatly improving a multi-scenario adaptability of the wearable device 100.

FIG. 12 is a schematic diagram of a structure of a first base of a wearable device according to an embodiment of this application. FIG. 13 is a schematic diagram of a structure of a first base of a wearable device from another angle according to an embodiment of this application. Refer to FIG. 12 and FIG. 13. A first base 70 is disposed at a bottom end of the vertical rotating shaft 32, and the bottom end of the vertical rotating shaft 32 is fixedly disposed in the first base 70; a locking protrusion 61 is located at one end of the first base 70 close to the wrist support 20; the first base 70 is provided with a first hole 71 that can be passed through by one end of the vertical rotating shaft 32; and the bottom end of the vertical rotating shaft 32 is provided with a first boss 321 (see FIG. 15). A first flange 73 that blocks the first boss 321 is disposed on the top inner wall of the first hole 71. In addition, clamping recesses 611 may be further disposed on two sides of the locking protrusion 61, so as to ensure stability of connection between the locking protrusion 61 and the locking sunken groove 62.

In this embodiment, as shown in FIG. 13, the first hole 71 includes an upper hole 711 and a lower hole 712, where the lower hole 712 is disposed close to the wrist support 20, and an inner wall of the upper hole 711 is an inner wall of a flange. A shape of the lower hole 712 is the same as a shape of the first boss 321, and the first boss 321 is clamped on the first flange 73, so that the vertical rotating shaft 32 is not pulled out from the upper hole 711. In this way, the device body 10 can be prevented from being detached from the first base 70, and the wearable device 100 can be prevented from being damaged.

FIG. 14 is a schematic diagram of a partial structure of a rotating shaft assembly of a wearable device according to an embodiment of this application. FIG. 15 is an exploded view of FIG. 14. As shown in FIG. 14 and FIG. 15, a first through hole 312 (as shown in FIG. 9) that can be partially accommodated by the vertical rotating shaft 32 is disposed in the rotating shaft support 31a. The rotating shaft assembly 30 may further include a first motion cam 35, where the first motion cam 35 is sleeved on the vertical rotating shaft 32 and is rotatably connected to the vertical rotating shaft 32, the first motion cam 35 may slide up and down relative to the vertical rotating shaft 32, and the first motion cam 35 is located in the first through hole 312 and is fastened to the first through hole 312 (referring to FIG. 4), that is, the first motion cam 35 is fastened to the rotating shaft support 31a. As shown in FIG. 12 and FIG. 13, the first base 70 is provided with a first extension part 72 extending into the first through hole 312, the first motion cam 35 abuts against the first extension part 72, the first hole 71 extends to a top end face of the first extension part 72, and the first flange 73 is located on the first extension part 72. A surface that is of the first motion cam 35 and that faces the first extension part 72 is formed into a first concave convex surface that is uneven, a surface that is of the first extension part 72 and that faces the first motion cam 35 is formed into a second concave convex surface 721 that cooperates with a concave part of the first concave convex surface, and an arc-shaped transition surface 721a is disposed between a convex part of the first concave convex surface and a concave part of the second concave convex surface 721, so that the first motion cam 35 is rotatably connected to the first base 70.

It should be noted that, in a use process, the device body 10 flips to drive the friction shaft 341 to rotate around an axial direction of the friction shaft 341 relative to the rotating shaft support 31a, and the device body 10 rotates to drive the horizontal rotating shaft 31 to rotate around an axial direction of the vertical rotating shaft 32. The first motion cam 35 is fastened to the rotating shaft support 31a, which is equivalent to being fastened to the horizontal rotating shaft 31, and two ends of the horizontal rotating shaft 31 are fastened to the device body 10. Therefore, the device body 10 rotates to drive the rotating shaft support 31a to rotate around the vertical rotating shaft 32, and the device body 10 rotates to drive the first motion cam 35 to rotate around the vertical rotating shaft 32. The arc-shaped transition surface 721a is disposed between the convex part and the concave part of the first concave convex surface and the second concave convex surface 721. In one aspect, when the device body 10 is not subject to force, the device body 10 does not rotate randomly. In another aspect, when the device body 10 is subject to rotation force, transition between the first motion cam 35 and the first extension part 72 may be smooth, so as to implement relative rotation between the first motion cam 35 and the first extension part 72. In addition, the first concave convex surface is disposed on the first motion cam, and the arc-shaped transition surface 721a is disposed between the convex part and the concave part of the first concave convex surface and the second concave convex surface 721, so that the first motion cam may also play a prompt role when the first motion cam rotates to a specific angle. For example, when the first motion cam rotates to zero degrees or 180°, the torsion force decreases.

In this embodiment, the rotating shaft assembly 30 may further include a third elastic piece 37, a top gasket 36, and a bottom gasket 38, where the bottom gasket 38 is sleeved on the vertical rotating shaft 32 and abuts against the first motion cam 35, the top gasket 36 is sleeved on the top end of the vertical rotating shaft 32 and is rotatably connected to the rotating shaft support 31a, the third elastic piece 37 is sleeved on the vertical rotating shaft 32, and two ends of the third elastic piece 37 are respectively connected to the top gasket 36 and the bottom gasket 38.

In this embodiment of this application, the third elastic piece 37 may be a spring, and an initial state of the spring during mounting is a compressed state. In this way, it can be ensured that the first extension part 72 of the first base 70 is in a press-off state with the first fixed cam 322, so as to ensure that the device body 10 does not rotate randomly without rotation torque force. When the device body 10 rotates, the device body 10 is subject to the rotary torque force, so that the first fixed cam 322 is subject to the rotary torque force. In this way, the first motion cam 35 moves along the arc-shaped transition surface 721a, and slides along the vertical rotating shaft 32 in a direction away from the wrist support 20. In this case, the first motion cam 35 squeezes the third elastic piece 37, so that the third elastic piece 37 is compressed, when the first motion cam 35 hovers, the third elastic piece 37 restores to an initial state. In this case, the first motion cam 35 abuts against the first extension part 72 of the first base 70.

It should be noted that, in this embodiment, one end of the vertical rotating shaft 32 is rotatably connected to the rotating shaft support 31a, which is equivalent to that one end of the vertical rotating shaft 32 is rotatably connected to the horizontal rotating shaft 31, and the bottom end of the vertical rotating shaft 32 is fastened to the first end 21 of the wrist support, so that the device body 10 may rotate around the vertical rotating shaft 32.

In some embodiments, the vertical rotating shaft 32 may also be rotatably connected to the first end 21 of the wrist support, and the vertical rotating shaft 32 is fastened to the horizontal rotating shaft 31. In this way, the device body 10 may also rotate around the vertical rotating shaft 32. That is, at least one end of the vertical rotating shaft 32 is connected to at least one of the first end 21 of the wrist support and the horizontal rotating shaft 31 in a horizontal manner, so as to ensure that the device body 10 is capable of rotating around the vertical rotating shaft 32.

In addition, it should be noted that, because the rotating shaft support 31a is a part of the horizontal rotating shaft 31, and the vertical rotating shaft 32 is disposed inside the rotating shaft support 31a, the vertical rotating shaft 32 is fastened to the rotating shaft support 31a, which is equivalent to that the vertical rotating shaft 32 is fastened to the horizontal rotating shaft 31. At least one end of the vertical rotating shaft 32 is connected to at least one of the first end 21 of the wrist support and the rotating shaft support 31a in a horizontal manner, which is equivalent to that the at least one end of the vertical rotating shaft 32 is connected to at least one of the first end 21 of the wrist support and the horizontal rotating shaft 31 in a horizontal manner.

In this embodiment, the locking assembly 60 may further include a stopper assembly 63, where the stopper assembly 63 is disposed on the wrist support 20, and the two stopper assemblies 63 are respectively located on two sides of the locking sunken groove 62 (as shown in FIG. 11). Certainly, in some embodiments, the quantity of stopper assemblies 63 may also be one or three, and the quantity of stopper assemblies 63 is not limited.

FIG. 16 is a schematic diagram of a structure of a wrist support of a wearable device from another angle according to an embodiment of this application. FIG. 17 is a locally enlarged schematic diagram of a position at which a stopper assembly is disposed on a wrist support of a wearable device according to an embodiment of this application. As shown in FIG. 16 and FIG. 17, mounting grooves 23 for mounting a stopper assembly 63 are respectively disposed on two sides of the wrist support 20, and a second hole 231 in communication with the locking sunken groove 62 is disposed on a side wall of each mounting groove 23 close to the locking sunken groove 62. A first end of the stopper assembly 63 passes through the second hole 231 and extends to the locking sunken groove 62, and a second end of the stopper assembly 63 is fastened in the mounting groove 23.

As shown in FIG. 17, the stopper assembly 63 includes a top cover 631, a baffle plate 632, a first elastic piece 633, and a stopper 634, where the baffle plate 632 is fastened in the mounting groove 23, a first end of the stopper 634 passes through the second hole 231 and extends to the locking sunken groove 62, and a second end of the stopper 634 is sleeved on the first elastic piece 633. One end of the first elastic piece 633 is sleeved on the second end of the stopper 634 located in the mounting groove 23, and the other end of the first elastic piece 633 abuts against the baffle plate 632. The top cover 631 is located on the top end of the mounting groove 23 and is fastened to the wrist support 20.

FIG. 18 is a schematic diagram of a structure of a baffle plate, a first elastic piece, and a stopper of a stopper assembly of a wearable device according to an embodiment of this application. As shown in FIG. 18, in this embodiment, the first end of the stopper 634 is a hemispherical protrusion, and a clamping recess 611 fitting the hemispherical protrusion is disposed on the locking protrusion 61; when the hemispherical protrusion slides into the clamping recess 611, the locking assembly 60 is in a locked state. When the hemispherical protrusion slides out of the clamping recess 611, the locking assembly 60 is in an unlocked state. A stop part protruding outward is disposed on the stopper 634, and the stop part is located in the mounting groove 23 and abuts against the side wall of the mounting groove 23. The clamping recess 611 may be a hemispherical recess.

It should be noted that a shape of the first end of the stopper 634 includes but is not limited to a hemispherical protrusion, and a shape of the clamping recess 611 includes but is not limited to a hemispherical recess. Any structure that can cooperate with each other and play a specific fastening function falls within the protection scope of the technical solutions of this application.

In this embodiment, the stopper assembly 63 is disposed, so that when the locking protrusion 61 enters the locking sunken groove 62, the locking protrusion 61 can be fastened in the locking sunken groove 62, and the stopper assembly 63 may further reinforce the connection between the locking protrusion 61 and the locking sunken groove 62. This ensures that the device body 10 does not fall down because the device body 10 is separated from the wrist support 20 due to a weight of the device body 10. In addition, the stopper assembly 63 is disposed, so that shaking in an assembly process can be further reduced, and a touch feeling of pushing and pulling, and detachment is improved.

FIG. 19 is a locally enlarged view of a sectional view of a device body and a wrist support of a wearable device according to an embodiment of this application. Refer to FIG. 19. The second end 12 of the device body and the second end 22 of the wrist support are clamped and connected through a clamping assembly 40. The clamping assembly 40 may include a key 41, where a first clamping part 411 is disposed at a bottom end of the key 41, and a first buckling position 221 clamped to the first clamping part 411 is disposed on the wrist support 20. The first clamping part 411 extends in a direction away from the device body 10, and the first buckling position 221 extends in a direction close to the device body 10. The key 41 is telescopically disposed on a side surface of the second end 12 of the device body, and the device body 10 and the wrist support 20 are detachably connected through clamping of the first clamping part 411 and the first buckling position 221. In addition, when the key 41 is pressed, the first clamping part 411 is released from clamping to the first buckling position 221, so that the second end 12 of the device body is detached from the second end 22 of the wrist support.

As shown in FIG. 19, the key 41 includes a key cap 412, a key shelf 413, and a seventh elastic piece 414. The key shelf 413 is disposed on a second end 12 of the device body, and two ends of the key shelf 413 are fastened to the second end 12 of the device body. One end of the seventh elastic piece 414 is connected to a side of the key cap 412 facing the device body 10, and the other end of the seventh elastic piece 414 is connected to the key 41. A bottom end of the key cap 412 is provided with a first clamping part 411.

It should be noted that, the two ends of the key shelf 413 may be fastened to the second end 12 of the device body through a fastener, or may be fastened in other manners, for example, through jointing, bonding, or welding. A manner of fastening the two ends of the key shelf 413 to the device body 10 does not constitute a limitation on the protection scope of the technical solutions of this application, provided that the two ends of the key shelf 413 can be fastened to the device body 10. In this embodiment, as shown in FIG. 19, a guide protrusion 415 is disposed on a side that is of the key 41 and that faces the device body 10, the guide protrusion 415 is provided with a through hole through which one end of the seventh elastic piece 414 is capable of extending; and a guide groove 416 that can move the guide protrusion 415 is disposed on the key shelf 413. One end of the seventh elastic piece 414 is connected to the groove bottom of the guide groove 416, and the other end of the seventh elastic piece 414 extends into the through hole of the guide protrusion 415 and is connected to the key cap 412. A side of the key cap 412 that is opposite to the device body 10 is provided with a plurality of uneven bumps and recesses that are not flat. In addition, one of the protrusions located at the bottom end of the key cap 412 forms a first clamping part 411, the first clamping part 411 is provided with a first guiding slope 4111, and the wrist support 20 is provided with a second guiding slope 2211 cooperating with the first guiding slope 4111.

In an actual application process, when the key cap 412 is squeezed, the key cap 412 compresses the seventh elastic piece 414, so that the key cap 412 moves in a direction close to the device body 10, so that the first clamping part 411 is released from clamping to the first buckling position 221, so that the second end 12 of the device body is detached from the second end 22 of the wrist support. It should be noted that, during mounting, the seventh elastic piece 414 is in a compressed state. In this way, it can be ensured that the first clamping part 411 of the key cap 412 is clamped to the first buckling position 221, so that the device body 10 is fastened to the wrist support 20.

It should be noted that a structure of the clamping assembly 40 includes but is not limited to the structure in the foregoing embodiments. In some embodiments, the clamping assembly 40 may be of another structure. For example, FIG. 20 is a schematic diagram of another structure of a device body and a wrist support of a wearable device according to an embodiment of this application. As shown in FIG. 20, a clamping assembly 40 is disposed on the second end 12 of the device body, and the clamping assembly 40 detachably connects the second end 12 of the device body to the second end 22 of the wrist support. The clamping assembly 40 includes a cover 42 and a keypad board 43. A pressing part 431 protruding outward is provided on a side of the keypad board 43 facing the device body 10. The cover 42 is provided with an opening for the pressing part 431 to pass through. The cover 42 is fastened to the device body 10. The keypad board 43 is disposed on a side surface of the second end 12 of the device body.

FIG. 21 is a schematic diagram of a local section of a clamping assembly of a wearable device according to an embodiment of this application. Refer to FIG. 21. A second clamping part 432 is disposed at the bottom ends of the two ends of the keypad board 43 respectively, the second clamping part 432 extends in a direction away from the device body 10, a second buckling position clamped to the second clamping part 432 is disposed on the wrist support 20, and the second buckling position extends toward the second clamping part 432. The device body 10 and the wrist support 20 are detachably connected through clamping of the clamping part and the second buckling position.

FIG. 22A is a schematic diagram of another local section of a clamping assembly of a wearable device according to an embodiment of this application. As shown in FIG. 22A, the clamping assembly 40 may further include an eighth elastic piece 44, where one end of the eighth elastic piece 44 is connected to the device body 10, the other end of the eighth elastic piece 44 is connected to the keypad board 43, and the keypad board 43 is telescopically disposed on the device body 10 through the eighth elastic piece 44.

It should be noted that, the cover 42 and the device body 10 may be fastened through a fastener, or may be fastened in another manner, for example, through denting, bonding, or welding. A manner of fastening the two ends of the key shelf 413 to the device body 10 does not constitute a limitation on the protection scope of the technical solutions of this application, provided that the two ends of the key shelf 413 can be fastened to the device body 10.

According to the wearable device provided in embodiments of this application, the rotating shaft assembly is disposed, so that the device body is capable of rotating around the horizontal rotating shaft and the vertical rotating shaft, and the device body can be separated from the wrist support by disposing the locking sunken groove and the locking protrusion. When the device body is worn, the second end of the device body is clamped and connected to the second end of the wrist support through the clamping assembly, so as to facilitate wearing. When the device body is opened, the clamping assembly may be pressed to lift the device body, so that the second end of the device body is separated from the second end of the wrist support. Under the action of the rotating shaft assembly, the device body may rotate around the horizontal rotating shaft, or may rotate around the vertical rotating shaft, thereby improving playability and mechanical sense of the wearable device. In addition, when the clamping assembly is opened, the device body may be pulled out from the locking sunken groove on the wrist support, so that the device body is completely separated from the wrist support, thereby improving adaptability to a plurality of scenarios. In addition, a detachable connection is implemented between the locking sunken groove and the locking protrusion in a push-pull manner. This is easy to operate and can reduce learning time of a user.

It should be noted that, the structure of the locking assembly 60 includes but is not limited to the structure described in the foregoing embodiments. In some embodiments, the locking assembly 60 may also be of another structure. The following specifically describes several embodiments in which a detachable connection is implemented between the locking sunken groove 62 and the locking protrusion 51 in a push-pull manner.

### Embodiment 2

FIG. 22B is a schematic diagram of a cross-sectional structure of a device body and a wrist support of a wearable device according to an embodiment of this application. FIG. 22C is a schematic diagram of another cross-sectional structure of a device body and a wrist support of a wearable device according to an embodiment of this application.

As shown in FIG. 22B and FIG. 22C, the locking assembly 60 may further include a pressing block button 635, where the pressing block button 635 is located between the stopper assembly 63 and the rotating shaft assembly 30, and when the horizontal rotating shaft 31 of the rotating shaft assembly 30 is located in the x direction, the bottom end of the rotating shaft support 31a may squeeze the pressing block button 635 to the inside of the stopper assembly 63, so that the stopper assembly 63 locks the locking protrusion 61 into the locking sunken groove 62.

In this embodiment, the quantity of the pressing block buttons 635 is two, the quantity of the stopper assemblies 63 is two, the two stopper assemblies 63 are respectively located on two sides of the locking sunken groove 62, and one stopper assembly 63 is correspondingly disposed for each pressing block button 635. Certainly, in some embodiments, one, three, or more pressing block buttons 635 may be disposed, and a quantity of the pressing block buttons 635 is not limited. It should be noted that, by disposing the two pressing block buttons 635 and the two stopper assemblies 63, locking force may be strengthened, thereby prolonging a service life of the stopper assemblies 63 and the pressing block buttons 635.

In a possible implementation, the stopper assembly 63 may include a top cover 631, a first elastic piece 633, and a stopper 634, where a part of structures of the first elastic piece 633 and the stopper 634 are disposed in the mounting groove 23, a first end of the stopper 634 passes through the second hole 231 and extends to the locking sunken groove 62, and a second end of the stopper 634 is fastened to one end of the first elastic piece 633, the other end of the first elastic piece 633 is fastened to the side wall of the top cover 631. The top cover 631 is located on the top end of the mounting groove 23 and is fastened to the wrist support 20. As shown in FIG. 22B and FIG. 22D, a wedge-shaped surface 6351 is provided at a bottom end of the pressing block button 635, a stopper 634 of the stopper assembly 63 is provided with a wedge-shaped groove 6341 that can be extended into the bottom end of the pressing block button 635, and an inclined surface 6342 that matches the wedge-shaped surface 6351 is provided in the wedge-shaped groove 6341. The wedge-shaped surface 6351 is used to cooperate with the inclined surface 6342 when the pressing block button 635 is moved downward, so that the stopper assembly 63 moves toward the locking sunken groove 62; and the inclined surface 6342 is used to cooperate with the wedge-shaped surface 6351 when the stopper assembly 63 moves away from the locking sunken groove 62, so that the pressing block button 635 is moved upward.

For example, the first elastic piece 633 includes but is not limited to a spring, and the first elastic piece 633 may be a pull spring. When the pressing block button 635 is moved down, the wedge-shaped surface 6351 cooperates with the inclined surface 6342, the stopper 634 moves toward the locking sunken groove 62, and the first elastic piece 633 is stretched. When the pressure on the top end of the pressing block button 635 is released, the stopper 634 moves, under the action of the first elastic piece 633, in a direction away from the locking sunken groove 62, and the wedge-shaped surface 6351 cooperates with the inclined surface 6342, so that the pressing block button 635 moves upward. As shown in FIG. 22B, the two pressing block buttons 635 are respectively disposed on tops of the two stopper assemblies 63, and the pressing block buttons 635 are telescopically disposed on a side of the wrist support facing the horizontal rotating shaft 31. When the horizontal rotating shaft 31 rotates to press the pressing block button 635, the pressing block button 635 is moved downward and the bottom end of the pressing block button 635 is pressed on the stopper assembly 63, so as to prevent the stopper assembly 63 from moving away from the locking sunken groove 62, so that the locking protrusion 61 is locked in the locking sunken groove 62, and the device body 10 is prevented from falling off from the wrist support. When the horizontal rotating shaft 31 rotates to be moved up from the pressing block button 635, pressure on a side of the pressing block button 635 close to the device body 10 is released, the stopper 634 moves, under the action of the first elastic piece 633, in a direction away from the locking sunken groove 62, and the wedge-shaped surface 6351 cooperates with the inclined surface 6342, so that the pressing block button 635 is moved up and the top end of the pressing block button 635 extends outward from the side of the wrist support facing the horizontal rotating shaft 31. The stopper assembly 63 moves, under the action of the first elastic piece 633, in a direction away from the locking sunken groove 62, so that the locking protrusion 61 and the locking sunken groove 62 are in an unlocked state, so as to remove the device body 10 from the wrist support.

In this embodiment of this application, because the pressing block button 635 is disposed, a through hole for the pressing block button 635 to pass through is disposed on the top cover 631 of the stopper assembly 63. One end of the pressing block button 635 extends into the mounting groove 23 through the through hole, the other end is located outside the top cover 631, and the pressing block button 635 is telescopic up and down relative to the top cover 631.

It should be noted that the cooperation between the inclined surface 6342 and the wedge-shaped surface 6351 may change a telescopic motion in a vertical direction to a telescopic motion in a horizontal direction. That is, when the pressing block button 635 is pressed, a telescopic motion in a vertical direction may be changed to a telescopic motion in a horizontal direction of the stopper 634. When the pressure on the pressing block button 635 is released, the telescopic motion of the stopper 634 in the horizontal direction may be changed to an up-down telescopic motion of the pressing block button 635.

In this embodiment of this application, when the pressing block button 635 is pressed to move downward, the stopper 634 moves toward a direction close to the locking sunken groove 62, so that the first end of the stopper 634 is clamped and connected to the clamping recess 611 of the locking protrusion 61 (as shown in FIG. 22C), and the wrist support is fastened to the device body 10. After the pressing block button 635 is released, the stopper 634 moves, under the action of the first elastic piece 633, in a direction away from the locking sunken groove 62, so that the first end of the stopper 634 moves out of the clamping recess 611 of the locking protrusion 61, and the wrist support and the device body 10 are unlocked, so that the wrist support can be separated from the device body 10. Because the wedge-shaped surface 6351 cooperates with the inclined surface 6342, when the stopper 634 moves in a direction away from the locking sunken groove 62, the pressing block button 635 moves upward, and the top end of the pressing block button 635 extends outward from the side of the wrist support facing the horizontal rotating shaft 31.

In an actual application process, when both ends of the device body 10 are fastened to the wrist support 20, when the device body 10 rotates around the horizontal rotating shaft 31 (that is, the x axis in FIG. 22B), and when the device body 10 rotates around the vertical rotating shaft (that is, the z axis in FIG. 22B) by no more than 90° or -90°, the rotating shaft support 31a is pressed on the pressing block button 635, in this case, the first end of the stopper 634 is clamped and connected to the clamping recess 611 of the locking protrusion 61, and the wrist support is fastened to the device body 10. When the device body 10 rotates around the vertical rotating shaft (that is, the z axis in FIG. 22B) by 90° or -90°, the rotating shaft support 31a is moved upward from the pressing block button 635, and the pressing block button 635 is moved upward, the first end of the stopper 634 moves out of the clamping recess 611 of the locking protrusion 61, and the device body 10 and the wrist support are unlocked. In this case, the device body 10 and the wrist support may be separated. FIG. 22D is a schematic diagram of a structure of a pressing block button of a wearable device according to an embodiment of this application. As shown in FIG. 22D, to facilitate rotation of the device body 10, the top end of the pressing block button 635 may be further provided with a first guide surface 6352 and a second guide surface 6353 that are inclined. The first guide surface 6352 is used to guide, when the horizontal rotating shaft 31 rotates in a first direction, the horizontal rotating shaft 31 to rotate to the pressing block button 635. The second guide surface 6353 is used to guide, when the horizontal rotating shaft 31 rotates in a second direction, the horizontal rotating shaft 31 to rotate to the pressing block button 635. One of the first direction and the second direction is a counterclockwise direction, and the other is a clockwise direction.

According to the wearable device provided in embodiments of this application, the first guide surface 6352 and the second guide surface 6353 that are inclined are disposed at the top end of the pressing block button 635, so that when the device body 10 rotates, the rotating shaft support 31a is capable of rotating to the pressing block button 635, and the stopper assembly 63 locks the locking protrusion 61 in the locking sunken groove 62.

According to the wearable device provided in embodiments of this application, the pressing block button 635 is disposed, so that the device body 10 of the wearable device can be separated from the wrist support 20 only after the device body 10 rotates to a specific position. This can prevent the device body 10 from accidentally falling off from the wrist support 20, and improve stability of the connection between the wrist support and the device body 10.

It should be noted that, with reference to FIG. 4 and FIG. 22B, in this embodiment of this application, compared with the structure in Embodiment 1, only a structure of the stopper assembly 63 is changed corresponding to the pressing block button 635, and other structures may be the same as the structure in Embodiment 1. Therefore, other structures of the wearable device are not described in this embodiment.

### Embodiment 3

It should be noted that, Embodiment 1 and Embodiment 2 describe the embodiment in which the stopper assembly 63 is disposed in the locking sunken groove 62. It may be understood that, in other embodiments, the stopper assembly 63 may not be disposed, and the locking protrusion 61 is designed as another structure. As shown in FIG. 22E, a locking sunken groove 62 is disposed on the first end 21 of the wrist support, and one side of the locking sunken groove 62 is provided with a locking protrusion 61 that can slide into the locking sunken groove opening 621 horizontally. An elastic arm 74 is separately disposed on two sides of the first base 70, one end of the elastic arm 74 is connected to the first base 70, the other end of the elastic arm 74 is a free end, and the locking protrusion 61 is disposed on the free end of the elastic arm 74. A recess part 623 clamped to the locking protrusion 61 is disposed in the locking sunken groove 62.

FIG. 22F is a schematic diagram of a cross-sectional structure of a partial structure of a wrist support and a rotating shaft assembly 30 of a wearable device according to an embodiment of this application. As shown in FIG. 22F, the elastic arm 74 and the first base 70 are of an integrated structure, and the locking protrusions 61 of the two elastic arms 74 are both located in the recess part 623 of the locking sunken groove 62, so that the device body 10 is fastened to the wrist support. When the first base 70 slides horizontally into the locking sunken groove opening 621, the two elastic arms 74 may clamp the locking protrusion 61 into the recess part 623 by relying on their elasticity, so that the locking protrusion 61 is locked and connected to the locking sunken groove 62. Because the elastic arms 74 are elastic, the elastic arms 74 on the first base 70 and the side walls of the locking sunken groove 62 contact each other, therefore, the first base 70 does not shake in the locking sunken groove 62, which may increase stability between the device body 10 and the wrist support. In addition, the structure of the elastic arm 74 is simple, which may simplify the structure of the locking assembly 60, thereby reducing costs.

It should be noted that, in some embodiments, one elastic arm 74 may be disposed only on one side of the first base 70, or a plurality of elastic arms 74 may be disposed on one side of the first base 70. Therefore, a position and a quantity of the elastic arms 74 are not limited in this embodiment.

It should be noted that a shape of the elastic arm 74 is not limited to that shown in FIG. 22E and FIG. 22F and that is disposed on the first base 70. In some embodiments, the elastic arm 74 may be further disposed in a separate structure. As shown in FIG. 22G and FIG. 22H, two elastic arms 74 are disposed in the locking sunken groove 62, and the two elastic arms 74 are disposed opposite to each other and are of an integrated structure. One end of the elastic arm 74 is connected to an inner wall of the locking sunken groove 62, and the other end of the elastic arm 74 is a free end; and the free end of the elastic arm 74 is provided with a convex hull 741; and a slot position 612 for clamping with the convex hull 741 is disposed on the locking protrusion 61.

As shown in FIG. 22G, the locking sunken groove 62 is disposed at the first end 21 of the wrist support, the locking protrusion 61 is disposed on the first base 70, and the first base 70 may be pulled out from the wrist support 20 in the x direction, and specifically, may be pulled out from the third end 24 of the wrist support or the fourth end 25 of the wrist support. Certainly, in some embodiments, alternatively, a direction of the elastic arm 74 may be set to a structure that can enable the first base 70 to be pulled out from the wrist support 20 in a y direction or a z direction. This is not specifically limited in this embodiment.

In this embodiment, as shown in FIG. 22H, the elastic arm 74 is fastened in the locking sunken groove 62, and the two elastic arms 74 are connected and in an integrated structure. Certainly, in some embodiments, the two elastic arms 74 may also be in a split structure, provided that the two elastic arms 74 are fixed and disposed in the locking sunken groove 62. In addition, in some embodiments, the elastic arm 74 may be further disposed on the first base 70. Therefore, a disposition position of the elastic arm 74 is not specifically limited in this embodiment. Certainly, a quantity of elastic arms 74 does not constitute a limitation on the protection scope of this application, and any technical solution in which the elastic arms 74 are disposed falls within the protection scope of the technical solutions in embodiments of this application.

In addition, it should be noted that, in this embodiment, except that the first base 70, the first end 21 of the wrist support, and the locking assembly 60 have a partial structure different from that in Embodiment 1, other structures may be the same as those in Embodiment 1. Therefore, for other structures of the wearable device 100, refer to the descriptions in Embodiment 1. Details are not described in this embodiment.

### Embodiment 4

Embodiment 3 describes the technical solution in which the locking assembly 60 includes an elastic arm 74. In some other embodiments, the locking assembly 60 may be of another structure. As shown in FIG. 22I, the locking assembly 60 may further include a spring plate clamping position 636, and the clamping end 69e2 of the spring plate clamping position 636 is located in the locking sunken groove 62. As shown in FIG. 22J, the locking protrusion 61 is located at one end of the first base 70 that is close to the wrist support 20, and the locking protrusion 61 is provided with a dent 613 for clamping the clamping end 69e2 of the spring plate clamping position 636. When the clamping end 69e2 of the spring plate clamping position 636 is located in the dent 613 on the locking protrusion 61, the locking assembly 60 is in a locked state, and in this case, the device body 10 is fastened to the wrist support 20. When the device body 10 needs to be separated from the wrist support, the device body 10 may be pulled out from the wrist support 20 in a y direction.

In this embodiment, as shown in FIG. 22J, the dent 613 is disposed on two sides of the first base 70 in the x direction, two spring plate clamping positions 636 are respectively disposed on two sides of the first end 21 of the wrist support in the x direction, and a locking sunken groove opening 621 is disposed on a side facing the second end 22 of the wrist support, so that the device body 10 can be pulled out from the wrist support 20 in the y direction. Certainly, in some embodiments, the two spring plate clamping positions 636 may also be respectively disposed on two sides of the first end 21 of the wrist support in the y direction, and correspondingly, the dents 613 on the first base 70 may be respectively disposed on two sides of the first base 70 in the y direction, and the locking sunken groove opening 621 is disposed on a side facing the third end 24 of the wrist support or a side facing the fourth end 25 of the wrist support, in this way, the device body 10 may be pulled out from the wrist support 20 in the x direction.

In this embodiment, a position of the spring plate clamping position 636 and the quantity of the spring plate clamping positions 636 are not specifically limited, and a specific structure, position, and quantity may be specifically set based on a specific situation.

In this embodiment, the spring plate clamping position 636 may be a spring structure shown in FIG. 22I. Certainly, in some other embodiments, the spring plate clamping position 636 may also be another structure. This is not specifically limited in embodiments of this application.

According to the wearable device provided in embodiments of this application, clamping force between the locking sunken groove 62 and the locking protrusion 61 may also be increased by disposing the spring plate, so as to improve stability of the connection between the device body 10 and the wrist support 20, so as to prevent the device body 10 from accidentally falling off from the wrist support 20. In addition, a structure of the spring plate clamping position 636 is simple, and the spring is fastened firmly, and costs can be reduced.

In addition, it should be noted that, in this embodiment, a structure that is not described may be the same as the structure in Embodiment 1. Therefore, for another structure of the wearable device 100, refer to the descriptions in Embodiment 1. Details are not described in this embodiment again.

### Embodiment 5

In this embodiment, FIG. 22K is a schematic diagram of a cross-sectional structure of a partial structure of a wrist support and a rotating shaft assembly of a wearable device according to an embodiment of this application. FIG. 22L is a schematic diagram of a cross-sectional structure of a partial structure of a wrist support and a rotating shaft assembly of a wearable device from another angle according to an embodiment of this application. As shown in FIG. 22K and FIG. 22L, the locking assembly 60 may further include a first magnetic piece 69b and a second magnetic piece 69c, where one of the first magnetic piece 69b and the second magnetic piece 69c is disposed in the wrist support 20, and the other of the first magnetic piece 69b and the second magnetic piece 69c is disposed on the vertical rotating shaft 32 or disposed in the first base 70 disposed at the bottom of the vertical rotating shaft 32.

In this embodiment, a first magnetic piece 69b is disposed at a bottom end of the first base 70, a second magnetic piece 69c is disposed at a bottom of a locking sunken groove 62 on the wrist support 20, and the second magnetic piece 69c is fastened to the wrist support 20. The locking protrusion 61 is located at one end of the first base 70 that is close to the wrist support 20, the first base 70 is provided with a first hole 71 that can be penetrated by one end of the vertical rotating shaft 32, and a receptacle of the first magnetic piece 69b is disposed, and the first magnetic piece 69b is fastened in the receptacle. When the locking protrusion 61 is located in the locking sunken groove 62, the first magnetic piece 69b and the second magnetic piece 69c attract each other, so that the first base 70 is fastened on the wrist support 20.

It should be noted that, in this embodiment, the first magnetic piece 69b is a relatively large cuboid structure. In some other embodiments, the first magnetic piece 69b may be a plurality of structures such as a small cuboid or a cylinder that are disposed in parallel. Therefore, a shape, a structure, and a quantity of the first magnetic piece 69b are not specifically limited. Similarly, a shape, a structure, and a quantity of the second magnetic pieces 69c are not specifically limited, and a specific shape, structure, and quantity may be specifically set based on a specific situation.

It should be noted that, in this embodiment, the locking sunken groove opening 621 is disposed toward the second end 22 of the wrist support. Certainly, the locking sunken groove opening 621 may also be disposed toward the third end 24 of the wrist support, the fourth end 25 of the wrist support, and the first end 21 of the wrist support. A specific direction of the locking sunken groove opening 621 is not specifically limited in this embodiment.

According to the wearable device provided in embodiments of this application, the first magnetic piece 69b and the second magnetic piece 69c are disposed, so that the device body 10 and the wrist support 20 can be fastened through attraction between the first magnetic piece 69b and the second magnetic piece 69c, to prevent the device body 10 from falling off from the wrist support 20. In addition, structures of the first magnetic piece 69b and the second magnetic piece 69c are simple and easy to be disposed, so that structures of the wrist support 20 and the device body 10 can be simplified, thereby reducing costs.

In addition, it should be noted that, in this embodiment, a structure that is not described may be the same as the structure in Embodiment 1. Therefore, for another structure of the wearable device 100, refer to the descriptions in Embodiment 1. Details are not described in this embodiment again.

### Embodiment 6

FIG. 22M is a schematic diagram of a structure of a device body and a wrist support of a wearable device according to an embodiment of this application. FIG. 22N is a schematic diagram of a cross-sectional structure of a device body and a wrist support of a wearable device according to an embodiment of this application.

As shown in FIG. 22M, in this embodiment, the locking assembly 60 may further include a toggle button 69d, where a first end of the toggle button 69d is located outside the first end 21 of the wrist support, and a second end of the toggle button 69d is located inside the first end 21 of the wrist support. In addition, a first end of the toggle button 69d is of a corrugated plate structure.

It should be noted that the first end of the toggle button 69d may be in a corrugated plate structure, or may be in another structure, for example, may be in a cylindrical structure or a tab-shaped structure. This is not specifically limited in embodiments of this application.

As shown in FIG. 22N, a clamping rod 69d1 is disposed on the second end of the toggle button 69d, and a clamping hole 614 is disposed on the locking protrusion 61. One end of the clamping rod 69d1 extends into the locking sunken groove 62 and is inserted into the clamping hole 614 when the toggle button 69d is toggled, so as to prevent the locking protrusion 61 from moving out of the locking sunken groove 62, and moves out of the clamping hole 614 when the toggle button 69d is toggled reversely, so that the locking protrusion 61 may move out of the locking sunken groove 62, thereby separating the device body 10 from the wrist support 20.

In addition, the second end of the toggle button 69d is a rod structure, and the clamping rod 69d1 is perpendicular to the rod structure. In addition, a lock pin 69d2 may be further disposed on the rod structure, where the lock pin 69d2 may be located between the clamping rod 69d1 and the first end of the toggle button 69d, and the clamping rod 69d1 may be located on two sides of the rod structure, or may be located on one side of the rod structure, the clamping rod 69d1 may be disposed to prevent the toggle button 69d from shaking in the y direction relative to the wrist support, so as to ensure stability of the toggle button 69d.

In this embodiment, a sliding space 211 available for a second end of the toggle button 69d to slide is provided in the first end 21 of the wrist support, a first magnet 212 and a second magnet 213 are disposed on two opposite side walls in the sliding space 211, and the second end of the toggle button 69d is located between the first magnet 212 and the second magnet 213. When the toggle button 69d is toggled to the second end of the toggle button 69d to be attracted to the first magnet 212, one end of the clamping rod 69d1 is inserted into the clamping hole 614. When the toggle button 69d is toggled to the second end of the toggle button 69d to be attracted to the second magnet 213, one end of the clamping rod 69d1 exits the locking sunken groove 62.

It should be noted that, the toggle button 69d is made of a material that can attract the magnet to each other, and may be specifically iron, or certainly may be made of another alloy material. A specific material of the toggle button 69d is not specifically limited in this embodiment.

The first magnet 212 and the second magnet 213 are disposed on the two opposite side walls in the sliding space 211, so that push force can be reduced, thereby improving sensitivity of the toggle button 69d, and increasing locking force of the toggle button 69d.

Still refer to FIG. 22N. A stopper assembly 63 is disposed on a side that is of the wrist support 20 and that is opposite to the toggle button 69d. A structure of the stopper assembly 63 may be the same as that of the stopper assembly 63 in Embodiment 1, but a location is different. Therefore, for description of the stopper assembly 63, refer to related content in Embodiment 1.

In this embodiment, by disposing the stopper assembly 63, locking force between the wrist support 20 and the device body 10 may be increased, thereby preventing the device body 10 from accidentally falling off from the wrist support 20. Certainly, in some embodiments, the stopper assembly 63 may not be disposed. Therefore, a quantity of stopper assemblies 63 is not specifically limited in this embodiment.

It should be noted that, in this embodiment, except that structures of the locking assembly 60 and the first end 21 of the wrist support are different from those in Embodiment 1, other structures may be the same as those in Embodiment 1. Therefore, for other structures in this embodiment, refer to the descriptions in Embodiment 1.

It should be understood that, in this embodiment, the toggle button 69d is disposed on an outer side of the first end 21 of the wrist support. Certainly, in some other embodiments, the toggle button 69d may be further disposed on an outer side of the third end 24 of the wrist support or an outer side of the fourth end 25 of the wrist support. Therefore, a position at which the toggle button 69d is disposed is not specifically limited in this embodiment.

According to the wearable device provided in embodiments of this application, the locking protrusion 61 and the locking sunken groove 62 can be conveniently locked by disposing the toggle button 69d in the locking assembly 60, a clamping hole 614 is disposed on the locking protrusion 61, and a clamping rod 69d1 is disposed on the second end of the toggle button 69d, so that when the clamping rod 69d1 is located in the clamping hole 614, the locking protrusion 61 is fastened to the locking sunken groove 62, so that the device body 10 and the wrist support 20 are fastened. When the clamping rod 69d1 is separated from the clamping hole 614, the locking protrusion 61 is separated from the locking sunken groove 62, so that the device body 10 is separated from the wrist support 20. In this manner, the locking and separation between the device body 10 and the wrist support 20 are controlled by setting the toggle button 69d. This not only facilitates separation, but also ensures firm locking.

### Embodiment 7

FIG. 22O is a schematic diagram of a cross-sectional structure of a device body and a wrist support of a wearable device according to an embodiment of this application. As shown in FIG. 22O, the locking assembly 60 may further include a toggle switch 69e, where the toggle switch 69e may include an operating end 69e1 and a clamping end 69e2, the operating end 69e1 is located outside the wrist support 20, the clamping end 69e2 is located in the locking sunken groove 62, and the clamping end 69e2 is used to lock the first base 70 in the locking sunken groove 62. The operating end 69e1 is used to drive the clamping end 69e2 to be clamped into the first base 70 or moved up from the first base 70 when being pushed. The first base 70 is provided with a female buckle 75, and the clamping end 69e2 of the toggle switch 69e is provided with a male buckle 69e3 that cooperates with the female buckle 75. When the male buckle 69e3 and the female buckle 75 are fastened, the locking protrusion 61 and the locking sunken groove 62 are in a locked state.

The male buckle 69e3 and the female buckle 75 are disposed, so that the first base 70 can be locked on the wrist support 20 through buckling of the male buckle 69e3 and the female buckle 75, so that the device body 10 is fastened to the wrist support 20. In addition, structures of the male buckle 69e3 and the female buckle 75 are simple, which helps simplify a structure of the flip switch 69e and reduce costs.

In addition, to prevent the toggle switch 69e from falling off from the wrist support 20, a barrier sheet 69e4 may be further disposed on the toggle switch 69e, and a barrier groove 26 is disposed on a side of the wrist support 20 that is close to the operation end 69e1 of the toggle switch 69e. When the male buckle 69e3 and the female buckle 75 are fastened, the barrier sheet 69e4 and the barrier groove 26 are also fastened, in this way, the locking protrusion 61 and the locking sunken groove 62 can be more stable when being locked and connected. A length of the barrier sheet 69e4 may be greater than that of the male buckle 69e3. Therefore, when the male buckle 69e3 is separated from the female buckle 75, because a part of the barrier sheet 69e4 is still located in the barrier groove 26, the toggle switch 69e may be prevented from falling off from the wrist support 20.

It should be noted that a shape of the toggle switch 69e may be the shape shown in FIG. 22O, or certainly may be another shape. The shape of the toggle switch 69e is not specifically limited in this embodiment.

In this embodiment, the toggle switch 69e is disposed on the outer side of the fourth end 25 of the wrist support, and the locking sunken groove opening 621 is disposed on the third end 24 of the wrist support. In this way, when the locking protrusion 61 and the locking sunken groove 62 are unlocked, the device body 10 may slide out of the third end 24 of the wrist support. Certainly, in some embodiments, the toggle switch 69e may be disposed on an outer side of the third end 24 of the wrist support, and the locking sunken groove opening 621 is disposed on the fourth end 25 of the wrist support. In this way, when the locking protrusion 61 and the locking sunken groove 62 are unlocked, the device body 10 may slide out of the fourth end 25 of the wrist support.

In addition, the shape of the toggle switch 69e is not specifically limited in this embodiment, provided that the locking protrusion 61 and the locking sunken groove 62 can be locked, and the locking protrusion 61 and the locking sunken groove 62 can be unlocked.

It should be noted that, in this embodiment, except that structures of the locking assembly 60 and the first end of the wrist support 20 are different from those in Embodiment 1, other structures may be the same as those in Embodiment 1. Therefore, for other structures in this embodiment, refer to the descriptions in Embodiment 1.

According to the wearable device provided in embodiments of this application, the toggle switch 69e is disposed, so that the device body 10 and the wrist support 20 are capable of being disassembled or locked by flipping the toggle switch 69e back and forth. The operations are convenient, the structure is simple, and the clamping connection is stable. The operation end 69e1 of the toggle switch 69e is disposed outside the wrist support 20, so as to facilitate operation.

### Embodiment 8

FIG. 22P is a schematic diagram of a structure of a device body and a wrist support of a wearable device according to an embodiment of this application. FIG. 22Q is a schematic diagram of a structure of a partial structure of a wrist support and a rotating shaft assembly 30 of a wearable device according to an embodiment of this application.

As shown in FIG. 22P and FIG. 22Q, in this embodiment, the locking assembly 60 may further include a locking switch 69f, where the locking switch 69f is disposed on the wrist support 20, a trigger button 69f1 is disposed on the locking switch 69f, and one end of the trigger button 69f1 protrudes from the wrist support 20 and is exposed on a surface of the first end 21 of the wrist support. The locking switch 69f may be used to lock the first base 70 in the locking sunken groove 62, and unlock the first base 70 when the locking switch 69f is pressed.

FIG. 22R is a schematic diagram of an exploded structure of FIG. 22Q. FIG. 22S is a schematic diagram of a cross-sectional structure of a device body and a wrist support of a wearable device according to an embodiment of this application. With reference to FIG. 22R and FIG. 22S, the first end 69f2 of the locking switch is fastened in the wrist support 20, and the second end 69f3 of the locking switch is suspended in the locking sunken groove 62 and is used to lock the first base 70 in the locking sunken groove 62. A trigger button 69f1 is disposed on the locking switch 69f, the trigger button 69f1 is located between the first end 69f2 of the locking switch and the second end 69f3 of the locking switch, and one end of the trigger button 69f1 protrudes from the wrist support 20. When the trigger button 69f1 is pressed, the second end 69f3 of the locking switch unlocks the first base 70.

In this embodiment, the trigger button 69f1 is located on a side of the wrist support 20 facing the horizontal rotating shaft 31, and the trigger button 69f1 is located on one side of the horizontal rotating shaft 31. When the device body 10 rotates around the horizontal rotating shaft 31 to press the trigger button 69f1, the trigger button 69f1 moves down and drives the second end 69f3 of the locking switch to be detached from the first base 70, so that the first base 70 can slide out of the wrist support 20. That is, the device body 10 is turned around the horizontal rotating shaft 31, so that the end face of the first end of the device body 10 is squeezed on the trigger button 69f1, so that the second end 69f3 of the locking switch is unlocked from the first base 70, and then the device body 10 may slide out of the locking sunken groove opening 621. In addition, a barrier casing 624 is disposed at the top end of the locking sunken groove 62. After sliding into the locking sunken groove 62, the first base 70 is stuck at the barrier casing 624, to prevent the first base 70 from sliding out from a side opposite to the locking sunken groove opening 621. The top end of the locking switch 69f is covered with a top plate 27, and the top plate 27 may protect the locking switch 69f.

In this embodiment, the locking sunken groove opening 621 is disposed toward the third end 24 of the wrist support. Certainly, in some other embodiments, the locking sunken groove opening 621 may also be disposed toward the fourth end 25 of the wrist support. A direction of the locking sunken groove opening 621 is not limited in embodiments of this application.

As shown in FIG. 22R and FIG. 22S, a hook groove 76 is disposed on the first base 70, and a hook 69f4 cooperating with the hook groove 76 is disposed on the second end 69f3 of the locking switch. The locking switch 69f locks the first base 70 in the locking sunken groove 62 by cooperating with the hook groove 76 and the hook 69f4. Concession space 761 is disposed at a position on the first base 70 that is close to the hook groove 76, and the concession space 761 communicates with the hook groove 76.

In this embodiment, the locking switch 69f is a rod structure, and a trigger button 69f1 is disposed on a side of the rod structure close to the horizontal rotating shaft 31. The trigger button 69f1 not only can trigger unlocking between the locking protrusion 61 and the locking sunken groove 62, but also can prevent the locking switch 69f from sliding back and forth in the x direction relative to the wrist support 20.

It should be noted that a position and a direction for disposing the trigger button 69f1 are not specifically limited in this embodiment, provided that the trigger button 69f1 is disposed on the wrist support 20. In addition, a trigger manner of the trigger button 69f1 includes but is not limited to pressing of the device body 10, and the trigger button 69f1 may also be triggered by manual pressing. Details are not specifically described in this embodiment again. In addition, in this embodiment, except that structures of the first base 70 and the wrist support 20 are different from those in Embodiment 1, other structures may be the same as those in Embodiment 1. Therefore, for other structures of the wearable device, refer to the descriptions in Embodiment 1. Details are not described here again.

According to the wearable device provided in embodiments of this application, the locking switch 69f is disposed, and the device body 10 and the wrist support 20 can be separated by pressing the locking switch 69f. This is easy to operate. In addition, the hook groove 76 and the hook 69f4 are disposed, so that the first base 70 and the locking switch 69f can be connected stably. This prevents the device body 10 from falling off from the wrist support 20. The concession space 761 is disposed, so that the hook 69f4 can conveniently move downward to be detached from the hook groove 76, and the device body 10 is separated from the wrist support 20.

### Embodiment 9

FIG. 22T is a schematic diagram of a structure of a device body and a wrist support of a wearable device according to an embodiment of this application. FIG. 22U is a schematic diagram of a cross-sectional structure of a device body and a wrist support of a wearable device according to an embodiment of this application.

As shown in FIG. 22T, the locking assembly 60 may further include a pressing switch 69g, where the two pressing switches 69g are respectively disposed on an outer side of the wrist support 20. Certainly, in some embodiments, one pressing switch 69g may also be disposed, and a quantity of the pressing switches 69g is not limited.

As shown in FIG. 22U, a first end 69g1 of the pressing switch is located outside the wrist support 20, and a second end 69g2 of the pressing switch is located at a locking sunken groove 62. Two locking protrusions 61 are telescopically disposed on two sides of the first base 70, steps 28 that cooperate with the locking protrusions 61 are disposed in the locking sunken groove 62, two steps 28 are respectively disposed on two sides of the locking sunken groove 62, one locking protrusion 61 corresponds to one step 28, and one pressing switch 69g corresponds to one locking protrusion 61. When the locking protrusion 61 is close to an end of the step 28 and clamped to the step 28, the locking protrusion 61 is locked and connected to the locking sunken groove 62.

In this embodiment, the step 28 may be welded, jointed, bonded, or integrally formed on the wrist support 20. A manner of connecting the step 28 to the wrist support 20 is not specifically limited in this embodiment.

Two locking protrusions 61 and two pressing switches 69g are disposed, so that both positions of the device body 10 and the wrist support 20 may be locked, thereby improving stability of the connection between the device body 10 and the wrist support 20. The two pressing switches 69g are respectively disposed on two sides of the wrist support 20, so that clamping force between the wrist support 20 and the device body 10 may be distributed on the two sides of the wrist support 20, so that the two sides of the wrist support 20 are in a balanced state, so as to prevent the device body 10 and the wrist support 20 from being connected unstably due to falling off of one end of the device body 10.

In application, the first base 70 and the locking sunken groove 62 are locked and connected at the step 28 through the locking protrusion 61. When the pressing switch 69g is pressed, the second end 69g2 of the pressing switch drives the locking protrusion 61 to move in a direction away from the pressing switch 69g, so that a clamping relationship between the locking protrusion 61 and the step 28 is released, that is, the locking protrusion 61 moves out of the step 28, so that the first base 70 and the locking sunken groove 62 are in an unlocked state.

In this embodiment, one end of the locking protrusion 61 facing the pressing switch 69g is provided with a first inclined surface 615, and the pressing switch 69g is provided with a second inclined surface 69g3 in cooperation with the first inclined surface 615, so that when the pressing switch 69g is pressed, the second inclined surface 69g3 can drive the first inclined surface 615 to move in a direction away from the pressing switch 69g, and the pressing switch 69g squeezes the locking protrusion 61 inward. When a clamping relationship between the locking protrusion 61 and the step 28 is released, the locking protrusion 61 and the locking sunken groove 62 are in an unlocked state, so that the device body 10 is separated from the wrist support 20.

The first inclined surface 615 and the second inclined surface 69g3 are disposed on the contact surface of the locking protrusion 61 and the pressing switch 69g, and the contact surface of the locking protrusion 61 and the pressing switch 69g is formed into a plane. The contact area between the pressing switch 69g and the locking protrusion 61 may be increased by disposing the contact surface as an inclined surface, thereby improving stability of the connection between the pressing switch 69g and the locking protrusion 61, this can effectively prevent the pressing switch 69g from being detached from the locking protrusion 61. In addition, in the case of the same contact area, the second end 69g2 and the locking protrusion 61 of the pressing switch can be reduced by setting the slope, thereby saving the accommodating space of the pressing switch 69g and the locking protrusion 61, and facilitating miniaturization development of the wearable device.

Still refer to FIG. 22U, a first pressing spring 616 is disposed in the first base 70, one end of the first pressing spring 616 is fastened in the first base 70, the other end of the first pressing spring 616 is connected to one end of the locking protrusion 61, and the first pressing spring 616 is compressed and limited in the first base 70, so that the locking protrusion 61 and the locking sunken groove 62 are locked at the step 28. The locking protrusion 61 is prevented from moving in a direction close to the first base 70, thereby causing a problem that the locking protrusion 61 and the locking sunken groove 62 are not securely clamped. In addition, the first pressing spring 616 is disposed so that the locking protrusion 61 is telescopic relative to the first base 70, so that the locking protrusion 61 and the locking sunken groove 62 may be in a locked state or in an unlocked state.

In a possible implementation, a second press spring 69g4 is disposed in the wrist support 20, the second press spring 69g4 is sleeved on the pressing switch 69g, and the pressing switch 69g is telescopically disposed at the first end 21 of the wrist support through the second press spring 69g4. In this embodiment, a press head is disposed at the first end 69g1 of the pressing switch, and a limiting ring is disposed between the second end 69g2 of the pressing switch and the press head. Baffle walls opposite to the pressing switch 69g are respectively disposed on two sides of the first end 21 of the wrist support. The press head may be of a cuboid structure. A side that is of the press head and that is close to the first base 70 is disposed opposite to the baffle wall, and the press head may be limited by the baffle wall to an outer side of the wrist support 20. A cavity accommodating the second pressing spring 69g4 is disposed on an inner side of the baffle wall on the wrist support 20, one end of the second pressing spring 69g4 abuts against one side of the cavity, the other end of the second pressing spring 69g4 abuts against one side of the limiting ring, and the other side of the limiting ring abuts against the other side of the cavity, in this way, the pressing switch 69g may be telescopically disposed at the first end 21 of the wrist support through the second press spring 69g4. The second press spring 69g4 is disposed, so that the pressing switch 69g is telescopic relative to the wrist support 20, so that after the locking protrusion 61 and the locking sunken groove 62 are locked, the pressing switch 69g may automatically return to an initial position.

It should be noted that, in this embodiment, the pressing switch 69g is disposed in the x direction. Certainly, in some other embodiments, the pressing switch 69g may also be disposed in the y direction. A disposing direction of the pressing switch 69g is not limited in this embodiment. According to the wearable device provided in embodiments of this application, the pressing switch 69g is disposed, so that the device body 10 and the wrist support 20 can be separated directly by pressing the pressing switches 69g on the two sides, and the device body 10 can be viewed and disassembled without rotating to a specific angle, which is more convenient.

It should be noted that, in this embodiment, except that the locking assembly 60, the first base 70, and the first end 21 of the wrist support are partially different from those in Embodiment 1, other structures may be the same as those in Embodiment 1. Therefore, for other structures of the wearable device, refer to the descriptions in Embodiment 1. Details are not described here again.

### Embodiment 10

FIG. 22V is a schematic diagram of an exploded structure of a partial structure of a wrist support and a rotating shaft assembly of a wearable device according to an embodiment of this application. As shown in FIG. 22V, the locking sunken groove 62 is located on the first base 70, and the locking protrusion 61 is located on the wrist support 20. At least one side of the locking sunken groove 62 is provided for the locking protrusion 61 to slide into the locking sunken groove opening 621 horizontally (in the x direction).

FIG. 22W is a schematic diagram of a cross-sectional structure of a device body and a wrist support of a wearable device according to an embodiment of this application. As shown in FIG. 22W, a clamping position 617 is set on the locking protrusion 61, and a clamping protrusion 625 cooperating with the clamping position 617 is set on the locking sunken groove 62. After the locking sunken groove 62 slides horizontally into the locking protrusion 61, the clamping protrusion 625 is clamped in the clamping position 617, so that the locking protrusion 61 is locked and connected to the locking sunken groove 62.

It should be noted that positions and quantities of the clamping protrusions 625 and the clamping positions 617 are not specifically limited in embodiments of this application, provided that one of the locking protrusion 61 and the locking sunken groove 62 is provided with a clamping protrusion 625, and the other of the locking protrusion 61 and the locking sunken groove 62 is provided with a clamping position 617, the locking protrusion 61 and the locking sunken groove 62 may be locked and connected to the clamping position 617 through the clamping protrusion 625.

In this embodiment, two opposite sides of the locking sunken groove 62 have locking sunken groove openings 621. In this way, the locking protrusions 61 on the wrist support 20 may slide horizontally into the locking sunken groove 62 from two sides of the first base 70, so that the locking sunken groove 62 is locked and connected to the locking protrusions 61. Certainly, in some embodiments, the locking sunken groove opening 621 may also be disposed only on one side of the locking sunken groove 62. As shown in FIG. 22X and FIG. 22Y, a notch 77 is disposed on one side of the first base 70 opposite to the locking sunken groove opening 621, and a baffle block 618 fitting the notch 77 is disposed on the locking protrusion 61 on the wrist support 20. When the locking protrusion 61 slides horizontally from the locking sunken groove opening 621, the locking protrusion 61 and the locking sunken groove 62 are locked and connected, and the baffle block 618 is connected with the notch 77.

According to the wearable device provided in embodiments of this application, the notch 77 and the baffle block 618 are disposed to prevent the locking protrusion 61 from sliding out from one side of the locking sunken groove 62, so as to prevent the device body 10 from accidentally falling off.

It should be noted that, in this embodiment, positions for disposing the notch 77 and the baffle block 618 are not specifically set. A notch 77 is disposed on one of the locking sunken groove 62 and the locking protrusion 61, and a baffle block 618 cooperating with the notch 77 is disposed on one of the locking sunken groove 62 and the locking protrusion 61.

According to the wearable device provided in embodiments of this application, a clamping protrusion 625 is disposed on one of the locking protrusion 61 and the locking sunken groove 62, and a clamping position 617 is disposed on the other one of the locking protrusion 61 and the locking sunken groove 62, so that a locking connection between the first base 70 and the wrist support 20 may be implemented through the clamping protrusion 625 and the clamping position 617. In addition, because the clamping protrusion 625 and the clamping position 617 are directly disposed on the locking protrusion 61 and the locking sunken groove 62, the wrist support 20 and the first base 70 can be locked and connected without other components, and the structure is simple and easy to assemble and disassemble.

It should be noted that, in this embodiment, except that the locking assembly 60, the first base 70, and the first end 21 of the wrist support are partially different from those in Embodiment 1, other structures may be the same as those in Embodiment 1. Therefore, for other structures of the wearable device, refer to the descriptions in Embodiment 1. Details are not described here again.

### Embodiment 11

FIG. 22Z is a schematic diagram of an exploded structure of a device body and a wrist support of a wearable device according to an embodiment of this application. FIG. 22a is a schematic diagram of a cross-sectional structure of a device body and a wrist support of a wearable device according to an embodiment of this application.

As shown in FIG. 22Z and FIG. 22a, the locking sunken groove 62 is located on the wrist support 20, the locking protrusion 61 is located on one end of the first base 70 that is close to the wrist support 20, and the top end of the locking sunken groove 62 is provided with an opening that allows the locking protrusion 61 to slide vertically (in a z direction) into the locking sunken groove 62.

The locking assembly 60 may further include a locking button 69h, where the locking button 69h is telescopically or slidably disposed (telescopically disposed in this embodiment) on the wrist support 20. In addition, one end of the locking button 69h is located outside the first end 21 of the wrist support, and the other end of the locking button 69h is located in the locking sunken groove 62 and is used to be clamped to the locking protrusion 61.

FIG. 22b is a schematic diagram of a partial structure of a sectional view of a device body and a wrist support of a wearable device from another angle according to an embodiment of this application. As shown in FIG. 22b, a first clamping hook 69h1 is disposed on one end of the locking button 69h located in the locking sunken groove 62, and the first clamping hook 69h1 is used to clamp the locking protrusion 61 when the locking protrusion 61 extends into the locking sunken groove 62, and is used to move when the locking button 69h is pressed or slid, so that the first clamping hook 69h1 is released from clamping to the locking protrusion 61.

In this embodiment, with reference to FIG. 22Z and FIG. 22b, a first telescopic member 69h2 may be further disposed in the locking sunken groove 62, one end of the first telescopic member 69h2 is connected to the inner wall of the locking sunken groove 62, and the other end of the first telescopic member 69h2 is connected to the locking button 69h, so that the locking button 69h is telescopically disposed on the wrist support 20. The first telescopic member 69h2 is disposed, so that the locking button 69h is telescopic relative to the wrist support 20. In this way, after the wrist support 20 and the device body 10 are unlocked, the locking button 69h may automatically rebound for repeated use. In this embodiment, the first telescopic member 69h2 may be a spring, or certainly may be another elastic structure. This is not specifically limited in embodiments of this application. The first clamping hook 69h1 is disposed, so that the locking button 69h and the locking protrusion 61 can be clamped, and the locking protrusion 61 is locked in the locking sunken groove 62, so that the device body 10 is fastened to the wrist support 20. This prevents the device body 10 from falling off from the wrist support 20.

In this embodiment, two first clamping hooks 69h1 are disposed on the locking button 69h, and the two first clamping hooks 69h1 are respectively disposed on two sides of the first telescopic member 69h2. In addition, two subboard hooks disposed at an interval in a y direction are disposed on each first clamping hook 69h1. It should be noted that a quantity of first clamping hooks 69h1 includes but is not limited to two, or may be one, three, or the like. Therefore, this is not specifically limited in this embodiment. In addition, the quantity of the subboard hooks includes but is not limited to two, and may also be one or three. Therefore, this is not specifically limited in this embodiment.

FIG. 22c is a schematic diagram of a partial structure of a sectional view of a device body and a wrist support of a wearable device from another angle according to an embodiment of this application. With reference to FIG. 22Z and FIG. 22c, at least one second telescopic member 69h3 is disposed in the locking sunken groove 62, and an abutting member used to press against the second telescopic member 69h3 is disposed on the first base 70. The second telescopic member 69h3 is used to be compressed by the abutting member when the locking protrusion 61 is clamped to the first clamping hook 69h1, and drive the abutting member to move toward the opening when the locking protrusion 61 is released from clamping.

It should be noted that the abutting piece may be a bottom end of the first base 70, or certainly may be a component disposed at the bottom end of the first base 70. A specific shape of the abutting piece may be specifically set based on a specific situation, and is not specifically limited herein. The second telescopic piece 69h3 is disposed, so that when the device body 10 is separated from the wrist support 20, upward elastic force may be provided for the device body 10, so as to facilitate detachment. When the device body 10 is connected to the wrist support 20, upward elastic force may also be provided for the device body 10, so as to improve a mounting hand feel.

In a possible implementation, as shown in FIG. 22Z, one end of the locking button 69h located in the locking sunken groove 62 further is provided with a second clamping hook 69h4, and the locking sunken groove 62 is provided with a clamping block 626 that cooperates with the second clamping hook 69h4. The second clamping hook 69h4 is disposed, and the clamping block 626 is disposed in the locking sunken groove 62, so that the locking button 69h is fixedly disposed on the wrist support 20, and one end is always located in the locking sunken groove 62. This can prevent the locking button 69h from falling off from the locking sunken groove 62.

According to the wearable device provided in embodiments of this application, the locking button 69h is disposed, and the locking protrusion 61 and the locking sunken groove 62 may be unlocked by pressing the locking button 69h, so that the wrist support 20 is separated from the device body 10. This is easy to operate.

It should be noted that, in this embodiment, except that the locking assembly 60, the first base 70, and the first end 21 of the wrist support are partially different from those in Embodiment 1, other structures may be the same as those in Embodiment 1. Therefore, for other structures of the wearable device, refer to the descriptions in Embodiment 1. Details are not described here again.

### Embodiment 12

FIG. 23 is a schematic diagram of a structure of a wearable device according to an embodiment of this application. As shown in FIG. 23, the wearable device 100 in this embodiment may include a device body 10, a wrist support 20, a rotating shaft assembly 30, a clamping assembly 40 (as shown in FIG. 28), a locking assembly 60, and a watch band 50. The rotating shaft assembly 30 is disposed at a first end 11 of the device body, the clamping assembly 40 is disposed at a second end 12 of the device body, and the device body 10 is fastened to the wrist support 20 through the rotating shaft assembly 30, the clamping assembly 40, and the locking assembly 60, the wrist support 20 is used to bear the device body 10, and the watch band 50 is connected to two ends of the wrist support 20 rotatably, to facilitate wearing.

FIG. 24 is an exploded view of a device body and a wrist support of a wearable device according to an embodiment of this application. As shown in FIG. 24, the locking assembly 60 may include a sliding groove 64, a sliding block 65, and a spring plate 66. The sliding block 65 is connected to the second end 341b of the friction shaft, and the sliding groove 64 is provided at a position corresponding to the sliding block 65 of the device body 10. The spring plate 66 is disposed on the sliding block 65, and the spring plate 66 may be used to lock the sliding block 65 in the sliding groove 64 when the sliding block 65 slides into the sliding groove 64, so that two ends of the horizontal rotating shaft 31 are locked and connected to the first end 11 of the device body. When the device body 10 is pulled, the sliding block 65 may be detached from the sliding groove 64, so that the first end 11 of the device body is detached from two ends of the horizontal rotating shaft 31.

It should be noted that a position of the spring plate 66 includes but is not limited to being disposed on the sliding block 65. In some embodiments, the spring plate 66 may be further disposed in the sliding groove 64.

FIG. 25 is a schematic diagram of a cross-sectional structure of a device body and a wrist support of a wearable device according to an embodiment of this application. As shown in FIG. 25, the rotating shaft assembly 30 may include a horizontal rotating shaft 31 and a vertical rotating shaft 32. The locking assembly 60 is disposed at two ends of the horizontal rotating shaft 31, the sliding block 65 of the locking assembly 60 is set on the horizontal rotating shaft 31, the sliding groove 64 is provided on the device body 10, the spring plate 66 is located on the sliding block 65, and the two ends of the horizontal rotating shaft 31 are vertically connected to the first end 11 of the device body, so that the device body 10 can be flipped over around the horizontal rotating shaft 31. One end of the vertical rotating shaft 32 is fastened to the wrist support 20, and the vertical rotating shaft 32 is connected to the horizontal rotating shaft 31 in a horizontal rotation manner, so that the device body 10 is capable of rotating around the vertical rotating shaft 32.

The horizontal rotating shaft 31 includes a rotating shaft support 31a and two rotating assemblies 34 disposed at two ends of the rotating shaft support 31a. An axial direction of the rotating shaft support 31a is perpendicular to an axial direction of the vertical rotating shaft 32. A cavity structure for accommodating the rotating assemblies 34 is disposed at both ends of the rotating shaft support 31a. One end of the rotating assemblies 34 is located in the cavity structure, and the other end is connected to the device body 10.

FIG. 26 is a schematic diagram of a structure of a rotating assembly of a wearable device according to an embodiment of this application. As shown in FIG. 26, in this embodiment, each rotating assembly 34 may include a friction shaft 341, a friction plate 342, a limiting piece 343, and a spring plate 66. The limiting piece 343 and the two friction plates 342 are both sleeved on the friction shaft 341, the limiting piece 343 and the two friction plates 342 are both rotatably connected to the friction shaft 341, and the limiting piece 343 and the two friction plates 342 are both fastened to the rotating shaft support 31a, so that the friction shaft is capable of rotating relative to the rotating shaft support 31a. The spring plate 66 is disposed at the second end 341b of the friction shaft. The limiting piece 343 is in contact with the friction plate 342, the limiting piece 343 is located on a side that is of the friction plate 342 and that is close to the second end 341b of the friction shaft, and the second end 341b of the friction shaft is detachably connected to the device body 10.

It should be noted that, compared with the structure of the rotating shaft assembly 30 in Embodiment 1, the structure of the rotating shaft assembly 30 in this embodiment may be the same except that the structure of the friction shaft 341 in the rotating assembly 34 is different. Therefore, for the structure of the rotating shaft assembly 30 except the friction shaft 341, refer to the descriptions in Embodiment 1, which is not repeated in this embodiment. The following describes a specific structure of the friction shaft 341 in this embodiment.

FIG. 27 is a schematic diagram of a structure of a friction shaft of a wearable device according to an embodiment of this application. As shown in FIG. 27, the friction shaft 341 includes a shaft 3411, a fourth limiting protrusion 3412, and a sliding block 65. The shaft 3411 is located at a first end 341a of the friction shaft, the sliding block 65 is located at a second end 341b of the friction shaft, and the fourth limiting protrusion 3412 extends from the sliding block 65 toward an end face of the first end of the friction shaft 341 to a direction close to the first end 341a of the friction shaft. The sliding block 65 and the friction shaft 341 are in an integrated structure. The sliding block 65 is disposed with a spring plate 66 on two sides facing the sliding groove 64. The sliding block 65 is disposed on an outer edge of the shaft 3411, and may be detachably connected to the device body 10 through the sliding groove 64 and the spring plate 66. A first recess 651 that can accommodate the spring plate 66 is disposed on the sliding block 65, and a hole-shaped structure is disposed on a bottom wall of the first recess 651. Refer to FIG. 26. The spring plate 66 and a first connecting piece 652 are disposed in the first recess 651, the first connecting piece 652 may pass through the spring plate 66 and a through hole for the first connecting piece 652 to pass through, and the first connecting piece 652 passes through the through hole on the spring plate 66, so as to fasten the spring plate 66 in the first recess 651.

FIG. 28 is a schematic diagram of a cross-sectional structure of a device body and a wrist support of a wearable device according to an embodiment of this application. FIG. 29 is an enlarged view of a part B in FIG. 28. As shown in FIG. 28 and FIG. 29, the two first recesses 651 are disposed oppositely on two sides of the sliding block 65, a baffle wall is disposed between the two first recesses 651, and the first connecting piece 652 passes through the baffle wall, so that the two ends of the first connecting piece 652 are respectively located in the two first recesses 651. The spring plate 66 includes a top spring plate 661 and a bottom spring plate 662. The top spring plate 661 and the bottom spring plate 662 are disposed opposite to each other, and are connected to the sliding block 65 through the first connecting piece 652. An arc-shaped protrusion is disposed on both the top spring plate 661 and the bottom spring plate 662, and an arc-shaped recess is disposed on the sliding groove 64. When the arc-shaped protrusion slides into the arc-shaped recess, the locking assembly 60 is in a locked state. When the arc protrusion slides out of the arc groove, the locking assembly 60 is in an unlocked state.

It should be noted that a manner of connecting the spring plate to the first recess includes but is not limited to the foregoing dent connection. The spring plate may also be fastened in the first recess through welding, bonding, fastener connection, or the like. All technical solutions that can fasten the spring plate in the first recess fall within the protection scope of the technical solutions of this application.

FIG. 30 is another schematic cross-sectional view of a device body and a wrist support of a wearable device according to an embodiment of this application. As shown in FIG. 30, a wear-resistant part 64a is disposed on an inner wall of the sliding groove 64, and a recess that can accommodate the sliding block 65 is disposed on the wear-resistant part 64a. The wear-resistant part 64a includes a top wall, a bottom wall, a rear groove wall, and a connection wall, where the top wall and the bottom wall are oppositely disposed at two ends of the connection wall in an axial direction of the vertical rotating shaft 32, the rear groove wall is disposed at one end of the sliding groove 64 that is close to the second end of the device body 10 and is connected to the top wall, the bottom wall, and the connection part 3413, and a hole for mounting a fastener may be disposed on the connection wall, so that the sliding groove 64 is fastened to the device body 10 through the fastener. The arc-shaped recess is oppositely disposed on the top wall and the bottom wall, and both the top spring plate 661 and the bottom spring plate 662 are provided with an arc-shaped protrusion. When the arc-shaped protrusion slides into the arc-shaped recess, the locking assembly 60 is in a locked state; when the arc-shaped protrusion slides out of the arc-shaped recess, the locking assembly 60 is in an unlocked state.

It should be noted that, in this embodiment, the sliding groove 64 is disposed on the wear-resistant part 64a. The sliding groove 64 is disposed on the wear-resistant part 64a, so that abrasion to the device body 10 can be reduced, thereby prolonging the service life of the wearable device 100. In some embodiments, the sliding groove 64 may also be directly disposed on the device body 10, so as to reduce costs compared with disposing the sliding groove 64 on the wear-resistant part 64a. It should be noted that a manner of connecting the sliding groove 64 to the device body 10 includes but is not limited to a fastener connection. In some examples, the sliding groove 64 may be fastened to the device body 10 in a manner of bonding, denting, or the like, provided that the sliding groove 64 can be fastened to the device body 10, which falls within the protection scope of the technical solutions of this application.

In this embodiment, the wearable device may further include a second base 70a, where the second base 70a is disposed at a bottom end of the vertical rotating shaft 32, and the bottom end of the vertical rotating shaft 32 is fastened in the second base 70a. As shown in FIG. 24, a mounting portion for mounting the second base 70a is disposed at the first end 21 of the wrist support, the second base 70a is fixedly disposed on the mounting portion, and a through hole is disposed at the bottom of both the second base 70a and the mounting portion, so that the second base 70a can be fastened on the mounting portion through a fastener.

It should be noted that a connection manner between the second base 70a and the wrist support 20 includes but is not limited to fastener connection. In some embodiments, the second base 70a and the wrist support 20 may also be fastened through clamping connection, bonding, or the like, provided that the second base 70a and the wrist support 20 can be fastened, which falls within the protection scope of the technical solutions of this application.

FIG. 31 is a schematic diagram of a structure of a second base of a wearable device according to an embodiment of this application. FIG. 32 is a schematic diagram of a structure of a second base of a wearable device from another angle according to an embodiment of this application. As shown in FIG. 31 and FIG. 32, the second base 70a is provided with a third hole 71a that can be penetrated by one end of the vertical rotating shaft 32. In addition, a second boss 321a is disposed at a bottom end of the vertical rotating shaft 32, a second boss 73a that blocks the second boss 321a is disposed on an inner wall of the top end of the third hole 71a, and the second boss 321a is in contact with the second boss 73a, so that the bottom end of the vertical rotating shaft 32 is fixedly disposed in the second base 70a.

It should be noted that a shape of the third hole 71a is the same as a shape of the first hole 71 in Embodiment 1. Therefore, for the shape of the third hole 71a, refer to the descriptions in Embodiment 1. Details are not described here again.

In this embodiment, the rotating shaft support 31a is provided with a second through hole 312a (as shown in FIG. 29) that can be partially accommodated by the vertical rotating shaft 32, and the rotating shaft assembly 30 further includes a second motion cam 35a, where the second motion cam 35a is sleeved on the vertical rotating shaft 32 and is located in the second through hole 312a (same as the first through hole 312 in Embodiment 1).

FIG. 33 is a schematic diagram of a partial structure of a rotating shaft assembly of a wearable device according to an embodiment of this application. Refer to FIG. 29 and FIG. 33. The second motion cam 35a is connected to the vertical rotating shaft 32 rotatably, and is fastened to the second through hole 312a, that is, the second motion cam 35a is fastened to the rotating shaft support 31a, which is equivalent to that the second motion cam 35a is fastened to the horizontal rotating shaft 31. The second base 70a is provided with a second extension part 72a extending into the second through hole 312a, the second motion cam 35a abuts against the second extension part 72a, the third hole 71a extends to a top end face of the second extension part 72a, and the second protruding edge 73a is located on the second extension part 72a. In addition, a side that is of the second motion cam 35a and that faces the second extension part 72a is formed into a third concave convex surface that is uneven, and a side that is of the second extension part 72a and that faces the second motion cam 35a is formed into a fourth concave convex surface 722a that cooperates with a concave part of the third concave convex surface. An arc-shaped transition surface 721a is disposed between the convex part and the concave part of the third concave convex surface and the fourth concave surface 722a, so that the second motion cam 35a is rotatably connected to the second base 70a.

It should be noted that, in a use process, the device body 10 flips to drive the friction shaft 341 to rotate around an axial direction of the friction shaft 341 relative to the rotating shaft support 31a, and the device body 10 rotates to drive the horizontal rotating shaft 31 to rotate around an axial direction of the vertical rotating shaft 32. The second motion cam 35a is fastened to the rotating shaft support 31a, which is equivalent to being fastened to the horizontal rotating shaft 31, and two ends of the horizontal rotating shaft 31 are fastened to the device body 10. Therefore, the device body 10 rotates to drive the rotating shaft support 31a to rotate around the vertical rotating shaft 32. The rotating shaft support 31a is fastened to the second motion cam 35a. Therefore, the device body 10 rotates to drive the second motion cam 35a to rotate around the vertical rotating shaft 32. The arc-shaped transition surface 721a is disposed between the convex part and the concave part of the third concave convex surface and the fourth concave surface 722a, so that in one aspect, it can be ensured that the device body 10 does not rotate randomly when no force is applied to the device body 10. In another aspect, when the device body 10 is subject to torque force, transition between the second motion cam 35a and the second extension part 72a may be smooth, so as to implement relative rotation between the second motion cam 35a and the second extension part 72a. It should be noted that, structures of other parts in the rotating shaft assembly 30, such as the third elastic piece 37, the top gasket 36, and the bottom gasket 38, are the same as those in Embodiment 1. Therefore, for related content of the third elastic piece 37, the top gasket 36, and the bottom gasket 38, refer to the descriptions in Embodiment 1. Details are not described here again. In addition, in this embodiment, the structure of the clamping assembly 40 located at the second end of the device body 10 is also the same as that in Embodiment 1. Therefore, for descriptions of the clamping assembly 40, refer to the descriptions in Embodiment 1. Details are not described here again.

In this embodiment, the locking assembly 60 is designed into a structure including a sliding groove 64, a sliding block 65, and a spring plate 66, so that the device body 10 and the wrist support 20 can be separated conveniently and quickly. In this way, the device body 10 can be adjusted at any angle, thereby improving the adaptability of the wearable device 100 to a plurality of scenarios. In addition, a detachable connection is implemented between the sliding groove 64 and the sliding block 65 through insertion and removal. In this way, both the structure and operations are simple, which can reduce costs and learning time of a user.

### Embodiment 13

In this embodiment, except that the structure of the locking assembly 60 is different from that in Embodiment 1, other structures are the same as those in Embodiment 1.

FIG. 34 is an exploded view of a device body and a wrist support of a wearable device according to an embodiment of this application. FIG. 35 is an exploded view of a vertical rotating shaft and a stopping block of a wearable device according to an embodiment of this application. As shown in FIG. 34 and FIG. 35, the locking assembly 60 includes a locking buckle groove 67 and a clamping part 68, where the locking buckle groove 67 is located at the first end 21 of the wrist support, the clamping part 68 is located at the bottom end of the vertical rotating shaft 32, and a locking buckle groove opening 671 that allows the clamping part 68 to slide vertically is disposed at the top end of the locking buckle groove 67. Stopping blocks 672 are disposed on two sides of the locking buckle groove 67, and the two stopping blocks 672 are disposed opposite to each other and are connected to the wrist support 20 slidably, so that the size of the locking buckle groove opening 671 is adjustable. When the vertical rotating shaft 32 rotates in the first direction, the clamping part 68 is clamped in the locking buckle groove 67, and the locking assembly 60 is in the locked state. When the vertical rotating shaft 32 rotates in the second direction opposite to the first direction, the clamping part 68 squeezes the stopping block 672 and enlarges the locking buckle groove opening 671, so that the locking assembly 60 is in the unlocked state.

It should be noted that the first direction may be a clockwise direction, and the second direction may be a counterclockwise direction.

As shown in FIG. 34 and FIG. 35, the clamping part 68 is located at the bottom end of the vertical rotating shaft 32, a clamping protrusion 681 is disposed on the clamping part 68, a cross section of the clamping part 68 is an elliptical shape, the clamping protrusion 681 is disposed on an outer side wall of the clamping part 68, and the clamping protrusion 681 is located at any position outside an elliptical major axis. In this way, when the vertical rotating shaft 32 rotates, it can be ensured that the position of the elliptical major axis is the position with the largest outer diameter of the clamping part 68. Therefore, it can be ensured that the locking buckle groove opening 671 is largest when the vertical rotating shaft 32 rotates to the position of the elliptical major axis, so as to ensure that the clamping part 68 can be pulled out from the locking buckle groove 67, and the device body 10 and the wrist support 20 can be separated.

A clamping groove 6721 is disposed on the stopping block 672, and a side of the clamping protrusion 681 that is in contact with the clamping groove 6721 may be clamped in the clamping groove 6721, so that when the vertical rotating shaft 32 rotates in the first direction, the clamping protrusion 681 is clamped in the clamping groove 6721, and the vertical rotating shaft 32 cannot rotate in this case, where the first direction is a direction in which the clamping protrusion 681 is close to the clamping groove 6721. The side of the clamping protrusion 681 that does not contact with the clamping groove 6721 is smoothly connected to the outer wall of the vertical rotating shaft 32, so as to ensure that when the vertical rotating shaft 32 rotates in a second direction, the clamping part 68 squeezes the stopping block 672 and enlarges the locking buckle groove opening 671, so that the locking assembly 60 is in an unlocked state, where the second direction is a direction in which the clamping protrusion 681 is away from the clamping groove 6721.

The clamping part 68 is set to an elliptical shape, so that the vertical rotating shaft 32 is capable of rotating the size of the locking buckle groove opening 671 in different directions to adjust the size without adding other structures, thereby simplifying the structure of the vertical rotating shaft 32. FIG. 36 is a sectional view of a device body and a wrist support of a wearable device according to an embodiment of this application. As shown in FIG. 36, the locking buckle groove 67 is disposed at the first end 21 of the wrist support, and a locking buckle groove opening 671 into which the clamping part 68 can be vertically slide is disposed at the top end of the locking buckle groove 67. Stopping blocks 672 are disposed on two sides of the locking buckle groove 67, and a clamping groove 6721 that fits the clamping protrusion 681 is disposed on the stopping blocks 672. An inclined surface 6711 is disposed at the top end of the locking buckle groove opening 671, where a diameter of an end of the inclined surface 6711 close to the device body 10 is greater than a diameter of an end of the inclined surface 6711 close to the wrist support 20, so that the vertical rotating shaft 32 can slide into the locking buckle groove 67 along the inclined surface 6711.

It should be noted that positions of the clamping protrusion 681 and the clamping groove 6721 may be interchanged, that is, the clamping protrusion 681 may be disposed on the stopping block 672, and the clamping groove 6721 may be disposed on the clamping part 68. The clamping protrusion 681 disposed on one of the stopping block 672 and the clamping part 68 and the clamping groove 6721 disposed on the other fall within the protection scope of the technical solutions of this application.

As shown in FIG. 36, the locking assembly 60 further includes a base baffle 674 and a second elastic piece 673; a receptacle for mounting a stopping block 672 and a second elastic piece 673 is disposed on the wrist support 20, the stopping block 672 is disposed in the receptacle; a second elastic piece 673 is disposed between the stopping block 672 and a side wall of the receptacle, and the stopping block 672 squeezes the second elastic piece 673 to enlarge the locking buckle groove opening 671. The base baffle 674 covers the top end of the receptacle, the base baffle 674 is provided with an assembly hole, the top end of the stopping block 672 is located in the assembly hole, a gap is provided between the side wall of the assembly hole and the stopping block 672, and the gap is used to provide space for sliding of the stopping block 672.

As shown in FIG. 35 and FIG. 36, a third through hole that can be partially accommodated by the vertical rotating shaft 32 is disposed in the rotating shaft support 31a. The rotating shaft assembly 30 further includes a third motion cam 35b, where the third motion cam 35b is sleeved on the vertical rotating shaft 32 and is connected to the vertical rotating shaft 32 rotatably, and the third motion cam 35b is located in the third through hole and is fastened to the third through hole, which is equivalent to that the third motion cam 35b is fastened to the rotating shaft support 31a, that is, the third motion cam 35b is fastened to the horizontal rotating shaft 31, and two ends of the horizontal rotating shaft 31 are fastened to the device body 10. Therefore, the third motion cam 35b is equivalent to a fixed connection to the device body, where two ends of the third motion cam 35b may be provided with a clamping block that extends outward, a baffle wall that cooperates with the clamping block is provided in the third through hole, so that the third motion cam 35b is fastened to the third through hole, a first fixed cam 322 extending into the third through hole is provided on the vertical rotating shaft 32, and the first fixed cam 322 extends outward around the vertical rotating shaft 32. The third motion cam 35b abuts against the first fixed cam 322. A side that is of the third motion cam 35b and that faces the first fixed cam 322 is formed into a fifth concave convex surface that is uneven, and a side that is of the first fixed cam 322 and that faces the third motion cam 35b is formed into a sixth concave convex surface 3221 that is matched with a concave part of the fifth concave convex surface.

As shown in FIG. 35, an arc-shaped transition surface 721a and a right-angle transition surface are disposed at intervals between a convex part and a concave part of the fifth concave surface, and an arc-shaped transition surface 721a and a right-angle transition surface are disposed at intervals between a convex part and a concave part of the sixth concave convex surface 3221. In addition, the arc-shaped transition surface 721a of the fifth concave surface is cooperatively connected to the arc-shaped transition surface 721a of the sixth concave convex surface 3221, and the right-angle transition surface of the fifth concave surface is cooperatively connected to the right-angle transition surface of the sixth concave convex surface 3221, so that when the device body 10 rotates around the vertical rotating shaft 32 in the first direction, the third motion cam 35b may rotate around the vertical rotating shaft 32. When the device body 10 rotates around the vertical rotating shaft 32 in the second direction, the third motion cam 35b is clamped on the first fixed cam 322 and drives the vertical rotating shaft 32 of the first fixed cam 322 to rotate in the second direction, so that the clamping protrusion 681 slides out of the clamping groove 6721, and the vertical rotating shaft 32 is separated from the first end 21 of the wrist support.

It should be noted that structures of other components in the rotating shaft assembly 30, such as the third elastic piece 37 (not shown in the figure, and referring to Embodiment 1), the top gasket 36, and the bottom gasket 38, are the same as those in Embodiment 1. Therefore, for related content of the third elastic piece 37, the top gasket 36, and the bottom gasket 38, refer to the descriptions in Embodiment 1. Details are not described here again. In this embodiment, the structure of the clamping assembly 40 located at the second end of the device body 10 is also the same as that in Embodiment 1. Therefore, for descriptions of the clamping assembly 40, refer to the descriptions in Embodiment 1. Details are not described here again.

### Embodiment 14

FIG. 37 is an exploded view of a device body and a wrist support of a wearable device according to an embodiment of this application. FIG. 38 is a sectional view of a device body and a wrist support of a wearable device according to an embodiment of this application. As shown in FIG. 37 and FIG. 38, a bottom end of the vertical rotating shaft 32 is fastened to the wrist support 20, and two ends of the horizontal rotating shaft 31 are respectively fastened to the device body 10 through fasteners. When the locking assembly 60 is in the locked state, the top end of the vertical rotating shaft 32 is located in the horizontal rotating shaft 31, and the locking assembly 60 locks and connects the horizontal rotating shaft 31 and the vertical rotating shaft 32, so that the first end 11 of the device body is connected to the first end 21 of the wrist support; when the locking assembly 60 is in the unlocked state, the horizontal rotating shaft 31 is detached from the vertical rotating shaft 32, so that the first end 11 of the device body is separated from the first end 21 of the wrist support.

It should be noted that, the same as the foregoing three embodiments, the horizontal rotating shaft 31 includes a rotating shaft support 31a and rotating assemblies 34 disposed at two ends of the rotating shaft support 31a, an axial direction of the rotating shaft support 31a is perpendicular to an axial direction of the vertical rotating shaft 32, and a cavity structure for accommodating the rotating assemblies 34 is disposed at both ends of the rotating shaft support 31a; one end of the rotating assemblies 34 is located in the cavity structure, and the other end is connected to the device body 10. The rotating assembly includes a friction shaft 341, a friction plate 342, and a limiting piece 343. The limiting piece 343 and the two friction plates 342 are all sleeved on the friction shaft 341, the limiting piece 343 and the two friction plates 342 are all rotatably connected to the friction shaft 341, and the limiting piece 343 and the two friction plates 342 are all fastened to the rotating shaft support 31a, so that the friction shaft is capable of rotating relative to the rotating shaft support 31a. The limiting piece 343 is in contact with the friction plate 342, the limiting piece 343 is located on a side that is of the friction plate 342 and that is close to the second end 341b of the friction shaft, and the second end 341b of the friction shaft is fastened to the device body 10. Therefore, two ends of the horizontal rotating shaft 31 are second ends 341b of the two friction shafts.

In this embodiment, as shown in FIG. 37, the vertical rotating shaft 32 is sleeved with a limiting sleeve 39, and the limiting sleeve 39 is rotatably connected to the vertical rotating shaft 32. The locking assembly 60 is used to lock and connect or unlock the rotating shaft support 31a and the limiting sleeve 39, which is equivalent to locking and connecting or unlocking the horizontal rotating shaft 31 and the limiting sleeve 39.

In this embodiment, as shown in FIG. 37, the locking assembly 60 includes a buckle groove 69, a locking key 69a, and a locking piece 69a3, where the locking piece 69a3 is telescopically disposed in the rotating shaft support 31a in the axial direction of the rotating shaft support 31a, and the buckle groove 69 is disposed on the limiting sleeve 39. One end of the locking piece 69a3 is provided with a locking end clamped to the buckle groove 69. When the locking end of the locking piece 69a3 is clamped to the buckle groove 69, the limiting sleeve 39 is locked and connected to the rotating shaft support 31a, which is equivalent to that the limiting sleeve 39 is locked and connected to the horizontal rotating shaft 31. The locking key 69a is telescopically disposed on the rotating shaft support 31a, and when the locking key 69a is pressed, one end of the locking key 69a drives the locking piece 69a3 to move away from the buckle groove 69, and when the locking end of the locking piece 69a3 is detached from the buckle groove 69, the limiting sleeve 39 is detached from the rotating shaft support 31a, which is equivalent to detaching the limiting sleeve 39 from the horizontal rotating shaft 31.

FIG. 39 is a schematic diagram of structures of a limiting sleeve and a vertical rotating shaft of a wearable device according to an embodiment of this application. As shown in FIG. 39, a protrusion 392 is disposed on a side that is of the limiting sleeve 39 and that faces the locking button 69a, a buckle groove 69 is disposed on two sides of the protrusion 392, and a locking piece 69a3 is correspondingly disposed in each buckle groove 69. An orthographic projection of the protrusion 392 toward the limiting cylinder body is of an arrow structure, and an arrow in the arrow structure points to the top end of the vertical rotating shaft 32. The rotating shaft assembly 30 may further include a third base 70b, where the third base 70b is disposed at the bottom end of the vertical rotating shaft 32, and a third extension part 70b1 extending toward the top end of the vertical rotating shaft 32 is disposed on the third base 70b. A bottom end of the limiting sleeve 39 abuts against the third extension part 70b1, a seventh concave convex surface 391 that is not evenly concave is disposed at the bottom end of the limiting sleeve 39, and an eighth concave convex surface 70b2 that fits the seventh concave convex surface 391 is disposed on a surface that is of the third extension part 70b1 and that faces the limiting sleeve 39. An arc-shaped transition surface 721a is disposed between the convex part and the concave part of the seventh concave convex surface 391 and the eighth concave surface 70b2, so that the limiting sleeve 39 is rotatably connected to the third base 70b. In this way, when the locking end of the locking piece 69a3 is clamped to the buckle groove 69, the limiting sleeve 39 is locked and connected to the rotating shaft support 31a. The device body 10 rotates to enable the rotating shaft support 31a to rotate around the vertical rotating shaft 32, which is equivalent to a case in which the horizontal rotating shaft 31 rotates around the vertical rotating shaft 32.

FIG. 40 is an exploded view of a lock button disposed in a wearable device according to an embodiment of this application. FIG. 41A is a sectional view of a rotating shaft assembly of a wearable device according to an embodiment of this application. As shown in FIG. 40 and FIG. 41, the locking key 69a may include a key cover 69a1 and a fourth elastic piece 69a2, where the key cover 69a1 is fastened to an outer surface of the rotating shaft support 31a, and an opening that can be exposed on a pressing surface of the locking key 69a is provided on the key cover 69a1. One end of the fourth elastic piece 69a2 is connected to the rotating shaft support 31a, the other end of the fourth elastic piece 69a2 is connected to the locking piece 69a3, and the locking piece 69a3 is telescopically disposed through the fourth elastic piece 69a2. Two ends of the locking key 69a are respectively provided with drive parts 69a4, each drive part 69a4 is provided with a first slope 69a5, and each locking piece 69a3 is provided with a second slope 69a6 cooperating with the first slope 69a5. The first slope 69a5 is used to drive the second slope 69a6 to move when the locking key 69a is pressed, so that the locking piece 69a3 moves away from the buckle groove 69. The second inclined surface 69a6 is used to drive the first inclined surface 69a5 to move under elastic force of the fourth elastic piece 69a2 after the external force on the locking key 69a is removed, so that the locking piece 69a3 is reset.

It should be noted that, the fourth elastic piece 69a2 is in a compressed state when being mounted, so that it can be ensured that the locking piece 69a3 is located in the buckle groove 69 and the locking key 69a is in a locked state without external force.

As shown in FIG. 41A, the rotating shaft assembly 30 may further include two abutting assemblies 80 disposed in the rotating shaft support 31a and symmetrical to the vertical rotating shaft 32. One end of each abutting assembly 80 is connected to the first end 341a of the friction shaft, and the other end of each abutting assembly 80 is telescopically abutted against the outer wall of the limiting sleeve 39. Specifically, each abutting assembly 80 includes an abutting block 81 and a fifth elastic piece 82. One end of the fifth elastic piece 82 is connected to the inside of the first end 341a of the friction shaft, the other end of the fifth elastic piece 82 is connected to the abutting block 81, one end of the abutting block 81 is disposed outside the first end 341a of the friction shaft, and the other end of the abutting block 81 is provided with abutting connector. A second recess 393 clamped to the abutting connector is disposed on an outer wall of the limiting sleeve 39.

In this embodiment, the rotating shaft assembly 30 may further include a sixth elastic piece 90, where the sixth elastic piece 90 is sleeved on the vertical rotating shaft 32, one end of the sixth elastic piece 90 abuts against the inner bottom surface of the limiting sleeve 39, and one end of the sixth elastic piece 90 is connected to the top end of the vertical rotating shaft 32 through a clamping spring. A rotating shaft gasket is disposed between the top end of the limiting sleeve 39 and the clamping spring.

In this embodiment, the structure of the clamping assembly 40 located at the second end of the device body 10 is also the same as that in Embodiment 1. Therefore, for descriptions of the clamping assembly 40, refer to the descriptions in Embodiment 1. Details are not described here again.

It should be noted that the first elastic piece 633, the second elastic piece 673, the third elastic piece 37, the fourth elastic piece 69a2, the fifth elastic piece 82, and the sixth elastic piece 90 in the foregoing four embodiments of this application include but are not limited to spring structures. According to the wearable device provided in embodiments of this application, the rotating shaft assembly is disposed, so that the device body is capable of rotating around the horizontal rotating shaft and the vertical rotating shaft, and the device body can be separated from the wrist support by disposing the locking assembly. When the device body is worn, the second end of the device body is clamped and connected to the second end of the wrist support through the clamping assembly, so that the device body can be easily worn. When the device body is opened, the device body can be lifted by pressing the clamping assembly, so that the second end of the device body is separated from the second end of the wrist support. Under the action of the rotating shaft assembly, the device body may rotate around the horizontal rotating shaft, or may rotate around the vertical rotating shaft, thereby improving playability and mechanical sense of the wearable device. In addition, when the clamping assembly is opened, the device body can be further removed from the wrist support, so that the device body is completely separated from the wrist support. In this way, adaptability to a plurality of scenarios can be improved.

It should be noted that, in this embodiment, the locking assembly is designed into a structure including a buckle groove, a locking key, and a locking piece, and the locking assembly may be unlocked by pressing the locking key, so that the horizontal rotating shaft is separated from the vertical rotating shaft, and the device body is separated from the wrist support. Certainly, the structure of the locking assembly includes but is not limited to the structure in the foregoing embodiment. In some embodiments, the locking assembly may be designed as another structure, as shown in FIG. 41B.

FIG. 41B is a schematic diagram of a partial structure of a wrist support and a rotating shaft assembly of a wearable device according to an embodiment of this application. As shown in FIG. 41B, the locking assembly 60 includes a concession recess 69i and a locking boss 61a, where a top end of the rotating shaft support 31a is provided with an avoidance opening (not shown in the figure) for the top end of the vertical rotating shaft 32 to pass through. An inner wall of the avoidance opening is provided with a concession recess 69i. The locking boss 61a is provided at the top end of the vertical rotating shaft 32. In addition, when the locking boss 61a and the concession recess 69i overlap upward on the axis of the vertical rotating shaft 32, the rotating shaft support 31a and the vertical rotating shaft 32 are in an unlocked state. When the locking boss 61a and the concession recess 69i are staggered upward on the axis of the vertical rotating shaft 32, the rotating shaft support 31a and the vertical rotating shaft 32 are in a locked state.

It should be noted that, the positions of the concession recess 69i and the locking boss 61a do not constitute a limitation on the protection scope of the technical solutions of this application, provided that one of the concession recess 69i and the locking boss 61a is disposed on the rotating shaft support 31a, and the other of the concession recess 69i and the locking boss 61a is disposed on the vertical rotating shaft 32, which falls within the protection scope of the technical solutions of this application.

FIG. 41C is a schematic diagram of a partial structure of a wrist support and a rotating shaft assembly 30 of a wearable device according to an embodiment of this application. With reference to FIG. 41B and FIG. 41C, an annular track 31a2 disposed around the avoidance opening is disposed at the top end of the rotating shaft support 31a, and the relief groove 69i is located on the annular track 31a2 and communicates with the avoidance opening. In addition, when the locking boss 61a and the concession recess 69i are staggered upward on the axis of the vertical rotating shaft 32, the locking boss 61a is located on the annular track 31a2, so that the vertical rotating shaft 32 is locked and connected to the rotating shaft support 31a. A lock ring 324 is sleeved on the top end of the vertical rotating shaft 32, and an outer edge of the lock ring 324 protrudes outward to form a lock boss 61a. The vertical rotating shaft 32 is sleeved with a pressure ring 323, and the pressure ring 323 is located between the top end of the limiting sleeve 39 and the lock ring 324 on the vertical rotating shaft 32.

The pressure ring 323 is disposed, so that a mounting position may be provided for the locking boss 61a, thereby simplifying a structure of the locking assembly 60 and reducing costs.

FIG. 41D is a schematic diagram of a cross-sectional structure of a partial structure of a wrist support and a rotating shaft assembly of a wearable device according to an embodiment of this application. As shown in FIG. 41D, a limiting block 394 is disposed on an outer side wall of the limiting sleeve 39, and a limiting cavity 31a1 cooperating with the limiting block 394 is disposed on the rotating shaft support 31a. The limiting block 394 and the limiting cavity 31a1 are disposed, so that when the device body 10 is connected to the wrist support 20, relative rotation between the rotating shaft support 31a and the limiting sleeve 39 can be prevented.

According to the wearable device provided in embodiments of this application, the locking boss 61a is disposed, so that when the locking boss 61a is staggered with the concession recess 69i, the rotating shaft support 31a and the vertical rotating shaft 32 may be in a locked state, so as to prevent the device body 10 from being separated from the wrist support 20, thereby improving stability of the connection between the device body 10 and the wrist support 20.

In the foregoing embodiment, a technical solution in which when the device body of the wearable device is separated from the wrist support, the vertical rotating shaft is reserved on the wrist support, and the horizontal rotating shaft is separated from the wrist support together with the device body is described. In addition, in this embodiment, the top end of the vertical rotating shaft is a free end, and the top end of the vertical rotating shaft is rotatably connected to the limiting sleeve. It may be understood that, in some other embodiments, the vertical rotating shaft may be further designed as another structure to implement the technical solution in which the horizontal rotating shaft is separated from the vertical rotating shaft when the device body is separated from the wrist support. For example, Embodiment 15 is described in the following.

### Embodiment 15

FIG. 42 is a schematic diagram of a cross-sectional structure of a device body and a wrist support of a wearable device according to an embodiment of this application. FIG. 43 is an exploded view of a device body, a wrist support, and a rotating shaft assembly of a wearable device according to an embodiment of this application.

As shown in FIG. 42 and FIG. 43, in this embodiment, the wearable device 100 includes a device body 10, a wrist support 20, and a rotating shaft assembly 30. The rotating shaft assembly 30 includes a shaft housing 33, a horizontal rotating shaft 31, and a vertical rotating shaft 32. The bottom end of the vertical rotating shaft 32 is connected to the first end 21 of the wrist support rotatably, the bottom end of the horizontal rotating shaft 31 is sleeved on the top end of the vertical rotating shaft 32, the horizontal rotating shaft 31 is fastened to the device body 10, and the locking assembly 60 is disposed on the vertical rotating shaft 32. In addition, the locking assembly 60 is used to lock and connect the rotating shaft support 31a of the horizontal rotating shaft 31 and the vertical rotating shaft 32 vertically, so that the device body 10 and the wrist support 20 are locked and connected.

FIG. 44 is a schematic diagram of an exploded structure of a horizontal rotating shaft of a wearable device according to an embodiment of this application. As shown in FIG. 43 and FIG. 44, the horizontal rotating shaft 31 includes a rotating shaft support 31a and a rotating assembly 34, and the rotating assembly 34 includes a friction shaft 341, a rotating head 3414 disposed on the friction shaft 341, and a plurality of friction plates 342. The rotating head 3414 is disposed at the second end 341b of the friction shaft, the rotating head 3414 is fastened to both the device body 10 and the friction shaft 341, and the friction shaft 341 is fastened to the rotating head 3414 through riveting. Certainly, in some embodiments, the friction shaft 341 and the rotating head 3414 may be fastened in another manner, in this embodiment, a specific manner of fixedly connecting the rotating head 3414 and the friction shaft 341 is not limited. The friction plate 342 is fixedly disposed on the rotating shaft support 31a, and the friction plate 342 is rotatably connected to the friction shaft 341. In this way, when the device body 10 is lifted, the friction shaft 341 rotates relative to the rotating shaft support 31a, so that the device body 10 can be flipped over relative to the horizontal rotating shaft 31.

With reference to FIG. 43 and FIG. 44, two ends of the rotating shaft support 31a are respectively provided with a cavity structure 311 that accommodates the rotating assembly 34, where a barrier edge protruding outward in an axial direction of the friction shaft 341 is provided at the first end 341a of the friction shaft, and the friction shaft 341 penetrates the cavity structure 311 of the rotating shaft support 31a, so that the barrier edge can be clamped on the rotating shaft support 31a. Both the shaft 3411 and the friction plate 342 of the friction shaft 341 are located in the cavity structure 311 of the rotating shaft support 31a.

A fourth internal groove 31a7 clamped and connected to the friction plate 342 is disposed in the cavity structure 311 of the rotating shaft support 31a, and the fifth limiting protrusion 3421 on the friction plate 342 is cooperatively connected to the fourth internal groove 31a7, so that the friction plate 342 can be fastened in the rotating shaft support 31a. The second end 341b of the friction shaft penetrates through the rotating head 3414, one end of the rotating head 3414 that is close to the rotating shaft support 31a is rotatably connected to the rotating shaft support 31a, and the end of the rotating head 3414 that is close to the rotating shaft support 31a seals the friction plate 342 in the rotating shaft support 31a, thereby preventing the friction plate 342 from falling off from the rotating shaft support 31a. In addition, the friction plate 342 is disposed, so that abrasion between the friction shaft 341 and the rotating shaft support 31a can be avoided. This improves a service life of the rotating shaft support 31a and reduces maintenance costs.

It should be noted that, in this embodiment of this application, there are two rotating assemblies 34, which are respectively disposed on two sides of the rotating shaft support 31a, so that both ends of the rotating shaft assembly 30 are connected to the device body 10, thereby improving stability of the connection between the rotating shaft assembly 30 and the device body 10. In addition, a quantity of the friction plates 342 is not specifically limited, and may be three, four, or more, which may be specifically set based on a specific requirement.

FIG. 45 is a schematic diagram of an exploded structure of a vertical rotating shaft of a wearable device according to an embodiment of this application. As shown in FIG. 42 and FIG. 45, the top end of the vertical rotating shaft 32 is provided with a slide rail support 325, a bottom end of the rotating shaft 31a of the horizontal rotating shaft 31 is provided with an assembly cavity 31a3 into which the slide rail support 325 is capable of vertically extending upward, the bottom end of the vertical rotating shaft 32 is provided with a Z-axis support 326, the Z-axis support 326 is disposed at the first end 21 of the wrist support, and the Z-axis support 326 is rotatably connected to the vertical rotating shaft 32.

In this embodiment, the slide rail support 325 may include a slide rail cover 3251, a slide rail cavity 3252, and a slide rail wall 3253 enclosing the slide rail cavity 3252, where the slide rail cover 3251 is disposed at the top end of the slide rail wall 3253, so that the top end of the slide rail cavity 3252 is sealed. This prevents dust falling or part loss in the slide rail cavity 3252. In this embodiment, a manner of connecting the slide rail cover 3251 to the slide rail wall 3253 is not limited, and may be riveting, welding, bonding, or the like. In addition, the slide rail cover 3251 may be a rectangular plate structure shown in FIG. 45, or certainly may be a plate structure of another shape, which may be specifically determined based on a shape of the slide rail support 325. Therefore, a specific structure of the slide rail cover 3251 is not specifically limited in embodiments of this application. In this embodiment, the locking assembly 60 is disposed in the slide rail cavity 3252. The locking assembly 60 includes two first locking assemblies (not shown in the figure) and two second locking assemblies 60b. Both the two first locking assemblies and the two second locking assemblies 60b are telescopically connected to the slide rail support 325, and a part of the first locking assembly and a part of the second locking assembly 60b are both located in the slide rail support 325.

The two first locking assemblies are disposed in the slide rail support 325 close to the vertical rotating shaft 32, and the two first locking assemblies are respectively symmetrically disposed with respect to the center of the vertical rotating shaft 32; the two second locking assemblies 60b are disposed in the axial direction of the horizontal rotating shaft 31, and the two second locking assemblies 60b are disposed at two ends of the slide rail support 325. The first locking assembly is used to lock and connect the slide rail support 325 to the inner wall of the assembly cavity 31a3 when the horizontal rotating shaft 31 is in the first position, and when the horizontal rotating shaft 31 rotates to the second position, the first locking assembly is in an unlocked state. The second locking assembly 60b is used to perform elastic locking between the slide rail support 325 and the assembly cavity 31a3 of the horizontal rotating shaft 31.

As an explanation, the elastic locking means that locking or unlocking is implemented through an elastic piece, and generally speaking, the elastic locking is a flexible buckle, which may be automatically locked during mounting, and may also be unlocked through external force or another means.

It should be noted that the first locking assembly may be telescopic in a y direction relative to the slide rail support 325, and the second locking assembly 60b may be telescopic in an x direction relative to the slide rail support 325. In addition, when neither the first locking assembly nor the second locking assembly 60b is subject to external force, a part of the first locking assembly is clamped to the rotating shaft support 31a, and a part of the second locking assembly 60b is also clamped to the rotating shaft support 31a, after the first locking assembly is unlocked, the second locking assembly 60b may be directly unlocked through external force because the second locking assembly 60b is telescopically connected to the slide rail support 325, and the mating surface between the second locking assembly 60b and the rotating shaft support 31a is an inclined surface (as shown in FIG. 42 and FIG. 45).

FIG. 46 is a schematic diagram of a cross-sectional structure of a partial structure, of a device body and a wrist support, in which the device body of a wearable device is located in a first position according to an embodiment of this application.

As shown in FIG. 45 and FIG. 46, each first locking assembly includes a telescopic buckle 60a1, a first internal groove 60a2, and a first slide rail spring 60a3, and the telescopic buckle 60a1 is matched with the first internal groove 60a2. The first internal groove 60a2 is located on an inner wall of the assembly cavity 31a3, the telescopic buckle 60a1 is telescopically connected to the slide rail support 325, one end of the telescopic buckle 60a1 is located in the slide rail cavity 3252 of the slide rail support 325, the other end of the telescopic buckle 60a1 is provided with a buckle part 60a11, and the buckle part 60a11 may extend out of the slide rail support 325. The slide rail support 325 is connected to the inner wall of the assembly cavity 31a3 through locking and connection between the buckle part 60a11 of the telescopic buckle 60a1 and the first internal groove 60a2. The first slide rail spring 60a3 is located in the slide rail cavity 3252 of the slide rail support 325, one end of the first slide rail spring 60a3 is connected to one end of the telescopic buckle 60a1, and the other end of the first slide rail spring 60a3 abuts against the inner wall of the slide rail support 325 (referring to FIG. 45). In this way, when the telescopic buckle 60a1 is squeezed in a direction close to the slide rail cavity 3252, the telescopic buckle 60a1 may move backward relative to the slide rail wall 3253, to drive the buckle part 60a11 of the telescopic buckle 60a1 to move backward. When the buckle part 60a11 moves out of the first internal groove 60a2, the first locking assembly is in the unlocked state.

In this embodiment, the telescopic buckle 60a1 is telescopically connected to the rotating shaft support 31a. An end of the telescopic buckle 60a1 is provided with a first drive part 60a12, and an end of the first drive part 60a12 is located outside the slide rail support 325. The first drive part 60a12 is used to drive the telescopic buckle 60a1 to move horizontally when the horizontal rotating shaft 31 rotates to the second position, so as to drive the buckle part 60a11 of the telescopic buckle 60a1 to be detached from the first internal groove 60a2, so that the first locking assembly is in the unlocked state.

A driving process of the telescopic buckle 60a1 requires cooperation between the first drive part 60a12 and the Z-axis support 326. As shown in FIG. 45, the Z-axis support 326 is provided with a rotation hole 3261 that can be rotated by the vertical rotating shaft 32, and a bottom end of the vertical rotating shaft 32 extends into the Z-axis support 326 through the rotation hole 3261. A friction plate 342 and a fastening plate 3263 (a quantity of the friction plates 342 is not limited) may be sleeved on a structure in which the vertical rotating shaft 32 is located in the Z-axis support 326, the friction plate 342 is fastened to the Z-axis support 326, and the vertical rotating shaft 32 is rotatably connected to the friction plate 342, so that the vertical rotating shaft 32 is rotatably connected to the Z-axis support 326. The vertical rotating shaft 32 is fastened to the fastening plate 3263, the fastening plate 3263 is movably connected to the Z-axis support 326, and a blocking edge 3264 for blocking the fastening plate 3263 is disposed at a bottom end of the Z-axis support 326, where an outer diameter of the fastening plate 3263 is greater than an inner diameter of the blocking edge 3264, so that the vertical rotating shaft 32 is fastened to the first end 21 of the wrist support through the Z-axis support 326, and may rotate relative to the Z-axis support 326. A sunken groove 3262 is disposed on the Z-axis support 326 in a circumferential direction of the rotation hole 3261. The first drive part 60a12 is located at the sunken groove 3262, and the sunken groove 3262 is a flat groove. A part of the groove wall of the flat groove is used to apply force to the first drive part 60a12 when the horizontal rotating shaft 31 rotates toward the second position, so that the first drive part 60a12 drives the telescopic buckle 60a1 to move.

It should be noted that structures of the vertical rotating shaft 32 and the Z-axis support 326 include but are not limited to the structures in this embodiment, provided that functions of the vertical rotating shaft 32 and the Z-axis support 326 can be implemented.

FIG. 47 is a schematic diagram of a cross-sectional structure, of a wrist support, in which a device body of a wearable device is located in a first position according to an embodiment of this application. FIG. 48 is a schematic diagram of a cross-sectional structure, of a device body and a wrist support, in which the device body of a wearable device is located in a second position according to an embodiment of this application, FIG. 49 is a schematic diagram of a cross-sectional structure, of a wrist support, in which a device body of a wearable device is located in a second position according to an embodiment of this application.

With reference to FIG. 46 and FIG. 47, it can be learned that, when located at the first position, the first drive part 60a12 is located at a position with a largest diameter of the sunken groove 3262 of the Z-axis support 326. In this case, the clamping parts of the two telescopic buckles 60a1 are in the first internal groove 60a2, and the first locking assembly is in a locked state.

As shown in FIG. 48 and FIG. 49, when the device body 10 rotates to the second position, the first drive part 60a12 is located at a position with a smallest diameter of the sunken groove 3262 of the Z-axis support 326. In this case, the clamping parts of the two telescopic buckles 60a1 are moved out of the first internal groove 60a2, and the first locking assembly is in an unlocked state.

It should be noted that, the distance from the position with the largest diameter of the sunken groove 3262 to the position with the smallest diameter of the sunken groove 3262 by which the first drive part 60a12 moves to the slide rail support 325 can exactly enable the clamping part of the telescopic buckle 60a1 to move out of the first internal groove 60a2. A shape and a size of the sunken groove 3262, and specific sizes of the first drive part 60a12 and the buckle part 60a11 are not specifically limited herein, and may be specifically set provided that a specific function condition of the sunken groove 3262 is met.

FIG. 50 is a schematic diagram of a structure of a telescopic buckle of a wearable device according to an embodiment of this application. As shown in FIG. 50, the telescopic buckle 60a1 is of an integrated structure, a side of the buckle part 60a11 of the telescopic buckle 60a1 that is close to the wrist support is a plane 60a14, and a surface that is close to the device body 10 is a slope 60a13.

In this way, when the first locking assembly is in the locked state, because the side of the buckle part 60a11 close to the wrist support 20 is the plane 60a14, the plane 60a14 may be clamped in the first internal groove 60a2, which ensures large locking force and prevents the wrist support 20 from being accidentally separated from the device body 10 in the locked state.

The side that is of the buckle part 60a11 and that is close to the device body 10 is set to the slope 60a13. In this way, when the device body 10 is connected to the wrist support 20, it can be ensured that the rotating shaft support 31a can slide relative to the slope 60a13. Because the telescopic buckle 60a1 is telescopically connected to the slide rail support 325, when the rotating shaft support 31a is pressed downward, the buckle part 60a11 is pushed inward, so that the buckle part 60a11 moves inside the slide rail support 325, and the slide rail support 325 enters the assembly cavity 31a3 of the rotating shaft support 31a. When the bottom end of the buckle part 60a11 reaches the bottom end of the first internal groove 60a2, that is, when there is no side wall for squeezing the buckle part 60a11 on the rotating shaft support 31a, the buckle part 60a11 automatically rebounds to the first internal groove 60a2, so that the rotating shaft support 31a and the slide rail support 325 are locked and connected, that is, the device body 10 and the wrist support 20 are locked and connected.

It should be noted that, in this embodiment, the first position is a position at which the locking assembly 60 is in a locked state, that is, a position at which the device body 10 cannot be removed from the wrist support 20, and the second position is a position at which the locking assembly 60 is in an unlocked state, that is, a position at which the device body 10 may be separated from the wrist support 20. In this embodiment, the first position is an initial position (a position shown in FIG. 42) of the device body 10 when the device body 10 does not rotate, or is any position that only rotates around the horizontal rotating shaft 31 by a specific angle; the second position is a position (a position shown in FIG. 51) of the device body 10 that rotates around the vertical rotating shaft 32 by 90°, and from the first position to the second position is a process of rotating the device body 10 from 0° to 90° around the vertical rotating shaft 32. As shown in FIG. 51, when the device body 10 is separated from the wrist support 20, the device body 10 is fastened to the horizontal rotating shaft 31, and the wrist support 20 is fastened to the vertical rotating shaft 32. That is, when the device body 10 is separated from the wrist support 20, a part of the rotating shaft assembly 30 is reserved on the wrist support 20, and the other part is separated from the wrist support 20 together with the device body 10.

In addition, as shown in FIG. 42 and FIG. 45, each second locking assembly 60b includes an elastic ejector block 60b1 and a second internal groove 60b2 that cooperates with the elastic ejector block 60b1, where the second internal groove 60b2 is located on an inner wall of the assembly cavity 31a3, and at least a part of the elastic ejector block 60b1 is located in the slide rail support 325 and is close to an end of the slide rail support 325. In addition, elastic locking is performed between the end part of the slide rail support 325 and the assembly cavity 31a3 through clamping between the elastic ejector block 60b1 and the second internal groove 60b2. Each second locking assembly 60b includes a second slide rail spring 60b3, the second slide rail spring 60b3 is located in the slide rail support 325, one end of the second slide rail spring 60b3 is connected to the elastic ejector block 60b1, and the other end of the second slide rail spring 60b3 abuts against an inner wall of the slide rail support 325, where the inner wall of the slide rail support 325 is a partial structure of the slide rail wall 3253 located in the slide rail cavity 3252.

First inclined guiding surfaces 60b 11 are disposed on both a top and a bottom of an end that is of the elastic ejector block 60b1 and that is close to the second internal groove 60b2, and a second inclined guiding surface cooperating with the first inclined guiding surface 60b 11 is disposed on the second internal groove 60b2, where the second inclined guiding surface is an inner wall of the second internal groove 60b2. In this way, when the device body 10 is mounted on the wrist support, the device body 10 may be directly pressed downward, in this way, an inward thrust is generated on the first inclined guiding surface 60b11 inside the assembly cavity 31a3, so that the slide rail support 325 slides into the assembly cavity 31a3 of the rotating shaft support 31a. When the slide rail support 325 slides into the assembly cavity 31a3, the elastic ejector block 60b1 automatically rebounds, and the device body 10 and the wrist support 20 are locked and connected. When the device body 10 moves out of the wrist support 20, the device body 10 may be directly pulled up. In this way, the second inclined guiding surface at the bottom end generates an inward push force on the first inclined guiding surface 60b 11 at the bottom end, so that the elastic ejector block 60b 1 moves toward the inside of the slide rail support 325, and the device body 10 is separated from the wrist support 20.

Still refer to FIG. 45. Positioning protrusions 3254 are disposed on two opposite sides of the slide rail support 325, and a positioning groove 31a4 cooperating with the positioning protrusions 3254 is disposed on an inner wall of the assembly cavity 31a3. The positioning protrusion 3254 is disposed, so that the rotating shaft support 31a of the horizontal rotating shaft 31 can slide downward only in a direction of the positioning protrusion 3254 when the device body 10 is connected to the wrist support 20. This can prevent a mounting failure caused by misalignment of mounting. In addition, no sticking phenomenon occurs during insertion and removal.

Certainly, structures of the positioning protrusion 3254 and the positioning groove 31a4 include but are not limited to the structures shown in the accompanying drawings in embodiments of this application. In some embodiments, the structures may also be other structures, provided that it can be ensured that the slide rail support 325 can slide in or out of the rotating shaft support 31a in parallel. Therefore, the structures of the positioning protrusion 3254 and the positioning groove 31a4 are not specifically limited in this embodiment.

In addition, a third internal groove 31a6 is further disposed on a side wall at the bottom end of the rotating shaft support 31a. In this embodiment, there may be four third internal grooves 31a6. Two third internal grooves 31a6 are disposed on a front side and a rear side of the rotating shaft support 31a respectively. Third internal grooves 31a6 located on different sides are disposed opposite to each other, and a fastening block 331 cooperating with the third internal groove 31a6 is disposed on an inner wall of the shaft housing 33. The shaft housing 33 and the rotating shaft support 31a are fastened through cooperation between the third internal groove 31a6 and the fastening block 331. In addition, the shaft housing 33 may protect the rotating shaft support 31a to some extent. Certainly, quantities and disposing positions of the third internal grooves 31a6 and the fastening blocks 331 are not limited, provided that the third internal grooves 31a6 and the fastening blocks 331 can perform a specific fastening function.

It should be noted that the setting directions of the first locking assembly and the second locking assembly 60b include but are not limited to the structure shown in the accompanying drawings of this embodiment. For example, the setting positions of the first locking assembly and the second locking assembly 60b may be exchanged, or the structures of the first locking assembly and the second locking assembly 60b may be changed, provided that the functions of the first locking assembly and the second locking assembly 60b can be implemented. In addition, the locking assembly 60 in this embodiment of this application is in an unlocked state only when the device body 10 rotates around the vertical rotating shaft 32 by 90°.

In addition, in this embodiment of this application, the first locking assembly includes a structure of a telescopic buckle 60a1, a first internal groove 60a2, and a first slide rail spring 60a3, where the first drive part 60a12 is disposed on the telescopic buckle 60a1, that is, the drive part and the buckle part 60a11 are disposed on a same part. In this way, when the first drive part 60a12 is driven, the buckle part 60a11 can be driven to move together, so as to implement a telescopic connection between the buckle part 60a11 and the rotating shaft support 31a.

Certainly, in some other embodiments, the first locking assembly may also be of other structures, as shown in FIG. 52 and FIG. 53. In this embodiment, each first locking assembly may include a telescopic buckle 60a1, a rotating shaft ejector block 60a4, a first internal groove 60a2, and a first slide rail spring 60a3, where one end of the rotating shaft ejector block 60a4 cooperates with the telescopic buckle 60a1, and the other end of the rotating shaft ejector block 60a4 is provided with a second drive part 60a41, the second drive part 60a41 is used to drive the rotating shaft ejector block 60a4 to move upward when the horizontal rotating shaft 31 rotates to the second position, so as to drive the telescopic buckle 60a1 to move horizontally, so that the buckle part 60a11 of the telescopic buckle 60a1 is detached from the first internal groove 60a2.

In this embodiment, the Z-axis support 326 is provided with a rotation hole 3261 that can be rotated by the vertical rotating shaft 32, a sunken groove 3262 is disposed around the rotation hole 3261 on the Z-axis support 326, the second drive part 60a41 is located at the sunken groove 3262, and the sunken groove 3262 is a circular groove. In addition, a part of the groove bottom of the circular groove is provided with a tapered step 3265, and the tapered step 3265 is used to drive the second drive part 60a41 to move upward when the horizontal rotating shaft 31 rotates to the second position, so that the telescopic buckle 60a1 moves horizontally.

The following specifically describes a process of cooperation between the Z-axis support 326 and the second drive part 60a41 with reference to the accompanying drawings.

As shown in FIG. 54, an end that is of the telescopic buckle 60a1 and that is in cooperation with the rotating shaft ejector block 60a4 is provided with a third inclined surface 60a15, and the rotating shaft ejector block 60a4 is provided with a fourth inclined surface 60a42 that is in cooperation with the third inclined surface 60a15. The fourth inclined surface 60a42 is used to apply force to the third inclined surface 60a15 when the rotating shaft ejector block 60a4 moves upward, so that the telescopic buckle 60a1 moves horizontally.

It should be noted that FIG. 54 is a schematic diagram of a structure in which the device body 10 is in the first state. In this state, the third inclined surface 60a15 on the telescopic buckle 60a1 and the fourth inclined surface 60a42 on the rotating shaft ejector block 60a4 are attached to each other, and the bottom end of the third inclined surface 60a15 is also located on the fourth inclined surface 60a42, the buckle part 60a11 of the telescopic buckle 60a1 of the first locking assembly is located in the first internal groove 60a2 (as shown in FIG. 55). In this case, the first locking assembly and the second locking assembly 60b in the locking assembly 60 are both in the locked state. When the device body 10 rotates from the first position to the second position (as shown in FIG. 56), in this case, the third inclined surface 60a15 on the telescopic buckle 60a1 and the fourth inclined surface 60a42 on the rotating shaft ejector block 60a4 are also attached to each other, but the fourth inclined surface 60a42 moves upward relative to the third inclined surface 60a15, and because the fourth inclined surface 60a42 moves upward, the third inclined surface 60a15 is squeezed to move inward (as shown in FIG. 57). In this way, the telescopic buckle 60a1 drives the buckle part 60a11 to move inward, and moves out of the first internal groove 60a2 (as shown in FIG. 58). In this case, the first locking assembly of the locking assembly 60 is in the unlocked state.

The third inclined surface 60a15 cooperates with the fourth inclined surface 60a42, so that movement of the rotating shaft ejector block 60a4 in the vertical direction is converted into movement of the telescopic buckle 60a1 in the horizontal direction, and the locking assembly 60 is in the unlocked state. In addition, the locking assembly 60 may have a simpler structure through slope fitting. This reduces costs.

Certainly, in some embodiments, the telescopic buckle 60a1 may be further disposed in another structure, and movement in a horizontal direction relative to the slide rail support 325 is implemented in another cooperation manner, so that the first locking assembly can be in the unlocked state when the device body 10 rotates to the second position. Details are not described in this embodiment again.

In addition, it should be noted that the second locking assembly 60b can be unlocked when the device body 10 bears pulling force opposite to the second locking assembly 60b. In addition, in this embodiment, the structure of the clamping assembly 40 located at the second end 12 of the device body may be the same as that in Embodiment 1. Therefore, for descriptions of the clamping assembly 40, refer to the descriptions in Embodiment 1. Details are not described here again. The structure of the horizontal rotating shaft and the structure of the vertical rotating shaft include but are not limited to the structure shown in this embodiment, and may also be the structure shown in Embodiment 1, which may be specifically designed according to an actual situation, and is not specifically limited herein.

According to the wearable device 100 in embodiments of this application, the first locking assembly and the second locking assembly 60b are disposed, so that locking force between the device body 10 and the wrist support can be increased. In addition, the first locking assembly is designed as a structure in which the first locking assembly can be unlocked only when the device body 10 rotates to 90°, so that the device body 10 can be prevented from falling off from the wrist support at any angle when the user uses the wearable device, and the risk of damage caused by accidental falling off of the device body 10 is reduced. In addition, the first locking assembly and the second locking assembly 60b are disposed to improve the locking feel.

Embodiment 15 describes two technical solutions in which the locking assembly 60 can be unlocked only after the device body 10 rotates around the vertical rotating shaft 32 by 90°. Certainly, in some embodiments, the locking assembly 60 may alternatively be unlocked after the device body 10 rotates rotated around the vertical rotating shaft 32 to another angle. In this embodiment, the angle of rotation around the vertical rotating shaft 32 is not limited. In addition, in some embodiments, the locking assembly 60 may be further designed as a structure that can be unlocked when being rotated around the horizontal rotating shaft 31 to a specific angle. For details, refer to the descriptions in Embodiment 16.

### Embodiment 16

FIG. 59 is a schematic diagram of a cross-sectional structure of a device body and a wrist support of a wearable device according to an embodiment of this application. FIG. 60 is a schematic diagram of an exploded structure of a device body and a wrist support of a wearable device according to an embodiment of this application.

As shown in FIG. 59 and FIG. 60, the wearable device 100 includes a device body 10, a wrist support 20, and a rotating shaft assembly 30. The rotating shaft assembly 30 includes a shaft housing 33, a horizontal rotating shaft 31, and a vertical rotating shaft 32. The bottom end of the vertical rotating shaft 32 is connected to the first end 21 of the wrist support rotatably, the bottom end of the horizontal rotating shaft 31 is slidably connected to the top end of the vertical rotating shaft 32, the horizontal rotating shaft 31 is fastened to the device body 10, the locking assembly 60 is disposed in the vertical rotating shaft 32, and the locking assembly 60 is used to lock the horizontal rotating shaft 31 and the vertical rotating shaft 32 in a horizontal direction, so as to prevent the horizontal rotating shaft 31 from sliding on the vertical rotating shaft 32. In addition, when the locking assembly 60 is in the unlocked state, the horizontal rotating shaft 31 may slide out of the vertical rotating shaft 32.

As shown in FIG. 60, the top end of the vertical rotating shaft 32 is provided with a slide rail bracket 327, and a bottom end of the rotating shaft support 31a of the horizontal rotating shaft 31 is provided with a slide rail groove 31a5 into which the slide rail bracket 327 is capable of horizontally sliding. When the slide rail bracket 327 is located in the slide rail groove 31a5, and the device body 10 is located in a first position (a position shown in FIG. 59), the locking assembly 60 is used to lock and connect the slide rail bracket 327 and the horizontal rotating shaft 31. When the device body 10 rotates around the horizontal rotating shaft 31 to a second position (a position shown in FIG. 61), the locking assembly 60 is in the unlocked state, so that the horizontal rotating shaft 31 slides out of the slide rail bracket 327 horizontally.

With reference to FIG. 59 and FIG. 60, the locking assembly 60 includes a locking spring block 60c and a slot 60c1 that cooperates with the locking spring block 60c, where the slot 60c1 is provided on the rotating shaft support 31a of the horizontal rotating shaft 31, the locking spring block 60c is provided on the slide rail bracket 327, and an end of the locking spring block 60c is telescopically disposed on the top end face of the slide rail bracket 327. The horizontal rotating shaft 31 and the slide rail bracket 327 are locked and connected in a horizontal direction through clamping of the locking spring block 60c and the slot 60c1, and when the locking spring block 60c moves out of the slot 60c1, the horizontal rotating shaft 31 and the slide rail bracket 327 are in the unlocked state in the horizontal direction.

As shown in FIG. 60, inclined sliding surfaces 60c3 are disposed on two side surfaces of the top end of the locking spring block 60c in a horizontal direction (in the x direction), and a sloping baffle 31a51 that cooperates with the inclined sliding surface 60c3 may be disposed on two end faces of the top wall of the slide rail groove 31a5 in the x direction. In addition, the inclined degree of the sloping baffle 3 1a51 may be the same as that of the inclined sliding surface 60c3. In this way, when the slide rail bracket 327 slides into the slide rail groove 31a5 from any end of the rotating shaft support 3 1a in the x direction, the sloping baffle 31a51 can drive the inclined sliding surface 60c3 to move downward, so that the locking spring block 60c is pressed into the slide rail bracket 327, and the slide rail bracket 327 can slide into the slide rail groove 31a5. When the top end of the locking spring block 60c completely enters the slot 60c1, the constraint on the top end of the locking spring block 60c disappears, and the top end of the locking spring block 60c enters the slot 60c1, so that the horizontal rotating shaft 31 is locked and connected to the slide rail bracket 327 in the horizontal direction.

The sloping baffle 31a51 that cooperates with the inclined sliding surface 60c3 is disposed on the slide rail groove 31a5, so that the slide rail bracket 327 can slide into the slide rail groove 31a5. In addition, the inclined surface cooperation is simple. This can simplify the structure of the slide rail bracket 327 and the slide rail groove 31a5.

In addition, it may be understood that, as long as the bottom end of the inclined sliding surface 60c3 at the top end of the locking spring block 60c is located at the bottom end of the slot 60c1, or when a part of the inclined sliding surface 60c3 is located in the slot 60c1, the horizontal rotating shaft 31 and the slide rail bracket 327 may enable the horizontal rotating shaft 31 to slide out of a side of the slide rail bracket 327 in the horizontal direction through external force, that is, the horizontal rotating shaft 31 and the slide rail bracket 327 are in the unlocked state in the horizontal direction. Certainly, when the inclined sliding surface 60c3 completely leaves the slot 60c1, the horizontal rotating shaft 31 and the slide rail bracket 327 are also in an unlocked state in the horizontal direction. However, there is no constraint between the device body 10 and the wrist support 20, and therefore the device body 10 easily falls off from the wrist support 20. Therefore, in this embodiment, at least a part of the inclined sliding surface 60c3 is located in the slot 60c1. In this way, the device body 10 may be prevented from accidentally falling off from the wrist support 20.

When at least a part of the slanted sliding surface 60c3 is located in the slot 60c1, in a case of no external force, the horizontal rotating shaft 31 and the slide rail bracket 327 are in an unlocked state, but there is still locking force, and the horizontal rotating shaft 31 needs to be separated from the slide rail bracket 327 through external force. In this way, the horizontal rotating shaft 31 can be prevented from accidentally falling off from the slide rail bracket 327, which causes damage to the device body. In addition, the inclined sliding surface 60c3 is disposed at the top end of the locking spring block 60c, so that force required during detachment and mounting can be further reduced, thereby facilitating mounting and detachment.

The locking assembly 60 may further include an unlocking structure 60d, where the unlocking structure 60d is used to drive the locking spring block 60c to move out of the slot 60c1 when the device body 10 moves around the horizontal rotating shaft 31 toward the second position.

As shown in FIG. 60, the unlocking structure 60d may include a rotating shaft press arm 60d1, a rotating shaft cam 60d2, and a rotating shaft spring 60d3, where two ends of the rotating shaft cam 60d2 are respectively connected to two friction shafts 341 of the horizontal rotating shaft 31, and the middle part of the rotating shaft cam 60d2 is located on the rotating shaft press arm 60d1. One end of the rotating shaft press arm 60d1 faces the rotating shaft cam 60d2, and the other end of the rotating shaft press arm 60d1 is located in the slot 60c1. The rotating shaft press arm 60d1 is used to move downward when driven by the rotating shaft cam 60d2, to drive the locking spring block 60c to move out of the slot 60c1. The rotating shaft spring 60d3 is disposed on the rotating shaft support 31a of the horizontal rotating shaft 31, an end of the rotating shaft spring 60d3 is connected to the rotating shaft press arm 60d1, and the rotating shaft spring 60d3 is used to drive when the rotating shaft cam 60d2 is moved away.

It should be noted that, a manner of fastening the rotating shaft cam 60d2 to the friction shaft 341 includes but is not limited to denting, clamping, welding, or the like. Therefore, in this embodiment of this application, a manner of fastening the rotating shaft cam 60d2 and the friction shaft 341 is not specifically limited. In addition, a size of the rotating shaft cam 60d2 is not specifically limited, provided that the locking spring block 60c can be removed from the slot 60c1.

The locking assembly 60 may further include a third slide rail spring 60c2, where the third slide rail spring 60c2 is located in the slide rail bracket 327, and one end of the third slide rail spring 60c2 is connected to the locking spring block 60c.

A slide rail cover 3271 is further disposed on the slide rail bracket 327, where the slide rail cover 3271 covers the locking spring block 60c and is connected to the slide rail bracket 327, and a hole capable of extending out of one end of the locking spring block 60c is disposed on the slide rail cover 3271. In addition, limiting protrusion parts 3272 are disposed on two sides of the slide rail bracket 327 in a sliding direction of the slide rail bracket 327, limiting grooves 31a8 fitting the limiting protrusion parts 3272 are disposed in the slide rail groove 31a5, and the rotating shaft support 31a of the horizontal rotating shaft 31 and the slide rail bracket 327 are limited in a vertical direction through fitting of the limiting protrusion part 3272 and the limiting groove 31a8.

In addition, the rotating shaft assembly 30 further includes a Z-axis bracket 328, where the Z-axis bracket 328 is disposed at the first end 21 of the wrist support, and the Z-axis bracket 328 is connected to the bottom end of the vertical rotating shaft 32 rotatably, so that the device body 10 may rotate around the vertical rotating shaft 32. Specifically, the Z-axis bracket 328 is provided with a rotating hole 3281 that can be rotated by the vertical rotating shaft 32, and a bottom end of the vertical rotating shaft 32 extends into the Z-axis bracket 328 through the rotating hole 3281. A friction plate 342 and a fastening plate 3263 may be sleeved on a structure in which the vertical rotating shaft 32 is located in the Z-axis bracket 328 (a quantity of the friction plates 342 is not limited). The friction plate 342 is fastened to the Z-axis bracket 328, and the vertical rotating shaft 32 is rotatably connected to the friction plate 342, so that the vertical rotating shaft 32 is rotatably connected to the Z-axis bracket 328. The vertical rotating shaft 32 is fastened to the fastening plate 3263, the fastening plate 3263 is movably connected to the Z-axis bracket 328, and a blocking stage 3282 for blocking the fastening plate 3263 is disposed at a bottom end of the Z-axis bracket 328, where an outer diameter of the fastening plate 3263 is greater than an inner diameter of the blocking stage 3282, so that the vertical rotating shaft 32 is fastened to the first end 21 of the wrist support through the Z-axis bracket 328, and may rotate relative to the Z-axis bracket 328.

FIG. 61 is a schematic diagram of a structure in which a device body and a wrist support of a wearable device are separated according to an embodiment of this application. FIG. 62 is a schematic diagram of a cross-sectional structure in which a locking assembly of a wearable device is in an unlocked state according to an embodiment of this application.

As shown in FIG. 61, when the device body 10 is in the second position, the locking assembly 60 is in the unlocked state. In this case, the horizontal rotating shaft 31 may slide out of the vertical rotating shaft 32, that is, the device body 10 slides out from one side of the wrist support. In this embodiment, the first position is a position at which the device body 10 and the wrist support 20 shown in FIG. 59 are in an initial state, and the second position is a position at which the device body 10 rotates around the horizontal rotating shaft 31 by 90°, namely, a position in FIG. 61.

As shown in FIG. 62, when the device body 10 rotates from the first position to the second position, the horizontal rotating shaft 31 drives the rotating shaft cam 60d2 to rotate, and makes the cam on the rotating shaft cam 60d2 reach a position with a maximum outer diameter from a position with a minimum outer diameter. Because the outer diameter of the cam increases from a smaller one, the cam moves downward under the pressure of the rotating shaft press arm 60d1. Because one end of the rotating shaft press arm 60d1 away from the rotating shaft cam 60d2 is located in the slot 60c1 on the rotating shaft support 31a, and the top end of the locking spring block 60c is also located in the slot 60c1, when the rotating shaft press arm 60d1 moves downward and contacts the locking spring block 60c, the locking spring block 60c is driven to move downward, when at least a part of the inclined sliding surface 60c3 at the top end of the locking spring block 60c is moved out of the slot 60c1, the horizontal rotating shaft 31 and the slide rail bracket 327 are in an unlocked state in a horizontal direction, and in this case, the horizontal rotating shaft 31 may slide out of a side of the slide rail bracket 327.

It should be noted that the structure of the locking assembly 60 described above includes but is not limited to the structure in the accompanying drawings. In some other embodiments, the locking assembly 60 may also be of another structure, provided that the device body 10 and the wrist support can be locked in a horizontal direction and the locking assembly 60 can be unlocked by rotating to a specific angle, which falls within the protection scope of the technical solutions of this application. In addition, in this embodiment, the structure of the clamping assembly 40 located at the second end 12 of the device body is also the same as that in Embodiment 1. Therefore, for descriptions of the clamping assembly 40, refer to the descriptions in Embodiment 1. Details are not described here again.

In this embodiment of this application, the locking assembly 60 is disposed in a structure in which the horizontal rotating shaft 31 and the vertical rotating shaft 32 are locked in the horizontal direction. When the device body 10 rotates to a specific position, the device body 10 may slide out of a side of the wrist support. The technical solution of rotating the device body 10 to a specific position to unlock can reduce the strength during detachment, thereby adapting to more customers, and preventing the device body 10 from accidentally falling off from the wrist support.

In this embodiment, the device body 10 may slide out of the third end 24 or the fourth end 25 of the wrist support 20. Certainly, in another embodiment, the device body 10 may also slide out of the first end 21 or the second end 22 of the wrist support. For example, refer to the following Embodiment 17.

### Embodiment 17

FIG. 63 is a schematic diagram of a cross-sectional structure of a device body and a wrist support of a wearable device according to an embodiment of this application. As shown in FIG. 63, the wearable device 100 includes a device body 10, a wrist support 20, and a rotating shaft assembly 30. The rotating shaft assembly 30 includes a shaft housing 33 and a horizontal rotating shaft 31. The horizontal rotating shaft 31 includes a rotating shaft support 31a and a rotating assembly 34 disposed in the rotating shaft support 31a, where two rotating assemblies 34 are respectively disposed at two ends of the rotating shaft support 31a, each rotating assembly 34 includes a friction shaft 341, a friction plate 342, and a rotating head 3414 disposed at a second end 341b of the friction shaft, an end that is of the rotating head 3414 and that is close to the rotating shaft support 31a is connected to the rotating shaft support 31a, and the end that is of the rotating head 3414 and that is close to the rotating shaft support 31a seals the friction plate 342 in the rotating shaft support 31a, so that the friction plate 342 can be prevented from falling off from the rotating shaft support 31a. A fastening protrusion is disposed on the outer side of the rotating shaft support 31a, and a recess 332 that cooperates with the fastening protrusion is disposed on the inner side of the shaft housing 33. In this way, when the shaft housing 33 is mounted on the rotating shaft support 31a, the shaft housing 33 can be prevented from falling off from the rotating shaft support 31a through cooperation between the fastening protrusion and the recess 332.

In this embodiment, the locking assembly 60 includes a locking spring block 60c and a slot 60c1 that cooperates with the locking spring block 60c, where the slot 60c1 is provided on the rotating shaft support 31a, the locking spring block 60c is provided on the first end 21 of the wrist support, and one end of the locking spring block 60c is telescopically disposed on the top end face of the first end 21 of the wrist support. The horizontal rotating shaft 31 and the wrist support 20 are locked and connected in a horizontal direction through clamping of the locking spring block 60c and the slot 60c1, and when the locking spring block 60c moves out of the slot 60c1, the horizontal rotating shaft 31 and the slide rail bracket 327 are in the unlocked state in the horizontal direction. In this embodiment, the locking assembly 60 may further include an unlocking structure 60d, where the unlocking structure 60d is used to drive the locking spring block 60c to move out of the slot 60c1 when the device body 10 moves around the horizontal rotating shaft 31 toward the second position. As shown in FIG. 63, the unlocking structure 60d may include a rotating shaft press arm 60d1, a rotating shaft cam 60d2, and a rotating shaft spring 60d3. Two ends of the rotating shaft cam 60d2 are respectively connected to two friction shafts 341 of the horizontal rotating shaft 31, and the middle part of the rotating shaft cam 60d2 is located on the rotating shaft press arm 60d1. One end of the rotating shaft press arm 60d1 faces the rotating shaft cam 60d2, and the other end of the rotating shaft press arm 60d1 is located in the slot 60c1. The rotating shaft press arm 60d1 is used to move downward when driven by the rotating shaft cam 60d2, to drive the locking spring block 60c to move out of the slot 60c1. The rotating shaft spring 60d3 is sleeved on the rotating shaft press arm 60d1, one end of the rotating shaft spring 60d3 is connected to the rotating shaft press arm 60d1, the other end of the rotating shaft spring 60d3 abuts against the rotating shaft support 31a, and the rotating shaft spring 60d3 is used to drive the rotating shaft press arm 60d1 to move upward when the rotating shaft cam 60d2 is moved away.

In addition, in this embodiment, with reference to FIG. 63 and FIG. 64, a support base 31a10 is disposed at an end that is of the rotating shaft support 31a and that is close to the wrist support 20, a cavity for accommodating the rotating shaft press arm 60d1 and the rotating shaft spring 60d3 is disposed in the support base 31a10, and a bottom end of the cavity is connected to a top end of the slot 60c1, so that the bottom end of the rotating shaft press arm 60d1 can contact the locking spring 60c. It should be noted that an inner diameter of the slot 60c1 is greater than an outer diameter of the bottom end of the rotating shaft press arm 60d1.

In this embodiment, the locking assembly 60 may further include a locking protrusion 61 and a locking sunken groove 62. The locking protrusion 61 is disposed at the bottom end of the support base 31a10, the locking sunken groove 62 is provided at the first end 21 of the wrist support, and the rotating shaft support 31a and the wrist support 20 are vertically locked and connected to each other when being clamped in the locking sunken groove 62 through the locking protrusion 61. In addition, when the locking protrusion 61 moves out of the locking sunken groove 62, the rotating shaft support 31a and the wrist support 20 are in an unlocked state in a vertical direction.

As shown in FIG. 63, in this embodiment, the locking assembly 60 may further include a third magnetic piece 60e1 and a fourth magnetic piece 60e2. The third magnetic piece 60e1 is disposed at the bottom of the locking sunken groove 62 on the wrist support 20, the fourth magnetic piece 60e2 is disposed in a support base 31a10 of the rotating shaft support 31a, and a mounting groove position for accommodating the fourth magnetic piece 60e2 is disposed in the support base 31a10. The opening of the mounting groove position faces the end near the wrist support 20. The fourth magnetic piece 60e2 is disposed in the mounting groove position, and a baffle plate 31a11 is disposed at an open end of the mounting groove position. The baffle plate 31a11 is fastened to the rotating shaft support 31a, to prevent the fourth magnetic piece 60e2 from falling off from the rotating shaft support 31a.

When the locking protrusion 61 on the rotating shaft support 31a is located in the locking sunken groove 62 on the wrist support 20, the third magnetic piece 60e1 and the fourth magnetic piece 60e2 attract each other, so that locking force between the rotating shaft support 31a and the wrist support 20 can be increased. When the device body 10 is flipped over by 90° around the horizontal rotating shaft to the second position, the locking assembly 60 is in the unlocked state. In this case, the device body 10 may slide out of a side of the wrist support 20. In this embodiment, the device body 10 slides out from a direction close to the second end 22 of the wrist support. Certainly, in some embodiments, the device body 10 may further slide out from a direction away from the second end 22 of the wrist support.

In this embodiment of this application, the locking spring block 60c and the slot 60c1 that cooperates with the locking spring block 60c are disposed, so that the rotating shaft support 31a and the wrist support 20 can be locked and connected in a horizontal direction. The locking protrusion 61 and the locking sunken groove 62 are disposed, so that the rotating shaft support 31a and the wrist support 20 can be locked and connected in a vertical direction. The third magnetic piece 60e1 and the fourth magnetic piece 60e2 are disposed, so that locking force can be increased. This prevents problems such as shaking and loosening of the device body 10 relative to the wrist support 20.

It should be noted that the structure of the locking assembly 60 described above includes but is not limited to the structure in the accompanying drawings. In some other embodiments, the locking assembly 60 may also be of another structure, provided that the device body 10 and the wrist support can be locked in a horizontal direction and the locking assembly 60 can be unlocked by rotating to a specific angle, which falls within the protection scope of the technical solutions of this application. In addition, in this embodiment, the structure of the clamping assembly 40 located at the second end 12 of the device body is also the same as that in Embodiment 1. Therefore, for descriptions of the clamping assembly 40, refer to the descriptions in Embodiment 1. Details are not described here again.

An embodiment of this application may further provide a wearable system, including a terminal device and a wearable device, where the terminal device is communicatively connected to the wearable device.

Finally, it should be noted that the foregoing embodiments are merely intended for describing the technical solutions of embodiments of this application other than limiting this application. Although embodiments of this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A wearable device, comprising:
a device body;
a wrist support, used to bear the device body;
a rotating shaft assembly, wherein the rotating shaft assembly comprises a horizontal rotating shaft and a vertical rotating shaft, two ends of the horizontal rotating shaft are rotatably connected to a first end of the device body, so that the device body is capable of flipping around the horizontal rotating shaft; and at least one end of the vertical rotating shaft is rotatably connected to at least one of a first end of the wrist support and the horizontal rotating shaft, so that the device body is capable of rotating around the vertical rotating shaft; and
a locking assembly, wherein when the locking assembly is in a locked state, the locking assembly locks the rotating shaft assembly with the device body or the wrist support, or the locking assembly locks the vertical rotating shaft with the horizontal rotating shaft, so that the first end of the device body is connected to the first end of the wrist support, and when the locking assembly is in an unlocked state, the rotating shaft assembly is disassembled from the device body or the wrist support, or the horizontal rotating shaft is disassembled from the vertical rotating shaft, so that the first end of the device body is separated from the first end of the wrist support.

2. The wearable device according to claim 1, wherein the horizontal rotating shaft comprises a rotating shaft support and two rotating assemblies respectively located at two ends of the rotating shaft support;
a cavity structure for accommodating the rotating assembly is disposed at each of the two ends of the rotating shaft support; and
one end of the rotating assembly is located in the cavity structure, and the other end is connected to the device body.

3. The wearable device according to claim 1 or 2, wherein a bottom end of the vertical rotating shaft is rotatably connected to the first end of the wrist support, and a bottom end of the horizontal rotating shaft is sleeved on a top end of the vertical rotating shaft; and
when the locking assembly is in the locked state, the horizontal rotating shaft is locked with and connected to the top end of the vertical rotating shaft, so that the first end of the device body is connected to the first end of the wrist support; or
when the locking assembly is in the unlocked state, the horizontal rotating shaft is disassembled from the vertical rotating shaft, so that the first end of the device body is separated from the first end of the wrist support.

4. The wearable device according to claim 3, wherein the top end of the vertical rotating shaft is provided with a slide rail support, and a bottom end of the rotating shaft support of the horizontal rotating shaft is provided with an assembly cavity into which the slide rail support is capable of vertically extending upward; and
when the slide rail support is located in the assembly cavity, and the horizontal rotating shaft is in a first position, the locking assembly is used to lock and connect the slide rail support and an inner wall of the assembly cavity; or
when the horizontal rotating shaft rotates around the vertical rotating shaft to a second position, the locking assembly is in the unlocked state, so that the horizontal rotating shaft is capable of being disassembled from the slide rail support.

5. The wearable device according to claim 4, wherein a Z-axis support is disposed at the bottom end of the vertical rotating shaft, the Z-axis support is disposed at the first end of the wrist support, and the Z-axis support is rotatably connected to the vertical rotating shaft.

6. The wearable device according to claim 5, wherein the locking assembly comprises at least one first locking assembly, and at least a part of the first locking assembly is located in the slide rail support; and
when the horizontal rotating shaft is in the first position, the first locking assembly is used to lock and connect the slide rail support and the inner wall of the assembly cavity, or when the horizontal rotating shaft rotates to the second position, the first locking assembly is in the unlocked state.

7. The wearable device according to claim 6, wherein each first locking assembly comprises a telescopic buckle and a first internal groove that cooperates with the telescopic buckle, and the first internal groove is located on the inner wall of the assembly cavity;
the telescopic buckle is telescopically connected to the slide rail support, one end of the telescopic buckle is located in the slide rail support, the other end of the telescopic buckle is provided with a buckle part, and the buckle part is capable of extending out of the slide rail support; and
the slide rail support and the inner wall of the assembly cavity are locked and connected through clamping of the buckle part and the first internal groove.

8. The wearable device according to claim 7, wherein the telescopic buckle is telescopically connected to the rotating shaft support; and
a first drive part is disposed at an end of the telescopic buckle, an end of the first drive part is located outside the slide rail support, and the first drive part is used to drive the telescopic buckle to move horizontally when the horizontal rotating shaft rotates toward the second position, to drive the buckle part of the telescopic buckle to be detached from the first internal groove, so that the first locking assembly is in the unlocked state.

9. The wearable device according to claim 8, wherein the Z-axis support is provided with a rotation hole available for the vertical rotating shaft to rotate, a sunken groove is provided on the Z-axis support in a circumferential direction of the rotation hole, the first drive part is located at the sunken groove, the sunken groove is a flat groove, and a part of a groove wall of the flat groove is used to apply force to the first drive part when the horizontal rotating shaft rotates toward the second position, so that the first drive part drives the telescopic buckle to move.

10. The wearable device according to claim 8, wherein each first locking assembly further comprises a rotating shaft ejector block, one end of the rotating shaft ejector block cooperates with the telescopic buckle, the other end of the rotating shaft ejector block is provided with a second drive part, and the second drive part is used to drive the rotating shaft ejector block to move upward when the horizontal rotating shaft rotates toward the second position, to drive the telescopic buckle to move horizontally, so that the buckle part of the telescopic buckle is detached from the first internal groove.

11. The wearable device according to claim 10, wherein the Z-axis support is provided with a rotation hole available for the vertical rotating shaft to rotate, a sunken groove is provided on the Z-axis support in a circumferential direction of the rotation hole, the second drive part is located at the sunken groove, and the sunken groove is a circular groove; and
a part of a groove bottom of the circular groove is provided with a tapered step, and the tapered step is used to drive the second drive part to move upward when the horizontal rotating shaft rotates toward the second position, so that the telescopic buckle moves horizontally.

12. The wearable device according to claim 10 or 11, wherein one end of the telescopic buckle is provided with a third inclined surface, the rotating shaft ejector block is provided with a fourth inclined surface cooperating with the third inclined surface, and the fourth inclined surface is used to apply force to the third inclined surface when the rotating shaft ejector block moves upward, so that the telescopic buckle moves horizontally.

13. The wearable device according to any one of claims 7 to 12, wherein each first locking assembly further comprises a first slide rail spring, the first slide rail spring is located in the slide rail support, one end of the first slide rail spring is connected to one end of the telescopic buckle, and the other end of the first slide rail spring abuts against an inner wall of the slide rail support.

14. The wearable device according to any one of claims 6 to 13, wherein a quantity of the first locking assemblies is two, the two first locking assemblies are disposed in the slide rail support close to the vertical rotating shaft, and the two first locking assemblies are centrosymmetrically disposed relative to the vertical rotating shaft.

15. The wearable device according to any one of claims 4 to 14, wherein the locking assembly further comprises at least one second locking assembly, and the second locking assembly is used to elastically lock the slide rail support and the assembly cavity of the horizontal rotating shaft.

16. The wearable device according to claim 15, wherein each second locking assembly comprises an elastic ejector block and a second internal groove that cooperates with the elastic ejector block, the second internal groove is located on the inner wall of the assembly cavity, and at least a part of the elastic ejector block is located in the slide rail support and is close to an end part of the slide rail support; and
the end part of the slide rail support and the assembly cavity are elastically locked through clamping of the elastic ejector block and the second internal groove.

17. The wearable device according to claim 16, wherein each second locking assembly comprises a second slide rail spring, the second slide rail spring is located in the slide rail support, one end of the second slide rail spring is connected to the elastic ejector block, and the other end of the second slide rail spring abuts against the inner wall of the slide rail support.

18. The wearable device according to any one of claims 4 to 17, wherein positioning protrusions are provided on two opposite sides of the slide rail support, and positioning grooves fitting the positioning protrusions are provided on the inner wall of the assembly cavity.

19. The wearable device according to claim 1 or 2, wherein a bottom end of the vertical rotating shaft is rotatably connected to the first end of the wrist support, and a bottom end of the horizontal rotating shaft is slidably connected to a top end of the vertical rotating shaft; and
the locking assembly is used to lock and connect the horizontal rotating shaft and the vertical rotating shaft in a horizontal direction, to prevent the horizontal rotating shaft from sliding on the vertical rotating shaft, and when the locking assembly is in the unlocked state, the horizontal rotating shaft may slide out of the vertical rotating shaft.

20. The wearable device according to claim 19, wherein the top end of the vertical rotating shaft is provided with a slide rail bracket, and a bottom end of the rotating shaft support of the horizontal rotating shaft is provided with a slide rail groove into which the slide rail bracket is capable of horizontally sliding; and
when the slide rail bracket is located in the slide rail groove, and the device body is located in a first position, the locking assembly is used to lock and connect the slide rail bracket and the horizontal rotating shaft; or
when the device body rotates around the horizontal rotating shaft to a second position, the locking assembly is in the unlocked state, so that the horizontal rotating shaft slides out of the slide rail bracket horizontally.

21. The wearable device according to claim 20, wherein the locking assembly comprises a locking spring block and a slot that cooperates with the locking spring block, the slot is provided on the rotating shaft support of the horizontal rotating shaft, the locking spring block is disposed on the slide rail bracket, and an end of the locking spring block is telescopically disposed on a top end face of the slide rail bracket; and
the horizontal rotating shaft and the slide rail bracket are locked and connected in the horizontal direction through clamping of the locking spring block and the slot, and when the locking spring block moves out of the slot, the horizontal rotating shaft and the slide rail bracket are in the unlocked state in the horizontal direction.

22. The wearable device according to claim 21, wherein the locking assembly further comprises an unlocking structure, and the unlocking structure is used to drive the locking spring block to move out of the slot when the device body moves toward the second position around the horizontal rotating shaft.

23. The wearable device according to claim 22, wherein the unlocking structure comprises a rotating shaft press arm and a rotating shaft cam, two ends of the rotating shaft cam are connected to the horizontal rotating shaft, and a middle part of the rotating shaft cam is located on the rotating shaft press arm;
one end of the rotating shaft press arm faces the rotating shaft cam, and the other end of the rotating shaft press arm is located in the slot; and
the rotating shaft press arm is used to move downward when driven by the rotating shaft cam, to drive the locking spring block to move out of the slot.

24. The wearable device according to claim 23, wherein the unlocking structure further comprises a rotating shaft spring, the rotating shaft spring is disposed on the rotating shaft support of the horizontal rotating shaft, and an end of the rotating shaft spring is connected to the rotating shaft press arm.

25. The wearable device according to any one of claims 21 to 24, wherein the locking assembly further comprises a third slide rail spring, the third slide rail spring is located in the slide rail bracket, and an end of the third slide rail spring is connected to the locking spring block.

26. The wearable device according to any one of claims 21 to 25, further comprising a slide rail cover, wherein the slide rail cover covers the locking spring block and is connected to the slide rail bracket, and a hole of which the end of the locking spring block is capable of extending out is provided on the slide rail cover.

27. The wearable device according to any one of claims 20 to 25, wherein limiting protrusion parts are disposed on two sides of the slide rail bracket in a sliding direction of the slide rail bracket, limiting grooves fitting the limiting protrusion parts are disposed in the slide rail groove, and the rotating shaft support of the horizontal rotating shaft and the slide rail bracket are limited in a vertical direction through fitting of the limiting protrusion part and the limiting groove.

28. The wearable device according to any one of claims 19 to 27, wherein the rotating shaft assembly further comprises a Z-axis bracket, the Z-axis bracket is disposed at the first end of the wrist support, and the Z-axis bracket is rotatably connected to the bottom end of the vertical rotating shaft.

29. The wearable device according to claim 2, wherein the locking assembly comprises a locking sunken groove and a locking protrusion, one of the locking sunken groove and the locking protrusion is disposed on the wrist support, and the other of the locking sunken groove and the locking protrusion is disposed at a bottom end of the vertical rotating shaft; and
the vertical rotating shaft and the wrist support are locked and connected through fitting of the locking sunken groove and the locking protrusion.

30. The wearable device according to claim 29, wherein a first base is disposed at the bottom end of the vertical rotating shaft, and the bottom end of the vertical rotating shaft is fixedly disposed in the first base; and
the locking sunken groove or the locking protrusion is disposed on the first base.

31. The wearable device according to claim 30, wherein the locking sunken groove is located on the wrist support, and the locking protrusion is located at an end that is of the first base and that is close to the wrist support; and
a locking sunken groove opening available for the locking protrusion to horizontally slide into the locking sunken groove is provided on a side of the locking sunken groove.

32. The wearable device according to claim 31, wherein the locking sunken groove opening faces a second end of the wrist support, so that the locking protrusion horizontally slides into the locking sunken groove in a direction extending from the second end of the wrist support to the first end.

33. The wearable device according to claim 32, wherein the wrist support is provided with a third end and a fourth end that are opposite to each other, and the third end and the fourth end are located between the first end and the second end of the wrist support; and
the locking sunken groove opening faces the third end, so that the locking protrusion horizontally slides into the locking sunken groove in a direction extending from the third end of the wrist support to the fourth end; or
the locking sunken groove opening faces the fourth end, so that the locking protrusion horizontally slides into the locking sunken groove in a direction extending from the fourth end of the wrist support to the third end.

34. The wearable device according to any one of claims 31 to 33, wherein
a top end of the locking sunken groove is provided with a barrier edge, and when the locking protrusion is located in the locking sunken groove, the barrier edge locks the locking protrusion in the locking sunken groove in an axial direction of the vertical rotating shaft, so that an end of the vertical rotating shaft is connected to the first end of the wrist support.

35. The wearable device according to any one of claims 31 to 34, wherein the first base is provided with a first hole through which the end of the vertical rotating shaft is capable of passing; and
the bottom end of the vertical rotating shaft is provided with a first boss, and a top inner wall of the first hole is provided with a first flange, wherein the first flange and the first boss block each other.

36. The wearable device according to claim 35, wherein a first through hole that is capable of partially accommodating the vertical rotating shaft is provided in the rotating shaft support;
the rotating shaft assembly further comprises a first motion cam, the first motion cam is sleeved on the vertical rotating shaft and is rotatably connected to the vertical rotating shaft, and the first motion cam is located in the first through hole and is fastened to the first through hole;
the first base is provided with a first extension part extending into the first through hole, the first motion cam abuts against the first extension part, the first hole extends to a top end face of the first extension part, and the first flange is located on the first extension part; and
a surface that is of the first motion cam and that faces the first extension part is formed into a first concave convex surface that is uneven, a surface that is of the first extension part and that faces the first motion cam is formed into a second concave convex surface that fits concave and convex parts of the first concave convex surface, and an arc-shaped transition surface is provided between the convex part and the concave part of the first concave convex surface and the second concave convex surface, so that the first motion cam is rotatably connected to the first base.

37. The wearable device according to any one of claims 29 to 32, wherein the locking assembly further comprises at least one stopper assembly, the stopper assembly is telescopically disposed on the wrist support, and the at least one stopper assembly is located on at least one side of the locking sunken groove;
at least one side of the wrist support is provided with a mounting groove for mounting the stopper assembly, and a second hole in communication with the locking sunken groove is provided on a side wall that is of each mounting groove and that is close to the locking sunken groove; and
a first end of the stopper assembly passes through the second hole and extends into the locking sunken groove, and a second end of the stopper assembly is fastened in the mounting groove.

38. The wearable device according to claim 37, wherein the stopper assembly comprises a top cover, a baffle plate, a first elastic piece, and a stopper, wherein
the baffle plate is fastened in the mounting groove;
a first end of the stopper passes through the second hole and extends into the locking sunken groove, and a second end of the stopper is sleeved on the first elastic piece;
one end of the first elastic piece is sleeved on the second end that is of the stopper and that is located in the mounting groove, and the other end of the first elastic piece abuts against the baffle plate; and
the top cover is located at a top end of the mounting groove, and is fastened to the wrist support.

39. The wearable device according to claim 38, wherein the first end of the stopper is a hemispherical protrusion, and a clamping recess fitting the hemispherical protrusion is provided on the locking protrusion; and
when the hemispherical protrusion slides into the clamping recess, the locking assembly is in the locked state; or
when the hemispherical protrusion slides out of the clamping recess, the locking assembly is in the unlocked state.

40. The wearable device according to claim 38 or 39, wherein a stop part protruding outward is disposed on the stopper, and the stop part is located in the mounting groove and abuts against the side wall of the mounting groove.

41. The wearable device according to any one of claims 37 to 40, wherein the locking assembly further comprises at least one pressing block button, and the pressing block button is telescopically disposed on a surface that is of the wrist support and that faces the horizontal rotating shaft; and
when the horizontal rotating shaft rotates until pressing against the pressing block button, the pressing block button moves downward, and a bottom end of the pressing block button presses against the stopper assembly, to prevent the stopper assembly from moving away from the locking sunken groove; or
when the horizontal rotating shaft rotates until moving out of the pressing block button, the pressing block button moves upward, and a top end of the pressing block button extends outward from the surface that is of the wrist support and that faces the horizontal rotating shaft.

42. The wearable device according to claim 41, wherein a bottom end of the pressing block button is provided with a wedge-shaped surface, the stopper assembly is provided with a wedge-shaped groove into which the bottom end of the pressing block button is capable of extending, and the wedge-shaped groove is provided with an inclined surface cooperating with the wedge-shaped surface; and
the wedge-shaped surface is used to cooperate with the inclined surface when the pressing block button moves downward, so that the stopper assembly moves toward the locking sunken groove; or
the inclined surface is used to cooperate with the wedge-shaped surface when the stopper assembly moves away from the locking sunken groove, so that the pressing block button moves upward.

43. The wearable device according to claim 41 or 42, wherein the top end of the pressing block button is provided with a first guide surface and a second guide surface that are inclined;
the first guide surface is used to guide, when the horizontal rotating shaft rotates in a first direction, the horizontal rotating shaft to rotate to the pressing block button;
the second guide surface is used to guide, when the horizontal rotating shaft rotates in a second direction, the horizontal rotating shaft to rotate to the pressing block button; and
one of the first direction and the second direction is a counterclockwise direction, and the other is a clockwise direction.

44. The wearable device according to any one of claims 41 to 43, wherein there are two pressing block buttons, there are two stopper assemblies, the two stopper assemblies are respectively located on two sides of the locking sunken groove, and one stopper assembly is correspondingly disposed for each pressing block button.

45. The wearable device according to any one of claims 29 to 44, wherein the locking assembly further comprises a first magnetic piece and a second magnetic piece, one of the first magnetic piece and the second magnetic piece is disposed in the wrist support, and the other of the first magnetic piece and the second magnetic piece is disposed on the vertical rotating shaft or disposed in the first base that is disposed at the bottom end of the vertical rotating shaft.

46. The wearable device according to any one of claims 1 to 45, further comprising a clamping assembly, wherein the clamping assembly is fixedly disposed at a second end of the device body, and the second end of the device body is detachably connected to the second end of the wrist support through the clamping assembly.

47. The wearable device according to any one of claims 1 to 46, further comprising a watch band, wherein the watch band is rotatably connected to the wrist support.

48. A wearable system, comprising a terminal device and at least one wearable device according to any one of claims 1 to 47, wherein the terminal device is communicatively connected to the wearable device.
